(19) Europäisches Patentamt
European Patent Office
Office européen des brevets

(11) EP 4 368 655 A1

(12) # EUROPEAN PATENT APPLICATION
published in accordance with Art. 153(4) EPC

(43) Date of publication:
**15.05.2024 Bulletin 2024/20**

(21) Application number: **22837711.5**

(22) Date of filing: **06.07.2022**

(51) International Patent Classification (IPC):
***C08G 69/10*** *(2006.01)* ***A61K 47/34*** *(2017.01)*

(52) Cooperative Patent Classification (CPC):
**A61K 47/34; C08G 69/10**

(86) International application number:
**PCT/JP2022/026864**

(87) International publication number:
**WO 2023/282297 (12.01.2023 Gazette 2023/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.07.2021 JP 2021113190**
**29.10.2021 JP 2021178228**

(71) Applicants:
- **NOF Corporation**
  **Shibuya-ku**
  **Tokyo 150-6019 (JP)**
- **Tokyo Institute of Technology**
  **Tokyo 152-8550 (JP)**

(72) Inventors:
- **OGI, Koichi**
  **Kawasaki-shi, Kanagawa 210-0821 (JP)**
- **MICHINISHI, Junya**
  **Kawasaki-shi, Kanagawa 210-0821 (JP)**
- **OHTAKE, Tomoyuki**
  **Kawasaki-shi, Kanagawa 210-0821 (JP)**
- **IIZUKA, Muneaki**
  **Tsukuba-shi, Ibaraki 300-2635 (JP)**
- **NISHIYAMA, Nobuhiro**
  **Tokyo 152-8550 (JP)**
- **TAKEMOTO, Hiroyasu**
  **Tokyo 152-8550 (JP)**
- **MIURA, Yutaka**
  **Tokyo 152-8550 (JP)**
- **NOMOTO, Takahiro**
  **Tokyo 152-8550 (JP)**
- **MATSUI, Makoto**
  **Tokyo 152-8550 (JP)**
- **SUNG, Yi-Jung**
  **Tokyo 152-8550 (JP)**
- **TOYODA, Masahiro**
  **Tokyo 152-8550 (JP)**
- **GHASEMIZADEH, Aria**
  **Tokyo 152-8550 (JP)**

(74) Representative: **J A Kemp LLP**
**80 Turnmill Street**
**London EC1M 5QU (GB)**

(54) **HIGHLY-PURE PH-RESPONSIVE POLYMER AND METHOD FOR PRODUCING SAME**

(57) The present invention provides a highly pure pH-responsive polymer represented by the following formula (I), a production method thereof, and the like:

EP 4 368 655 A1

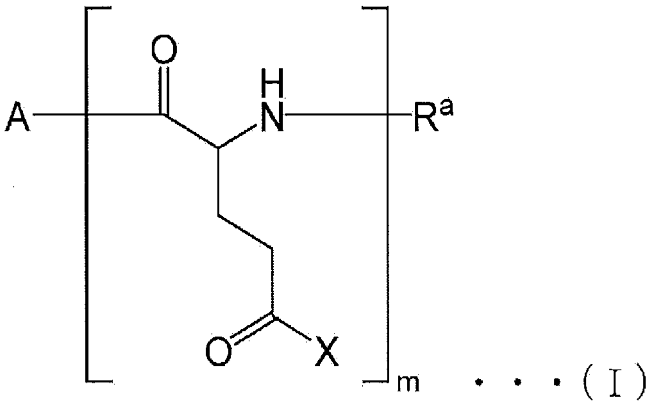

(in the formula (I), each symbol is as described in the specification).

[Fig. 1]

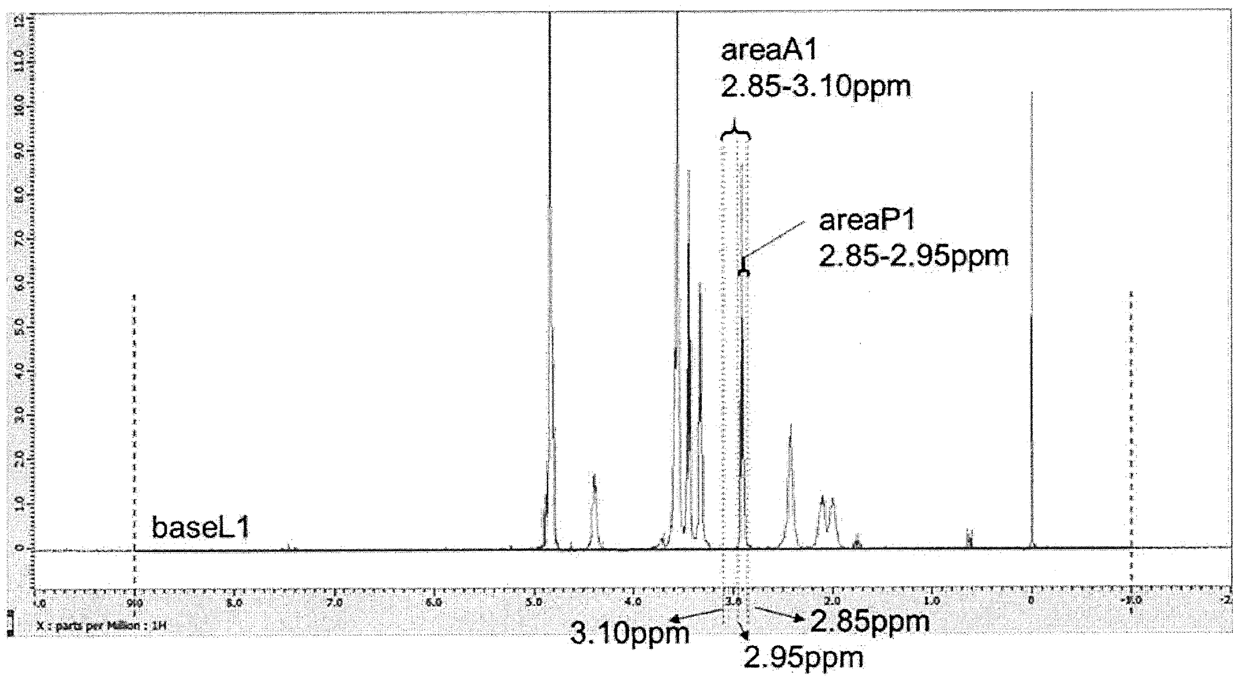

## Description

[Technical Field]

The present invention relates to a pH-responsive polymer having a highly pure pH-responsive functional group and a production method thereof.

[Background Art]

When pharmaceutical products that use biologically related substances such as hormones, cytokines, antibodies, and enzymes are administered into a living body, they are generally quickly excreted from the living body through glomerular filtration in the kidneys and uptake by macrophages in the liver, spleen, and the like. Therefore, their half-life in the blood is short, and it is often difficult to obtain sufficient pharmacological effects. In order to solve this problem, attempts have been made to chemically modify biological substances with hydrophilic polymers such as sugar chain and polyethylene glycol (hereinafter abbreviated as PEG), albumin, and the like. As a result, it becomes possible to extend the blood half-life of biological substances by increasing the molecular weight, forming a hydration layer, and the like. It is also well known that modification with PEG can afford effects such as reduction of the toxicity and antigenicity of biological substances and improvement of the solubility of poorly water-soluble drugs.

PEG is also used in the fields of low-molecular-weight drugs and nucleic acid drugs, represented by anticancer agents. These pharmaceutical products are encapsulated by micellar particles formed from hydrophilic and hydrophobic block copolymers such as PEG-polylactic acid block copolymers and lipid nanoparticles formed from PEGlipids. Studies are underway to reduce the toxicity of encapsulated drugs and efficiently deliver them to target cells.

The improvement in blood retention property of PEGylated pharmaceutical product is afforded because a hydration layer of PEG covers a medicament or the carrier surface, and suppresses opsonization by serum protein adsorption and the like, which in turn avoids phagocytosis by macrophages and uptake by reticuloendothelial tissues (hereinafter referred to as stealth property). PEGylated pharmaceutical products exhibit stealth property that suppresses random interactions with normal tissues and blood components, while also suppressing interactions with tumor tissues as well as blood components and normal tissues, and decrease accumulation in tumor tissues and uptake efficiency into cells in some cases.

As one of the methods to solve this problem, Patent Literature 1 has reported a pH-responsive polymer that is neutral in an environment of pH 7.4 and changes to cationic in an environment of pH 6.0 to 6.6. It is disclosed that this polymer is neutral at pH 7.4 in normal tissues, and thus exhibits stealth properties similar to PEG, but it changes to cationic at pH 6.0 to 6.6 around tumor tissues, so that accumulation in tumor tissues and uptake efficiency are improved. By using this pH-responsive polymer instead of PEG in the PEG lipid, problems with conventional transport carriers such as lipid nanoparticles and liposomes can be solved. Therefore, it can be said that the pH-responsive polymer is an important polymer.

Patent Literature 1 discloses the following method for producing a pH-responsive polymer. First, a biocompatible polymer having a carboxy group or a carboxy group protected by a protecting group in the side chain is synthesized, and then diethylenetriamine is introduced by a condensation reaction or an aminolysis reaction to obtain an amine polymer, and a carboxy group or the like is introduced into this amine polymer by Michael addition reaction or nucleophilic substitution reaction to produce a pH-responsive polymer.

In this step of introducing diethylenetriamine through the condensation reaction or aminolysis reaction, there is a risk that the primary amines at both ends of diethylenetriamine may react with biocompatible polymers to form high molecular weight impurities by crosslinking.

Furthermore, in the step of introducing carboxy groups and the like into the amine polymer by Michael addition reaction or nucleophilic substitution reaction, it is known, as reported in Non Patent Literature 1, that reactions with secondary amino groups and reactions in which not only one molecule but two molecules of acrylic acid or 4-bromobutanoic acid are added also proceed in addition to the reaction with the target primary amino group. Therefore, in the case of Patent Literature 1, repeating units represented by the following formulas (10) to (13) may be produced as by-products in addition to the target repeat unit represented by the following formula (9), which may make it difficult to stably provide polymers of consistent quality.

The following formula (9) is a repeat unit obtained by reacting an amine polymer with a target primary amino group.

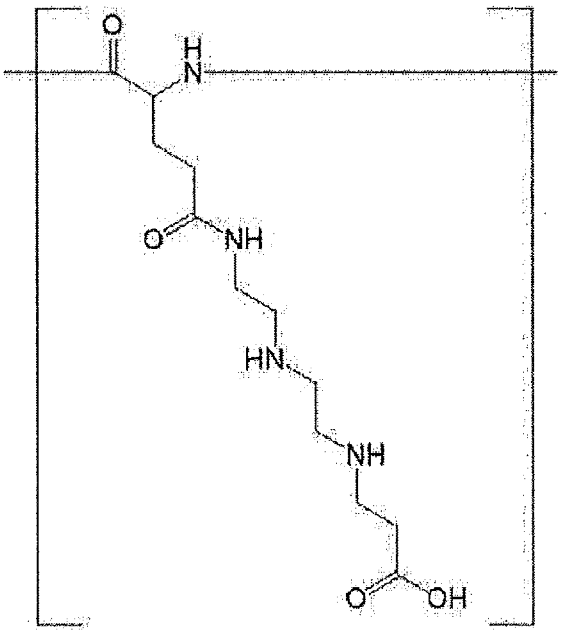

· · · (9)

The following formula (10) is a repeat unit obtained by the side reaction of an amine polymer with a secondary amino group that is not the target.

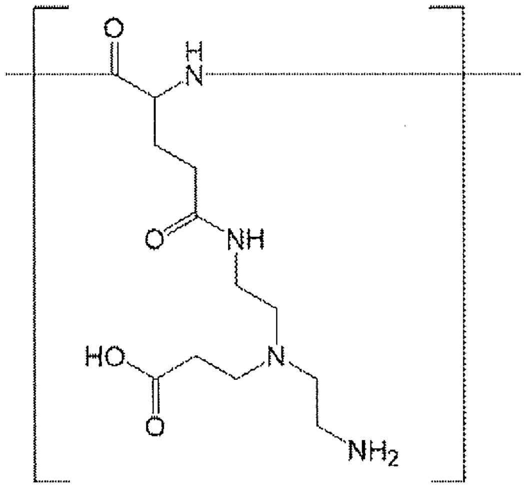

· · · (1 0)

The following formula (11) and the following formula (12) are repeat units obtained by a side reaction of one more molecule with the formula (9) which is a repeat unit obtained by the reaction with a target primary amino group.

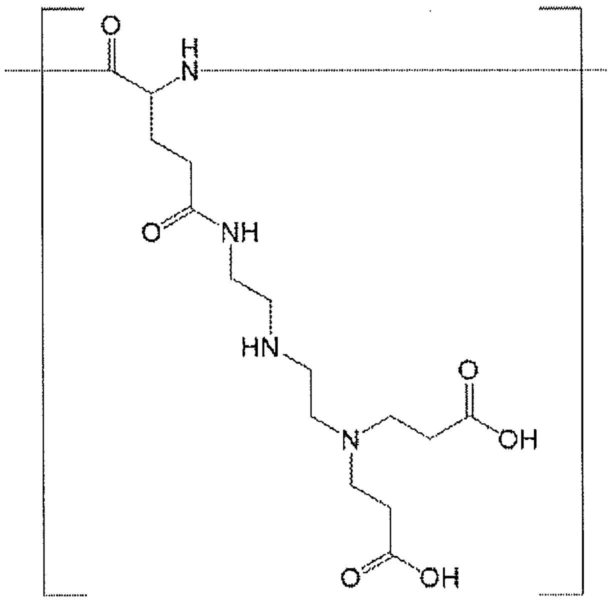

・・・(11)

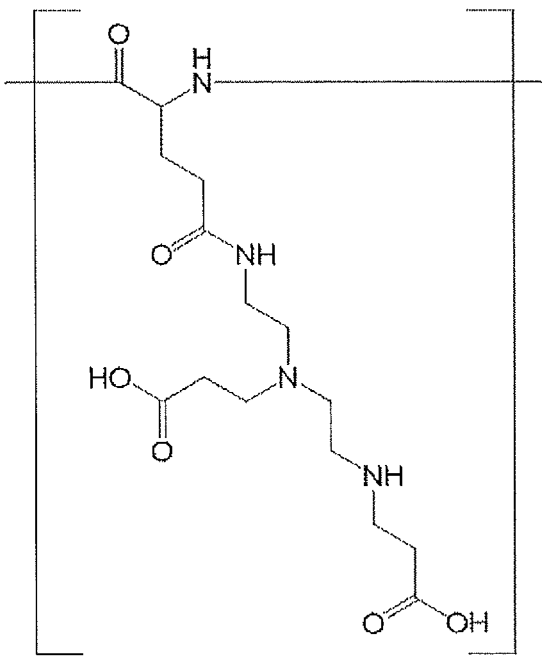

・・・(12)

The following formula (13) is a repeat unit obtained by the side reaction of the aforementioned formula (11) or (12) with one more molecule.

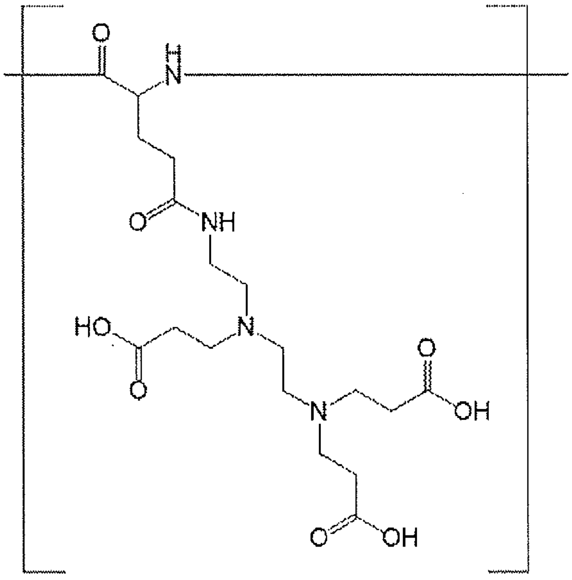

・・・(13)

Furthermore, the repeat units represented by the aforementioned formulas (11) and (12) have the property of being anionic in an environment of pH 7.4 and becoming neutral in an environment of pH 6.0 to 6.6. Therefore, a pH-responsive polymer containing a large number of repeat units represented by the aforementioned formulas (11) and (12) may not be able to achieve the desired improvement in the accumulation in tumor tissues and the uptake efficiency.

Furthermore, the repeat unit represented by the aforementioned formula (13) has the property of being anionic in both environments of pH 7.4 and pH 6.0 to 6.6. Therefore, a pH-responsive polymer containing a large number of repeat unit represented by the aforementioned formula (13) may not be able to achieve the desired improvement in the accumulation in tumor tissues and the uptake efficiency.

In addition, Patent Literature 1 discloses that, in order to suppress the above-mentioned side reactions, the amount of diethylenetriamine added in the step of introducing diethylenetriamine by a condensation reaction or an aminolysis reaction is set to a 70-fold amount in molar ratio with respect to a carboxy group or a carboxy group protected by a protecting group and the like in the side chain of the biocompatible polymer. Furthermore, it is disclosed that, in the step of introducing a carboxy groups and the like into the amine polymer by Michael addition reaction or nucleophilic substitution reaction, acrylic acid is added in a 265-fold amount in molar ratio with respect to the primary amino group in the side chain of the amine polymer.

Such excessive addition of reagents is effective in suppressing side reactions. On the other hand, it may involve complicated removal process, difficulty in mass production due to reduced reactor pot efficiency, and a risk of lowered purity due to decomposition of the main chain during the removal step.

On the other hand, it is possible to impart stealth property to pharmaceutical products using biological substances by modifying with hydrophilic polymers and the like. When a hydrophilic biocompatible polymer capable of imparting stealth property is synthesized in multiple steps, it is a general practice to perform protection and deprotection reactions as appropriate to synthesize the desired polymer. For example, the synthesis routes of Patent Literature 1 include a route in which a biocompatible polymer having a carboxy group protected by a benzyl group and the like in the side chain is synthesized by ring opening polymerization of β-benzyl-L-glutamic acid-N-carboxyanhydride and the like, and then diethylenetriamine is introduced by an aminolysis reaction to obtain an amine polymer, and a carboxy group or the like is introduced by Michael addition reaction or nucleophilic substitution reaction to synthesize a pH-responsive polymer.

Protecting groups (e.g. benzyl group) used generally have hydrophobicity. Depending on the reaction conditions, the protecting groups remain during deprotection, which may increase the hydrophobicity of the polymer and reduce the desired stealth property. Furthermore, as the hydrophobicity increases, the solubility in water may decrease, which may render formulation difficult.

On the other hand, when the compound is used in the pharmaceutical field, an application for drug approval is filed. However, when the above-mentioned impurities are mixed therein, the compound is treated as a separate compound from the main structure depending on its content. In this case, problems occur in that it is necessary to separately identify the compound, conduct various safety tests, and evaluate tolerance levels. Furthermore, in this use, it is necessary to stably supply a polymer having a certain purity.

In view of the above, a highly pure pH-responsive polymer that shows desired pH-responsiveness, has a uniform structure of the side chain, and contains a small residual amount of a protecting group with hydrophobicity, and a production method capable of stably supplying the polymer have been demanded.

[Citation List]

[Patent Literature]

[Patent Literature 1]
WO2018/110366

[Non Patent Literature]

[Non Patent Literature 1]
Organic Synthesis, Coll.vol.3,p258,1955

[Summary of Invention]

[Technical Problem]

The present invention aims to provide a highly pure pH-responsive polymer that shows desired pH-responsiveness, has a uniform structure of the side chain, and contains a small residual amount of a protecting group with hydrophobicity, and a production method capable of stably supplying the polymer.

[Solution to Problem]

The present inventors have conducted intensive studies in an attempt to solve the above-mentioned problems and completed the present invention. Specifically, the present invention provides the following.

<Functional group-containing pH-responsive polymer>

[1] A pH-responsive polymer represented by the following formula (I):

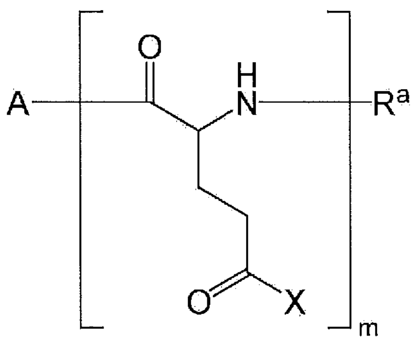

・・・(I)

(in the formula (I), A is a substituent,
m shows the degree of polymerization of the repeat unit and is not less than 5,
$R^a$ is H, or $-CO-CH_3$, or $-CO-(CH_2)_{X1}-COOH$ (wherein X1 is 2 or 3), and
X is a pH-responsive functional group represented by the following formula (2):

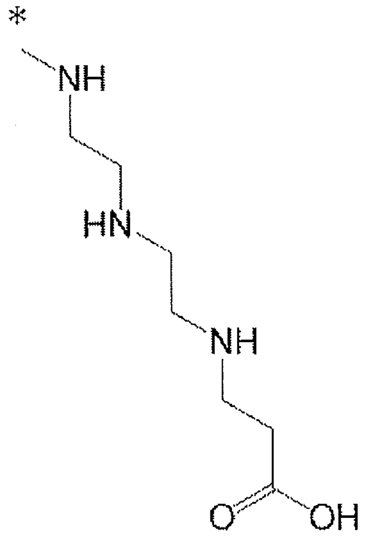

. . . (2)

(in the formula (2), * shows a bond)), wherein

1) a side chain purity index Q1 calculated from the following formula (F1) is not less than 0.9:

$$\text{area P1/area A1} \quad (F1)$$

wherein
area A1 is the area of peak A1 detected between 2.85 ppm and 3.10 ppm, and area P1 is the area of peak P1 detected between 2.85 ppm and 2.95 ppm, in a $^{1}H$-NMR chart obtained by analyzing the polymer using a nuclear magnetic resonance apparatus in a 0.65% deuterium chloride deuterium oxide solution, wherein a peak derived from a trimethyl group of trimethylsilyl propanoic acid as the internal standard is set to 0 ppm, a straight line connecting -1.0 ppm to 9.0 ppm is a base L1, and a perpendicular line is drawn vertically from the point of 2.95 ppm on the base L1 to divide a peak, and
2) a content percentage Q2 of a repeat unit represented by the following formula (1) is not less than 90% (mol%)

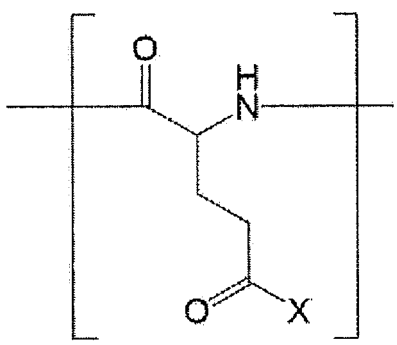

. . . (1)

[0030]

(in the formula (1), X is as defined above)
(hereinafter to be also denoted as pH-responsive polymer (I)).

As described below, the pH-responsive polymer (I) is broadly classified into two preferred embodiments of a pH-responsive polymer in which $R^a$ is H and a pH-responsive polymer in which $R^a$ is $-CO-CH_3$ or $-CO-(CH_2)_{X1}-COOH$ (wherein X1 is 2 or 3). The present invention is described in detail below, focusing on these two embodiments.
[2] (first embodiment) The pH-responsive polymer of the above-mentioned [1], wherein $R^a$ is H, that is,

the pH-responsive polymer of the above-mentioned [1], represented by the following formula (I-1):

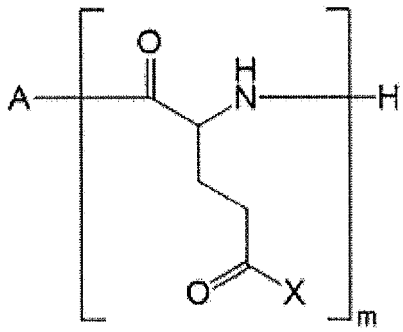

· · · (I-1)

(in the formula (I-1), A is a substituent,
m shows the degree of polymerization of the repeat unit and is not less than 5, and
X is a pH-responsive functional group represented by the following formula (2):

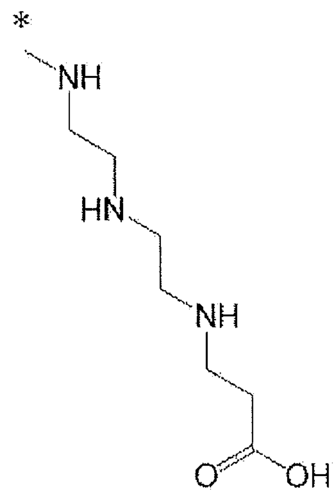

· · · (2)

(in the formula (2), * shows a bond)), wherein

1) a side chain purity index Q1 calculated from the following formula (F1) is not less than 0.9:

$$\text{area P1/area A1} \quad (F1)$$

wherein
area A1 is the area of peak A1 detected between 2.85 ppm and 3.10 ppm, and area P1 is the area of peak P1 detected between 2.85 ppm and 2.95 ppm, in a $^1$H-NMR chart obtained by analyzing the polymer using a nuclear magnetic resonance apparatus in a 0.65% deuterium chloride deuterium oxide solution, wherein a peak derived from a trimethyl group of trimethylsilyl propanoic acid as the internal standard is set to 0 ppm, a straight line connecting -1.0 ppm to 9.0 ppm is a base L1, and a perpendicular line is drawn vertically from the point of 2.95 ppm on the base L1 to divide a peak, and
2) a content percentage Q2 of a repeat unit represented by the following formula (1) is not less than 90% (mol%)

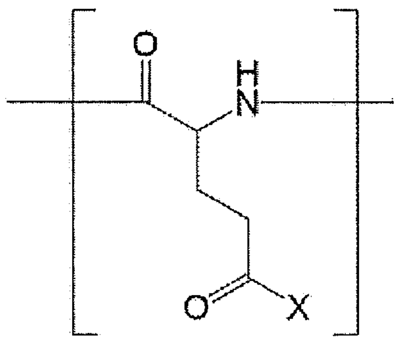

・・・(1)

(in the formula (1), X is as defined above)
(hereinafter to be also denoted as pH-responsive polymer (I-1)).

[3] (second embodiment) The pH-responsive polymer of the above-mentioned [1], wherein $R^a$ is $-CO-CH_3$ or $-CO-(CH_2)_{X1}-COOH$ (wherein X1 is 2 or 3), that is,

the pH-responsive polymer of the above-mentioned [1],
represented by the following formula (I-2):

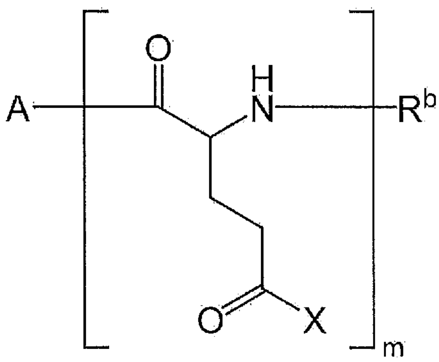

・・・(I-2)

(in the formula (I-2), A is a substituent,
m shows the degree of polymerization of the repeat unit and is not less than 5,
$R^b$ is $-CO-CH_3$ or $-CO-(CH_2)_{X1}-COOH$ (wherein X1 is 2 or 3), and
X is a pH-responsive functional group represented by the following formula (2):

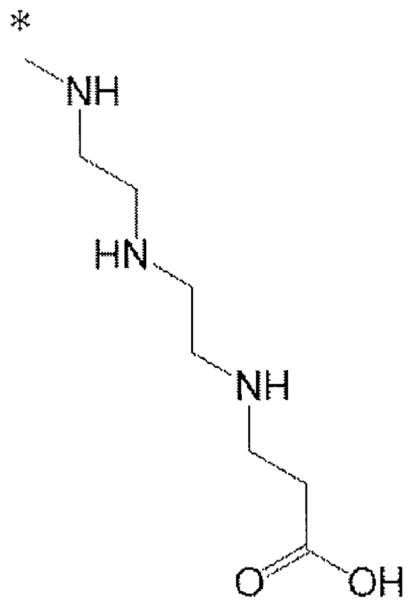

· · · (2)

(in the formula (2), * shows a bond)), wherein

1) a side chain purity index Q1 calculated from the following formula (F1) is not less than 0.9:

area P1/area A1 (F1)

wherein
area A1 is the area of peak A1 detected between 2.85 ppm and 3.10 ppm, and area P1 is the area of peak P1 detected between 2.85 ppm and 2.95 ppm, in a $^1$H-NMR chart obtained by analyzing the polymer using a nuclear magnetic resonance apparatus in a 0.65% deuterium chloride deuterium oxide solution, wherein a peak derived from a trimethyl group of trimethylsilyl propanoic acid as the internal standard is set to 0 ppm, a straight line connecting -1.0 ppm to 9.0 ppm is a base L1, and a perpendicular line is drawn vertically from the point of 2.95 ppm on the base L1 to divide a peak, and
2) a content percentage Q2 of a repeat unit represented by the following formula (1) is not less than 90% (mol%)

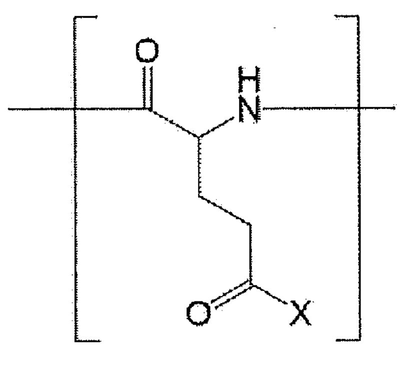

· · · (1)

(in the formula (1), X is as defined above)
(hereinafter to be also denoted as pH-responsive polymer (I-2)).

[4] The pH-responsive polymer of the above-mentioned [1], which is represented by the following formula (3-I):

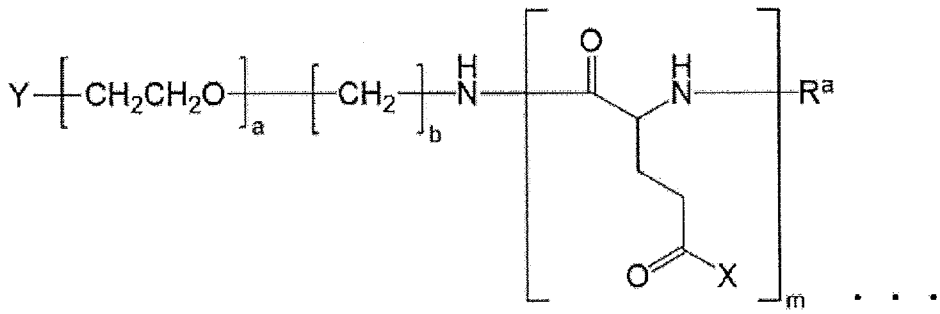

(3-I)

(in the formula (3-I), Y is an atomic group containing a functional group capable of forming a covalent bond with a functional group present in a biofunctional molecule,
a, b and m each show a degree of polymerization of each repeat unit, a is 0 to 500,
b is an integer of 1 to 3, m is 5 to 300,
$R^a$ is H, or $-CO-CH_3$ or $-CO-(CH_2)_{X1}-COOH$ (wherein X1 is 2 or 3), and
X is a pH-responsive functional group represented by the following formula (2):

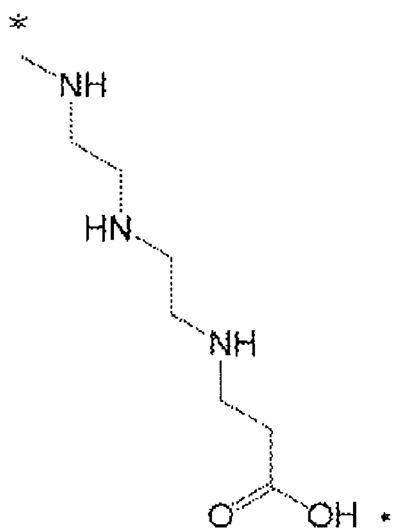

(2)

(in the formula (2), * shows a bond)), wherein

1) a side chain purity index Q1 calculated from the following formula (F1) is not less than 0.9:

$$\text{area P1/area A1} \quad \text{(F1)}$$

wherein
area A1 is the area of peak A1 detected between 2.85 ppm and 3.10 ppm, and area P1 is the area of peak P1 detected between 2.85 ppm and 2.95 ppm, in a $^1$H-NMR chart obtained by analyzing the polymer using a nuclear magnetic resonance apparatus in a 0.65% deuterium chloride deuterium oxide solution, wherein a peak derived from a trimethyl group of trimethylsilyl propanoic acid as the internal standard is set to 0 ppm, a straight line connecting -1.0 ppm to 9.0 ppm is a base L1, and a perpendicular line is drawn vertically from the point of 2.95 ppm on the base L1 to divide a peak, and
2) a content percentage Q2 of a repeat unit represented by the following formula (1) is not less than 90% (mol%)

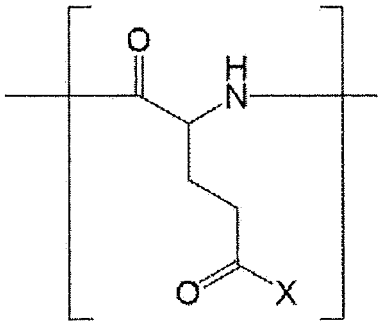

・・・(1)

(in the formula (1), X is as defined above).

[5] The pH-responsive polymer of the above-mentioned [1], [2] or [4], represented by the following formula (3):

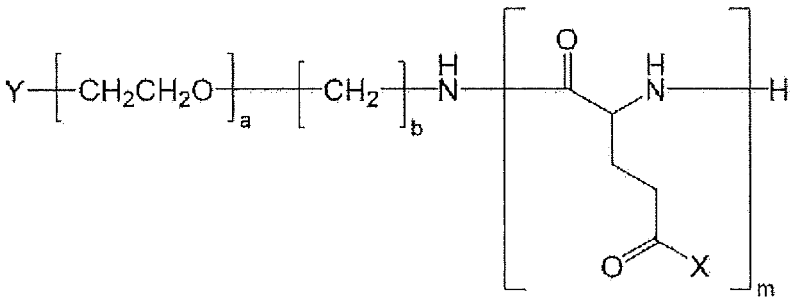

・・・(3)

(in the formula (3), Y is an atomic group containing a functional group capable of forming a covalent bond with a functional group present in a biofunctional molecule,
a, b and m each show a degree of polymerization of each repeat unit, a is 0 to 500, b is an integer of 1 to 3, m is 5 to 300, and
X is a pH-responsive functional group represented by the following formula (2):

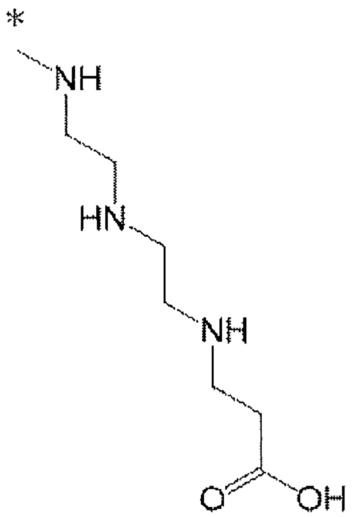

・・・(2)

(in the formula (2), * shows a bond)), wherein

1) a side chain purity index Q1 calculated from the following formula (F1) is not less than 0.9:

area P1/area A1 (F1)

wherein
area A1 is the area of peak A1 detected between 2.85 ppm and 3.10 ppm, and area P1 is the area of peak P1 detected between 2.85 ppm and 2.95 ppm, in a $^1$H-NMR chart obtained by analyzing the polymer using a nuclear magnetic resonance apparatus in a 0.65% deuterium chloride deuterium oxide solution, wherein a peak derived from a trimethyl group of trimethylsilyl propanoic acid as the internal standard is set to 0 ppm, a straight line connecting -1.0 ppm to 9.0 ppm is a base L1, and a perpendicular line is drawn vertically from the point of 2.95 ppm on the base L1 to divide a peak, and
2) a content percentage Q2 of a repeat unit represented by the following formula (1) is not less than 90% (mol%)

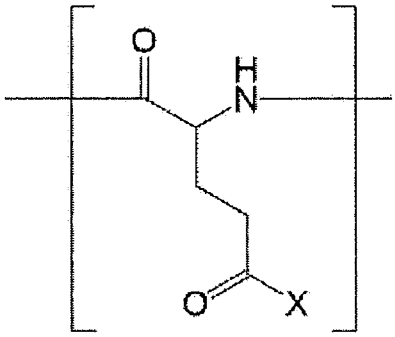

・・・(1)

(in the formula (1), X is as defined above).

[6] The pH-responsive polymer of the above-mentioned [1], [3] or [4], represented by the following formula (3-1):

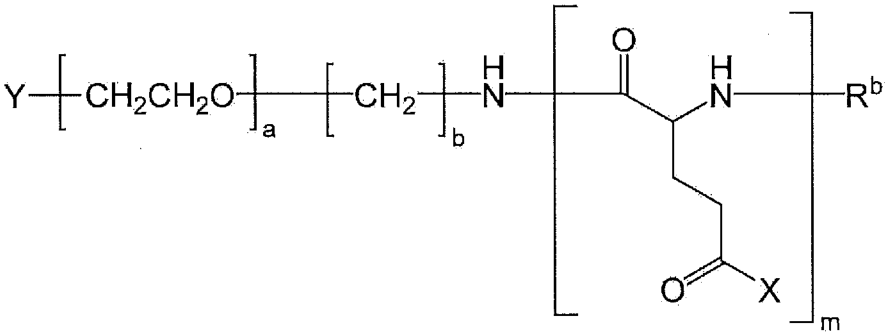

・・・(3－1)

(in the formula (3-1), Y is an atomic group containing a functional group capable of forming a covalent bond with a functional group present in a biofunctional molecule, $R^b$ is $-CO-CH_3$ or $-CO-(CH_2)_{X1}-COOH$ (wherein X1 is 2 or 3),
a, b and m each show a degree of polymerization of each repeat unit, a is 0 to 500, b is an integer of 1 to 3, m is 5 to 300, and
X is a pH-responsive functional group represented by the following formula (2):

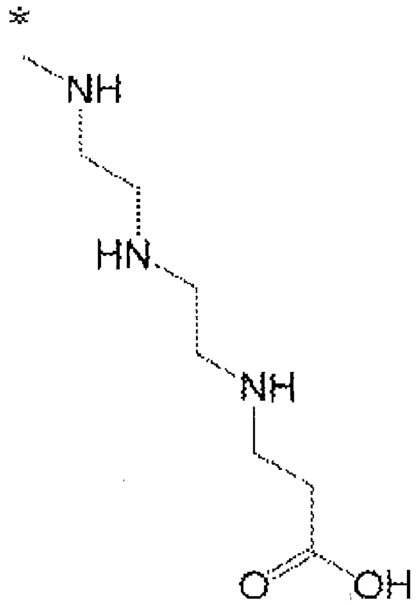

• • • (2)

(in the formula (2), * shows a bond)), wherein

1) a side chain purity index Q1 calculated from the following formula (F1) is not less than 0.9:

area P1/area A1 (F1)

wherein
area A1 is the area of peak A1 detected between 2.85 ppm and 3.10 ppm, and area P1 is the area of peak P1 detected between 2.85 ppm and 2.95 ppm, in a $^1$H-NMR chart obtained by analyzing the polymer using a nuclear magnetic resonance apparatus in a 0.65% deuterium chloride deuterium oxide solution, wherein a peak derived from a trimethyl group of trimethylsilyl propanoic acid as the internal standard is set to 0 ppm, a straight line connecting -1.0 ppm to 9.0 ppm is a base L1, and a perpendicular line is drawn vertically from the point of 2.95 ppm on the base L1 to divide a peak, and
2) a content percentage Q2 of a repeat unit represented by the following formula (1) is not less than 90% (mol%)

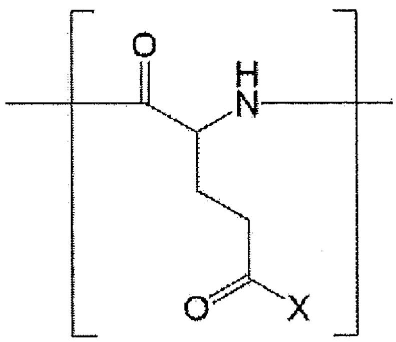

• • • (1)

(in the formula (1), X is as defined above).

[7] The pH-responsive polymer of any of the above-mentioned [4] to [6], wherein Y is an atomic group containing an azido group or an -SH group.
[8] The pH-responsive polymer of any of the above-mentioned [4] to [6], wherein Y is a group induced from an atomic group containing alkyne.
[9] The pH-responsive polymer of any of the above-mentioned [4] to [8], wherein a content percentage of Y is not

less than 80%.

<Production method of pH-responsive polymer containing functional group>

The functional group-containing pH-responsive polymer (I) of the present invention can be produced by obtaining (i) pH-responsive polymer wherein $R^a$ is H (pH-responsive polymers represented by the formula (I-1) and the formula (3)), and (ii) pH-responsive polymer wherein $R^a$ is $-CO-CH_3$ or $-CO-(CH_2)_{X1}-COOH$ (wherein X1 is 2 or 3)(pH-responsive polymers represented by the formula (I-2) and the formula (3-1)) by the production methods shown below.

First embodiment: production method of pH-responsive polymer wherein $R^a$ is H (pH-responsive polymers represented by the formula (I-1) and the formula (3))

[10] A method for producing a pH-responsive polymer (I-1) represented by the following formula (I-1):

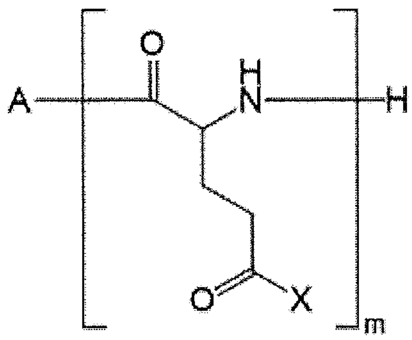

・・・(I-1)

(in the formula (I-1), A is a substituent,
m shows the degree of polymerization of the repeat unit and is not less than 5, and
X is a pH-responsive functional group represented by the following formula (2):

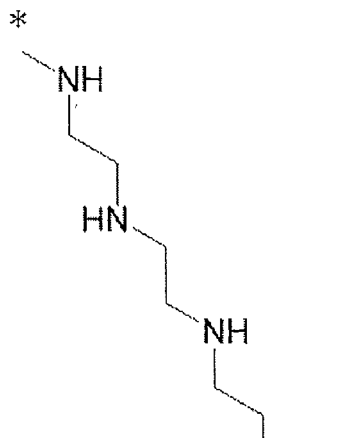

・・・(2)

(in the formula (2), * shows a bond)), wherein

1) a side chain purity index Q1 calculated from the following formula (F1) is not less than 0.9:

area P1/area A1 (F1)

wherein

area A1 is the area of peak A1 detected between 2.85 ppm and 3.10 ppm, and area P1 is the area of peak P1 detected between 2.85 ppm and 2.95 ppm, in a $^{1}$H-NMR chart obtained by analyzing the polymer using a nuclear magnetic resonance apparatus in a 0.65% deuterium chloride deuterium oxide solution, wherein a peak derived from a trimethyl group of trimethylsilyl propanoic acid as the internal standard is set to 0 ppm, a straight line connecting -1.0 ppm to 9.0 ppm is a base L1, and a perpendicular line is drawn vertically from the point of 2.95 ppm on the base L1 to divide a peak, and

2) a content percentage Q2 of a repeat unit represented by the following formula (1) is not less than 90% (mol%)

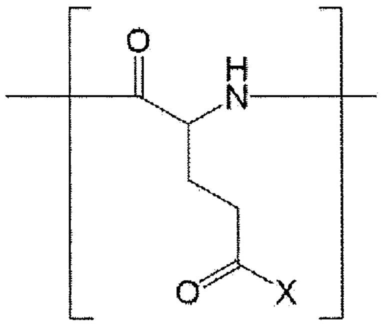

・・・(1)

(in the formula (1), X is as defined above), comprising performing the following step (A1), step (B1), and step (C1) in this order

[step (A1)]

a step of reacting a polymer represented by the following formula (32):

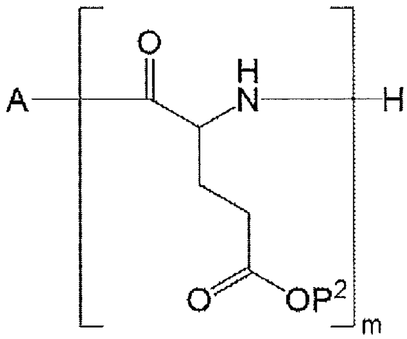

・・・(32)

(in the formula (32), A and m are each as defined above, and

$P^2$ is a carboxy-protecting group) and a diethylenetriamine derivative represented by the following formula (5):

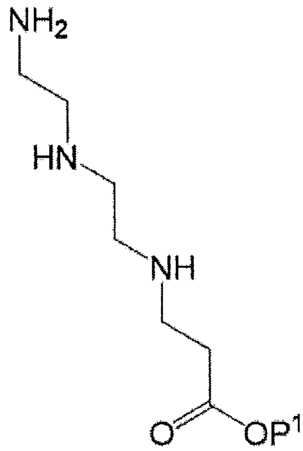

・・・(5)

(in the formula (5), $P^1$ is a carboxy-protecting group) with a polymer represented by the following formula (33):

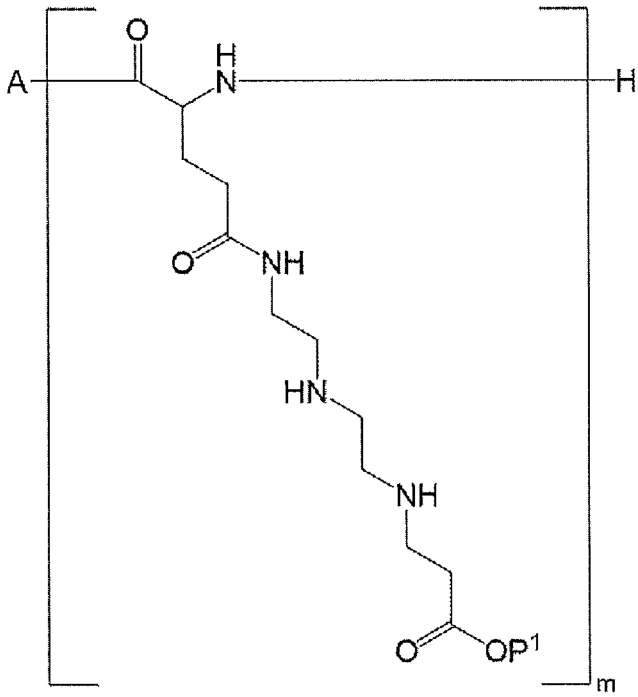

・・・(33)

(in the formula (33), A, m, and $P^1$ are each as defined above) [step (B1)]
a step of deprotecting the polymer represented by the aforementioned formula (33) obtained in the aforementioned step (A1) to obtain a solution comprising a pH-responsive polymer represented by the aforementioned formula (I-1)
[step (C1)]
a step of purifying the solution comprising a pH-responsive polymer represented by the aforementioned formula (I-1) obtained in the aforementioned step (B1) by crystallization or membrane purification.

[11] The production method of the above-mentioned [10], wherein step (A1), step (B1), and step (C1) are the following step (A2), step (B2), and step (C2), respectively, and the pH-responsive polymer represented by the formula (I-1) is represented by the following formula (3):

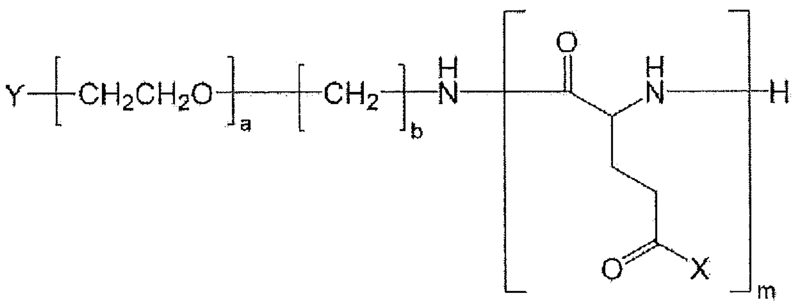

・・・(3)

(in the formula (3), Y is an atomic group containing a functional group capable of forming a covalent bond with a functional group present in a biofunctional molecule,
a, b and m each show a degree of polymerization of each repeat unit, a is 0 to 500, b is an integer of 1 to 3, m is 5 to 300, and
X is a pH-responsive functional group represented by the following formula (2):

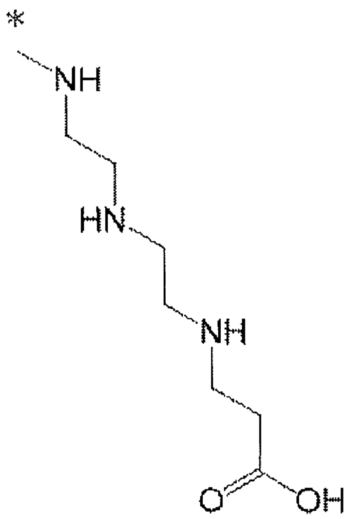 (2)

(in the formula (2), * shows a bond)), wherein

1) a side chain purity index Q1 calculated from the following formula (F1) is not less than 0.9:

area P1/area A1 (F1)

wherein
area A1 is the area of peak A1 detected between 2.85 ppm and 3.10 ppm, and area P1 is the area of peak P1 detected between 2.85 ppm and 2.95 ppm, in a $^{1}$H-NMR chart obtained by analyzing the polymer using a nuclear magnetic resonance apparatus in a 0.65% deuterium chloride deuterium oxide solution, wherein a peak derived from a trimethyl group of trimethylsilyl propanoic acid as the internal standard is set to 0 ppm, a straight line connecting -1.0 ppm to 9.0 ppm is a base L1, and a perpendicular line is drawn vertically from the point of 2.95 ppm on the base L1 to divide a peak, and
2) a content percentage Q2 of a repeat unit represented by the following formula (1) is not less than 90% (mol%)

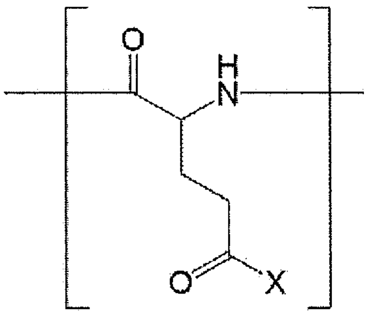 (1)

(in the formula (1), X is as defined above)
[step (A2)]
a step of reacting a polymer represented by the following formula (7):

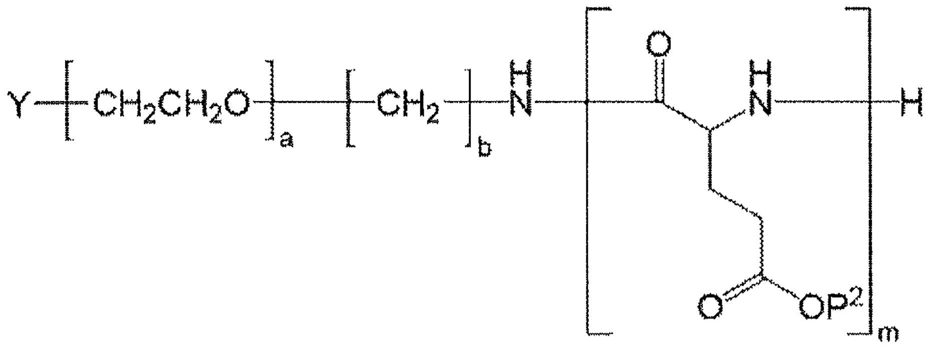 . . . (7).

(in the formula (7), Y, a, b and m are each as defined above, and $P^2$ is a carboxy-protecting group) and a diethylenetriamine derivative represented by the following formula (5):

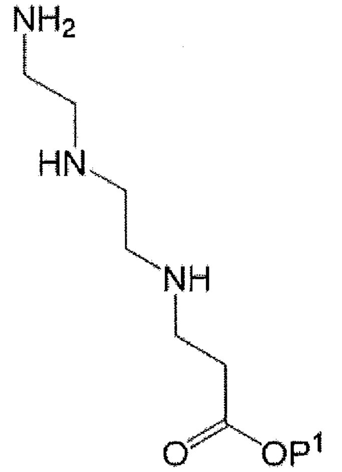 . . . (5)

(in the formula (5), $P^1$ is a carboxy-protecting group) to obtain a polymer represented by the following formula (8)

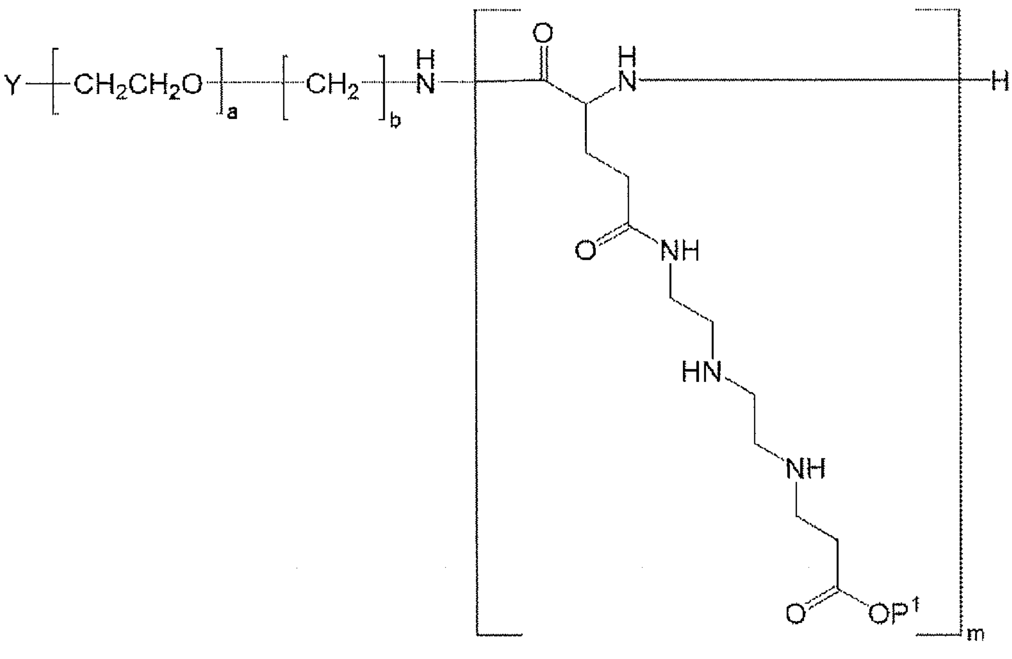 . . . (8)

(in the formula (8), Y, a, b, m, and $P^1$ are each as defined above)

[step (B2)]
a step of deprotecting the polymer represented by the aforementioned formula (8) obtained in the aforementioned step (A2) to obtain a solution comprising a pH-responsive polymer represented by the aforementioned formula (3)
[step (C2)]
a step of purifying the solution comprising a pH-responsive polymer represented by the aforementioned formula (3) obtained in the aforementioned step (B2) by crystallization or membrane purification.

[12] The production method of the above-mentioned [10] or [11], wherein, in the aforementioned step (A1) or step (A2), a diethylenetriamine derivative represented by the aforementioned formula (5) is used that satisfies a purity of not less than 90% when analyzed using liquid chromatography.

[13] The production method of any of the above-mentioned [10] to [12], wherein, in the aforementioned step (A1) or step (A2), an ether solvent or an aproticpolar solvent is used as an organic layer.

[14] The production method of any of the above-mentioned [10] to [13], wherein, in the aforementioned step (A1) or step (A2), a diethylenetriamine derivative represented by the aforementioned formula (5) wherein $P^1$ is a t-butyl group is used and, in the aforementioned step (B1) or step (B2), deprotection is performed under hydrochloric acid acidic conditions.

[15] The production method of any of the above-mentioned [10] to [14], wherein, in the aforementioned step (C1) or step (C2), a solution comprising a pH-responsive polymer represented by the aforementioned formula (I-1) or a pH-responsive polymer represented by the aforementioned formula (3) is purified by crystallization or membrane purification.

Second embodiment: production method of pH-responsive polymer wherein $R^a$ is $-CO-CH_3$, or $-CO-(CH_2)_{X1}-COOH$ (wherein X1 is 2 or 3) (pH-responsive polymers represented by the formula (I-2) and the formula (3-1))

[16] A method for producing a pH-responsive polymer represented by the following formula (I-2):

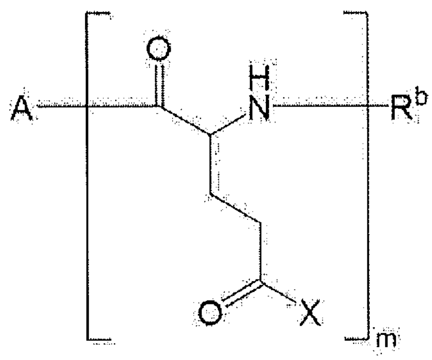

・・・(I-2)

(in the formula (1-2), A is a substituent,
m shows the degree of polymerization of the repeat unit and is not less than 5,
$R^b$ is $-CO-CH_3$ or $-CO-(CH_2)_{X1}-COOH$ (wherein X1 is 2 or 3), and
X is a pH-responsive functional group represented by the following formula (2):

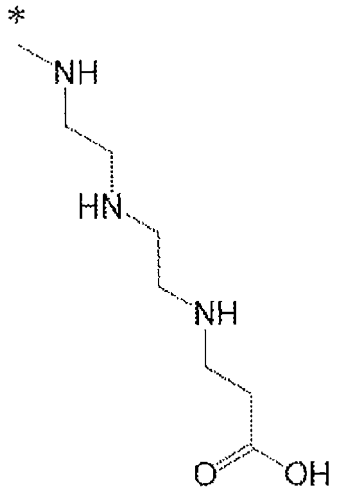

• • • (2)

(in the formula (2), * shows a bond)), wherein

1) a side chain purity index Q1 calculated from the following formula (F1) is not less than 0.9:

$$\text{area P1/area A1} \quad (F1)$$

wherein
area A1 is the area of peak A1 detected between 2.85 ppm and 3.10 ppm, and area P1 is the area of peak P1 detected between 2.85 ppm and 2.95 ppm, in a $^{1}H$-NMR chart obtained by analyzing the polymer using a nuclear magnetic resonance apparatus in a 0.65% deuterium chloride deuterium oxide solution, wherein a peak derived from a trimethyl group of trimethylsilyl propanoic acid as the internal standard is set to 0 ppm, a straight line connecting -1.0 ppm to 9.0 ppm is a base L1, and a perpendicular line is drawn vertically from the point of 2.95 ppm on the base L1 to divide a peak, and
2) a content percentage Q2 of a repeat unit represented by the following formula (1) is not less than 90% (mol%)

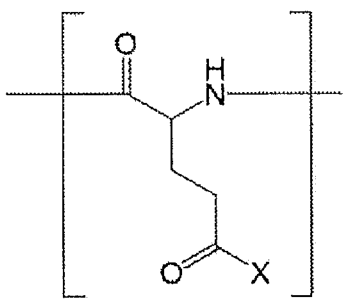

• • • (1)

(in the formula (1), X is as defined above), comprising performing the following step (A3), step (B3), and step (C3) in this order
[step (A3)]
a step of reacting a polymer represented by the following formula (32-1):

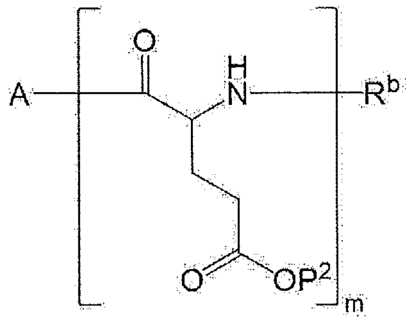

・・・(32-1)

(in the formula (32-1), A, m, and $R^b$ are each as defined above, and $P^2$ is a carboxy-protecting group) and a diethylenetriamine derivative represented by the following formula (5):

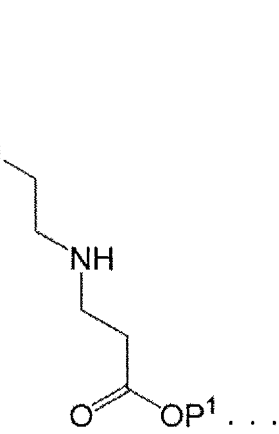

・・・(5)

(in the formula (5), $P^1$ is a carboxy-protecting group) to obtain a polymer represented by the following formula (33-1):

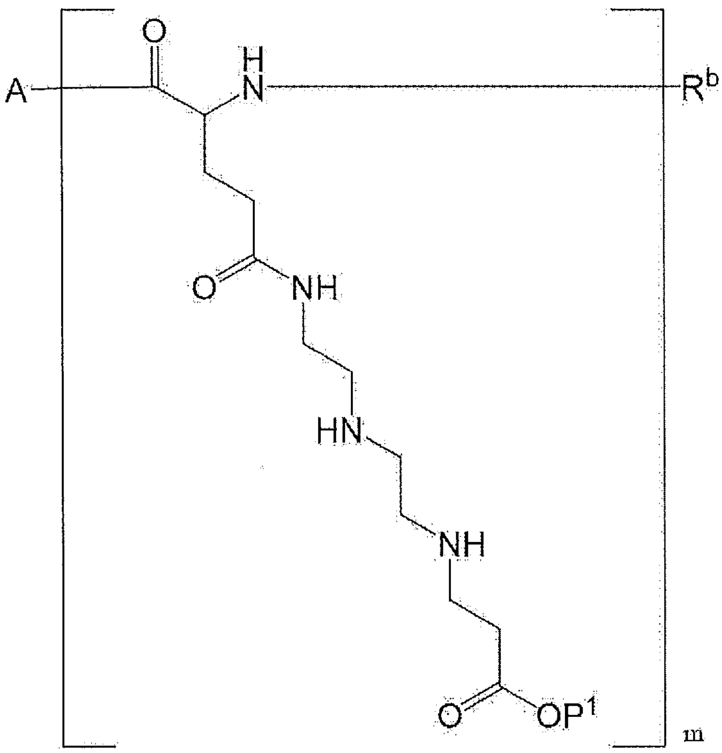

・・・(33-1)

(in the formula (33-1), A, m, $R^b$, and $P^1$ are each as defined above)
[step (B3)]
a step of deprotecting the polymer represented by the aforementioned formula (33-1) obtained in the aforementioned step (A3) to obtain a solution comprising a pH-responsive polymer represented by the aforementioned formula (I-2)
[step (C3)]
a step of purifying the solution comprising a pH-responsive polymer represented by the aforementioned formula (I-2) obtained in the aforementioned step (B3) by crystallization or membrane purification.

[17] The production method of the above-mentioned [16], wherein step (A3), step (B3), and step (C3) are the following step (A4), step (B4), and step (C4), respectively, and the pH-responsive polymer represented by the formula (I-2) is represented by the following formula (3-1):

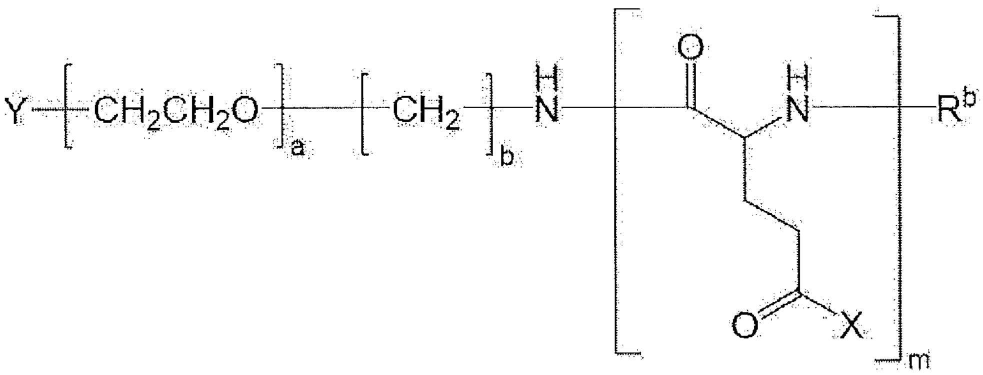

・・・(3−1)

(in the formula (3-1), Y is an atomic group containing a functional group capable of forming a covalent bond with a functional group present in a biofunctional molecule,
$R^b$ is $-CO-CH_3$ or $-CO-(CH_2)_{X1}-COOH$ (wherein X1 is 2 or 3), a, b, and m each show a degree of polymerization of each repeat unit, a is 0 to 500, b is an integer of 1 to 3, m is 5 to 300, and
X is a pH-responsive functional group represented by the following formula (2):

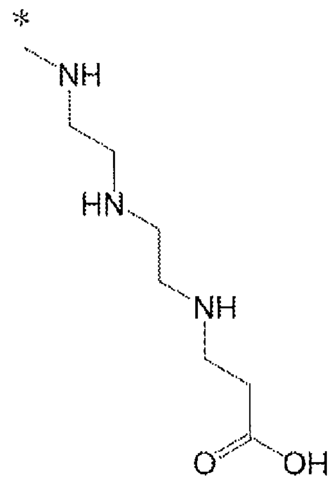

・・・(2)

(in the formula (2), * shows a bond)), wherein

1) a side chain purity index Q1 calculated from the following formula (F1) is not less than 0.9:

$$\text{area P1/area A1} \quad (F1)$$

wherein

area A1 is the area of peak A1 detected between 2.85 ppm and 3.10 ppm, and area P1 is the area of peak P1 detected between 2.85 ppm and 2.95 ppm, in a $^{1}$H-NMR chart obtained by analyzing the polymer using a nuclear magnetic resonance apparatus in a 0.65% deuterium chloride deuterium oxide solution, wherein a peak derived from a trimethyl group of trimethylsilyl propanoic acid as the internal standard is set to 0 ppm, a straight line connecting -1.0 ppm to 9.0 ppm is a base L1, and a perpendicular line is drawn vertically from the point of 2.95 ppm on the base L1 to divide a peak, and

2) a content percentage Q2 of a repeat unit represented by the following formula (1) is not less than 90% (mol%)

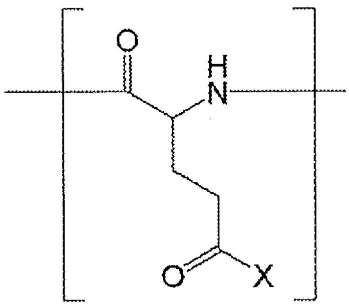

・・・(1)

(in the formula (1), X is as defined above)

[step (A4)]

a step of reacting a polymer represented by the following formula (7-1):

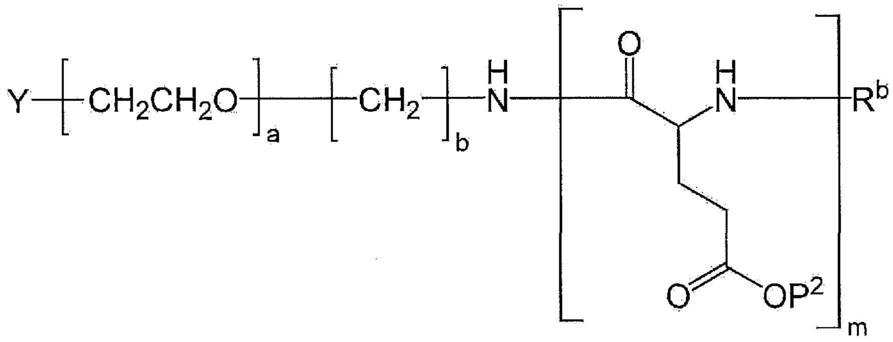

・・・(7－1)

(in the formula (7-1), Y, $R^b$, a, b, and m are each as defined above, and $P^2$ is a carboxy-protecting group) and a diethylenetriamine derivative represented by the following formula (5):

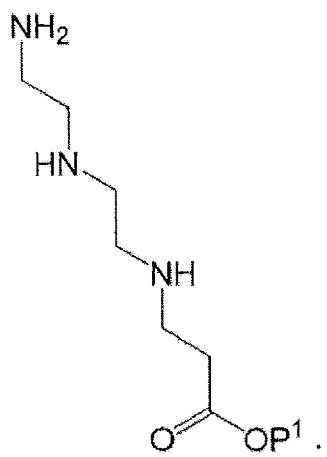

・・・(5)

(in the formula (5), $P^1$ is a carboxy-protecting group)

to obtain a polymer represented by the following formula (8-1)

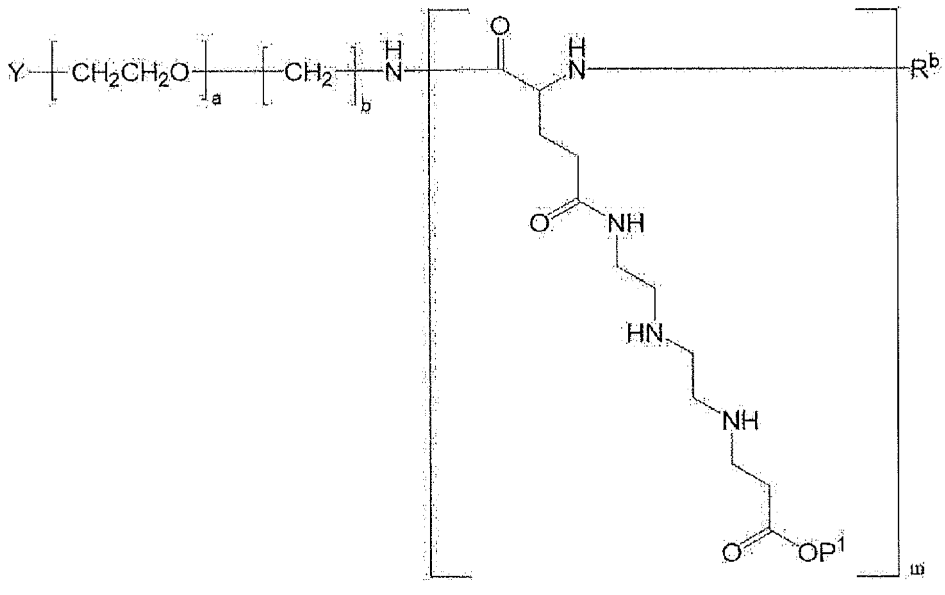

· · · (8 − 1)

(in the formula (8-1), Y, $R^b$, a, b, m, and $P^1$ are each as defined above)

[step (B4)]

a step of deprotecting the polymer represented by the aforementioned formula (8-1) obtained in the aforementioned step (A4) to obtain a solution comprising a pH-responsive polymer represented by the aforementioned formula (3-1)

[step (C4)]

a step of purifying the solution comprising a pH-responsive polymer represented by the aforementioned formula (3-1) obtained in the aforementioned step (B4) by crystallization or membrane purification.

[18] The production method of the above-mentioned [16] or [17], wherein, in the aforementioned step (A3) or step (A4), a diethylenetriamine derivative represented by the aforementioned formula (5) is used that satisfies a purity of not less than 90% when analyzed using liquid chromatography.

[19] The production method of any of the above-mentioned [16] to [18], wherein, in the aforementioned step (A3) or step (A4), an ether solvent or an aprotic polar solvent is used as an organic layer.

[20] The production method of any of the above-mentioned [16] to [19], wherein, in the aforementioned step (A3) or step (A4), a diethylenetriamine derivative represented by the aforementioned formula (5) wherein $P^1$ is a t-butyl group is used and, in the aforementioned step (B3) or step (B4), deprotection is performed under hydrochloric acid acidic conditions.

[21] The production method of any of the above-mentioned [16] to [20], wherein, in the aforementioned step (C3) or step (C4), a solution comprising a pH-responsive polymer represented by the aforementioned formula (I-2) or a pH-responsive polymer represented by the aforementioned formula (3-1) is purified by crystallization or membrane purification.

While the functional group-containing pH-responsive polymer (I) of the present invention can be produced by the above-mentioned production methods, it can also be produced by the method shown below. In this case, for the availability of starting materials and the practice of each production step (the following step (A), step (B), step (C), step (Aa), step (Bb), step (Cc)), explanations described later on step (A1), step (B1), step (C1), and the like, which are production steps of the pH-responsive polymer (I-1) and the like, can be referred to.

[22] A method for producing a pH-responsive polymer represented by the following formula (I):

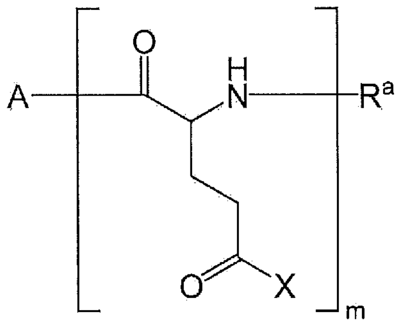

... (I)

(in the formula (I), A is a substituent,
m shows the degree of polymerization of the repeat unit and is not less than 5,
$R^a$ is H, or $-CO-CH_3$, or $-CO-(CH_2)_{X1}-COOH$ (wherein X1 is 2 or 3), and
X is a pH-responsive functional group represented by the following formula (2):

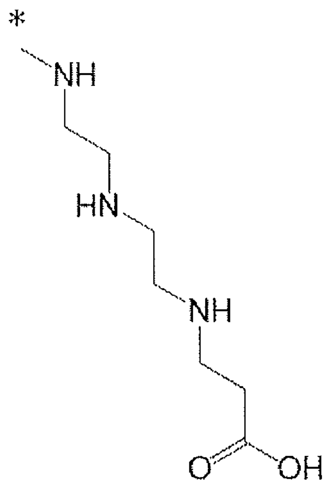

... (2)

(in the formula (2), * shows a bond)), wherein

1) a side chain purity index Q1 calculated from the following formula (F1) is not less than 0.9:

$$\text{area P1/area A1} \quad (F1)$$

wherein
area A1 is the area of peak A1 detected between 2.85 ppm and 3.10 ppm, and area P1 is the area of peak P1 detected between 2.85 ppm and 2.95 ppm, in a $^1$H-NMR chart obtained by analyzing the polymer using a nuclear magnetic resonance apparatus in a 0.65% deuterium chloride deuterium oxide solution, wherein a peak derived from a trimethyl group of trimethylsilyl propanoic acid as the internal standard is set to 0 ppm, a straight line connecting -1.0 ppm to 9.0 ppm is a base L1, and a perpendicular line is drawn vertically from the point of 2.95 ppm on the base L1 to divide a peak, and
2) a content percentage Q2 of a repeat unit represented by the following formula (1) is not less than 90% (mol%)

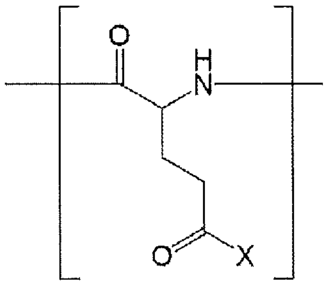

・・・(1)

(in the formula (1), X is as defined above), comprising performing the following step (A), step (B), and step (C) in this order

[step (A)]

a step of reacting a polymer represented by the following formula (32-1):

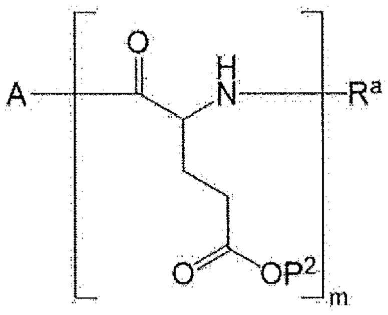

・・・(32-I)

(in the formula (32-I), $R^a$, A, and m are each as defined above, and $P^2$ is a carboxy-protecting group) and a diethylenetriamine derivative represented by the following formula (5):

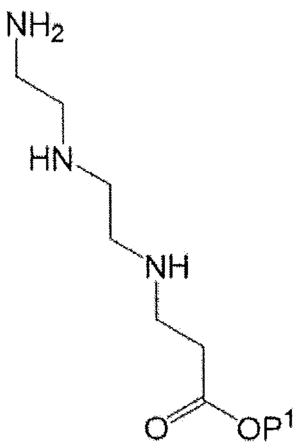

・・・(5)

(in the formula (5), $P^1$ is a carboxy-protecting group) with a polymer represented by the following formula (33-I):

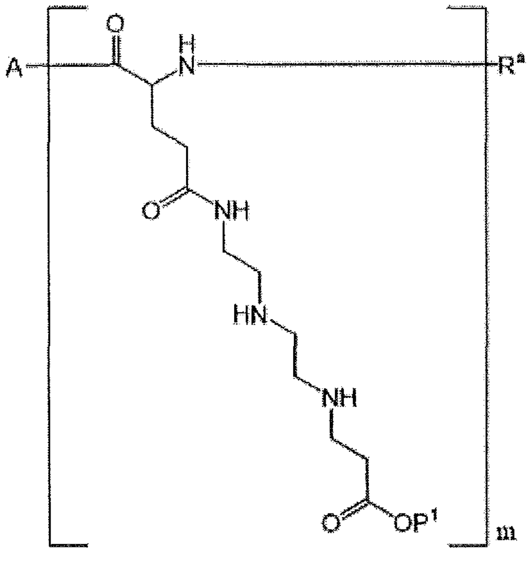

... (33-I)

(in the formula (33-I), $R^a$, A, m, and $P^1$ are each as defined above)

[step (B)]

a step of deprotecting the polymer represented by the aforementioned formula (33-I) obtained in the aforementioned step (A) to obtain a solution comprising a pH-responsive polymer represented by the aforementioned formula (I)

[step (C)]

a step of purifying the solution comprising a pH-responsive polymer represented by the aforementioned formula (I) obtained in the aforementioned step (B) by crystallization or membrane purification.

[23] The production method of the above-mentioned [22], wherein step (A), step (B), and step (C) are the following step (Aa), step (Bb), and step (Cc), respectively, and the pH-responsive polymer represented by the formula (I) is represented by the following formula (3-I):

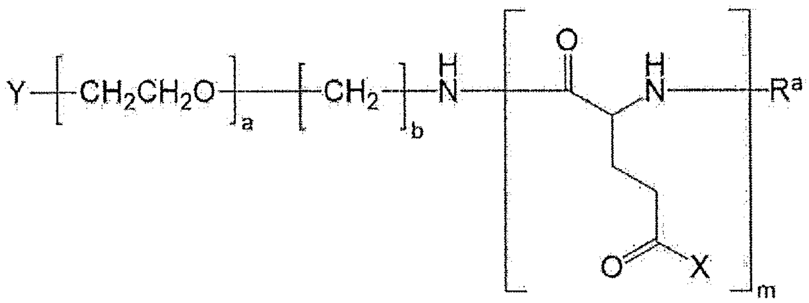

... (3-I)

(in the formula (3-I), Y is an atomic group containing a functional group capable of forming a covalent bond with a functional group present in a biofunctional molecule,

a, b, and m each show a degree of polymerization of each repeat unit, a is 0 to 500, b is an integer of 1 to 3, m is 5 to 300, $R^a$ is H, or $-CO-CH_3$, or $-CO-(CH_2)_{X1}-COOH$ (wherein X1 is 2 or 3), and

X is a pH-responsive functional group represented by the following formula (2)

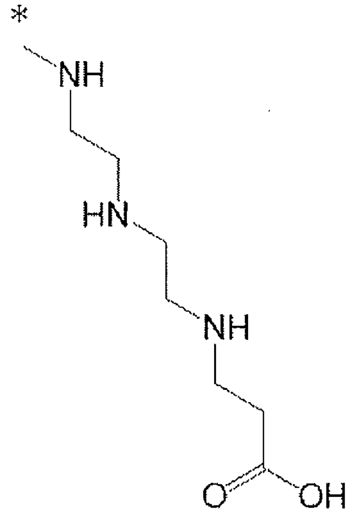

· · · (2)

(in the formula (2), * shows a bond)), wherein

1) a side chain purity index Q1 calculated from the following formula (F1) is not less than 0.9:

$$\text{area P1/area A1} \quad (F1)$$

wherein
area A1 is the area of peak A1 detected between 2.85 ppm and 3.10 ppm, and area P1 is the area of peak P1 detected between 2.85 ppm and 2.95 ppm, in a $^1$H-NMR chart obtained by analyzing the polymer using a nuclear magnetic resonance apparatus in a 0.65% deuterium chloride deuterium oxide solution, wherein a peak derived from a trimethyl group of trimethylsilyl propanoic acid as the internal standard is set to 0 ppm, a straight line connecting -1.0 ppm to 9.0 ppm is a base L1, and a perpendicular line is drawn vertically from the point of 2.95 ppm on the base L1 to divide a peak, and
2) a content percentage Q2 of a repeat unit represented by the following formula (1) is not less than 90% (mol%)

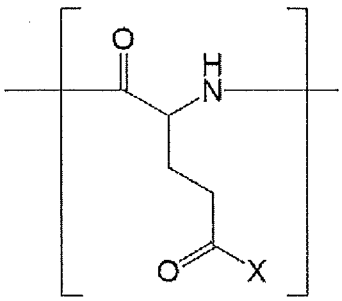

· · · (1)

(in the formula (1), X is as defined above)
[step (Aa)]
a step of reacting a polymer represented by the following formula (7-I):

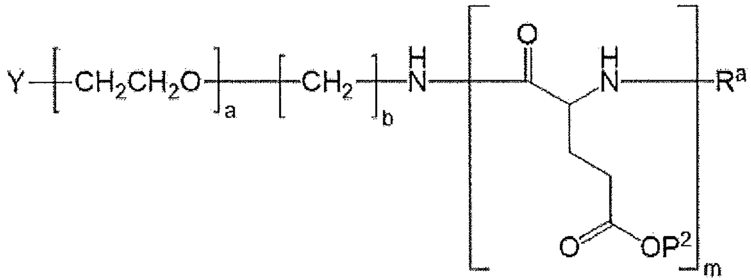

・・・(7－I)

(in the formula (7-1), $R^a$, Y, a, b, and m are each as defined above, and $P^2$ is a carboxy-protecting group) and a diethylenetriamine derivative represented by the following formula (5):

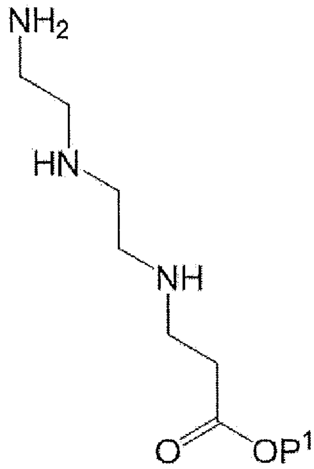

・・・(5)

(in the formula (5), $P^1$ is a carboxy-protecting group) to obtain a polymer represented by the following formula (8-I)

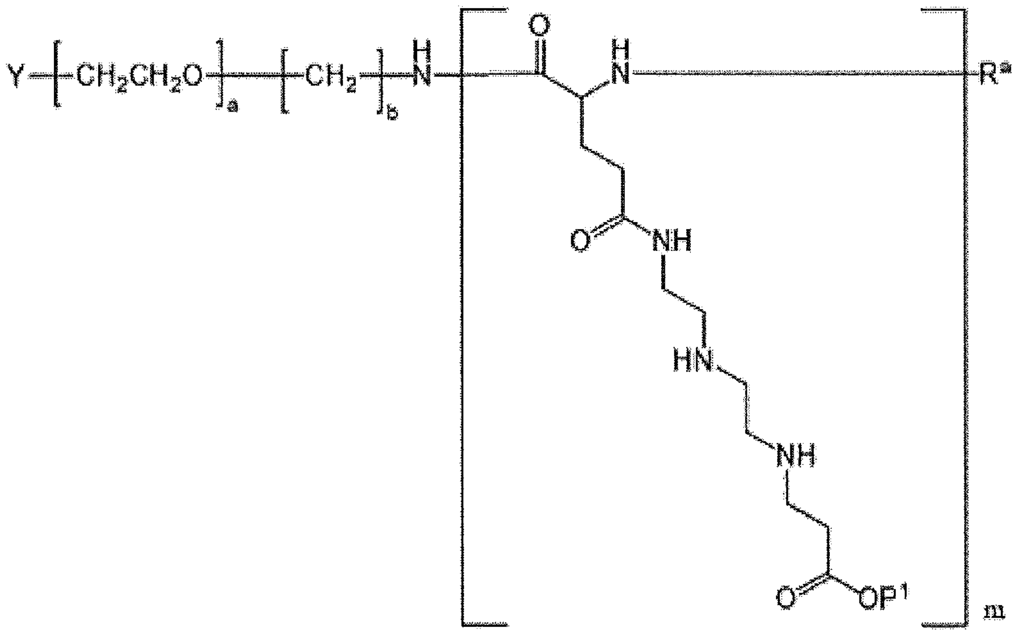

・・・(8－I)

(in the formula (8-I), $R^a$, Y, a, b, m, and $P^1$ are each as defined above)
[step (Bb)]

a step of deprotecting the polymer represented by the aforementioned formula (8-I) obtained in the aforementioned step (Aa) to obtain a solution comprising a pH-responsive polymer represented by the aforementioned formula (3-I)
[step (Cc)]
a step of purifying the solution comprising a pH-responsive polymer represented by the aforementioned formula (3-I) obtained in the aforementioned step (Bb) by crystallization or membrane purification.

[24] The production method of the above-mentioned [22] or [23], wherein, in the aforementioned step (A) or step (Aa), a diethylenetriamine derivative represented by the aforementioned formula (5) is used that satisfies a purity of not less than 90% when analyzed using liquid chromatography.

[25] The production method of any of the above-mentioned [22] to [24], wherein, in the aforementioned step (A) or step (Aa), an ether solvent or an aprotic polar solvent is used as an organic layer.

[26] The production method of any of the above-mentioned [22] to [25], wherein, in the aforementioned step (A) or step (Aa), a diethylenetriamine derivative represented by the aforementioned formula (5) wherein $P^1$ is a t-butyl group is used and, in the aforementioned step (B) or step (Bb), deprotection is performed under hydrochloric acid acidic conditions.

[27] The production method of any of the above-mentioned [22] to [26], wherein, in the aforementioned step (C) or step (Cc), a solution comprising a pH-responsive polymer represented by the aforementioned formula (I) or a pH-responsive polymer represented by the aforementioned formula (3-I) is purified by crystallization or membrane purification.

Other preferred embodiments of pH-responsive polymer (I)

[28] The pH-responsive polymer of any of the above-mentioned [1] to [3], wherein, in the aforementioned formula (I), A is represented by the following formula (34-a):

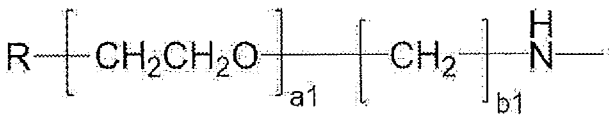
・・・(34-a)

(in the formula (34-a), R is a hydrocarbon group having 1 to 4 carbon atoms,
a1 and b1 each show a degree of polymerization of each repeat unit, a1 is 0 to 500, and b1 is an integer of 1 to 3.)

[29] The pH-responsive polymer of the above-mentioned [28], wherein $R^a$ is H.

[30] The pH-responsive polymer of the above-mentioned [28], wherein $R^a$ is $-CO-CH_3$ or $-CO-(CH_2)_{X1}-COOH$ (wherein X1 is 2 or 3) .

As other preferred embodiments of pH-responsive polymer (I), the following can be mentioned.

[1A] A pH-responsive polymer represented by the following formula (I):

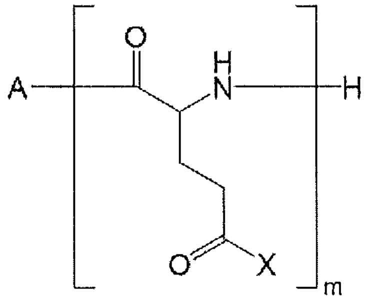
・・・(I)

(in the formula (I), A is a substituent,
m shows the degree of polymerization of the repeat unit and is not less than 5, and
X is a pH-responsive functional group represented by the following formula (2):

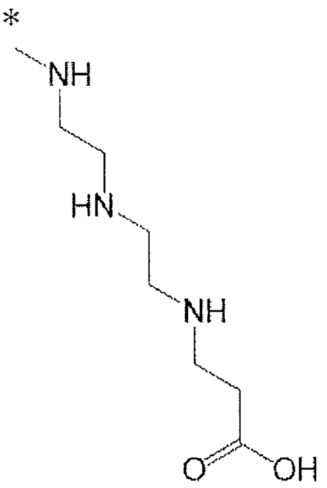
・・・(2)

(in the formula (2), * shows a bond)), wherein

1) a side chain purity index Q1 calculated from the following formula (F1) is not less than 0.9:

area P1/area A1 (F1)

wherein
area A1 is the area of peak A1 detected between 2.85 ppm and 3.10 ppm, and area P1 is the area of peak P1 detected between 2.85 ppm and 2.95 ppm, in a $^1$H-NMR chart obtained by analyzing the polymer using a nuclear magnetic resonance apparatus in a 0.65% deuterium chloride deuterium oxide solution, wherein a peak derived from a trimethyl group of trimethylsilyl propanoic acid as the internal standard is set to 0 ppm, a straight line connecting -1.0 ppm to 9.0 ppm is a base L1, and a perpendicular line is drawn vertically from the point of 2.95 ppm on the base L1 to divide a peak, and
2) a content percentage Q2 of a repeat unit represented by the following formula (1) is not less than 90% (mol%)

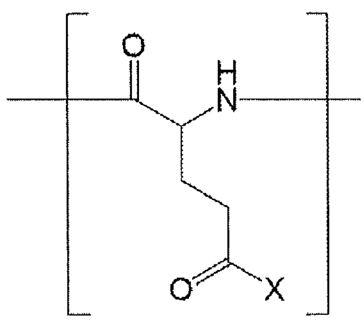
・・・(1)

(in the formula (1), X is as defined above.)

[2A] The pH-responsive polymer of the above-mentioned [1A], represented by the following formula (3):

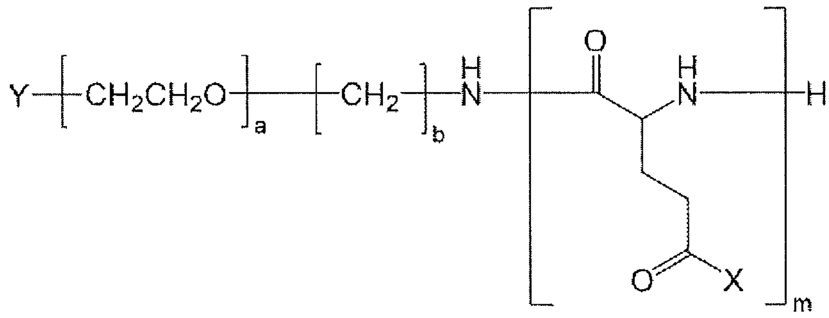

・・・(3)

(in the formula (3), Y is an atomic group containing a functional group capable of forming a covalent bond with a functional group present in a biofunctional molecule,
a, b, and m each show a degree of polymerization of each repeat unit, a is 0 to 500, b is an integer of 1 to 3, m is 5 to 300, and
X is a pH-responsive functional group represented by the following formula (2):

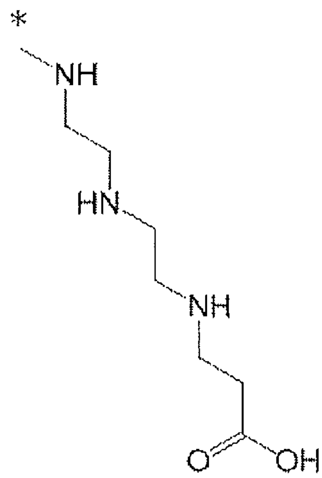

・・・(2)

(in the formula (2), * shows a bond)), wherein

1) a side chain purity index Q1 calculated from the following formula (F1) is not less than 0.9:

$$\text{area P1/area A1} \quad (F1)$$

wherein
area A1 is the area of peak A1 detected between 2.85 ppm and 3.10 ppm, and area P1 is the area of peak P1 detected between 2.85 ppm and 2.95 ppm, in a $^1$H-NMR chart obtained by analyzing the polymer using a nuclear magnetic resonance apparatus in a 0.65% deuterium chloride deuterium oxide solution, wherein a peak derived from a trimethyl group of trimethylsilyl propanoic acid as the internal standard is set to 0 ppm, a straight line connecting -1.0 ppm to 9.0 ppm is a base L1, and a perpendicular line is drawn vertically from the point of 2.95 ppm on the base L1 to divide a peak, and
2) a content percentage Q2 of a repeat unit represented by the following formula (1) is not less than 90% (mol%)

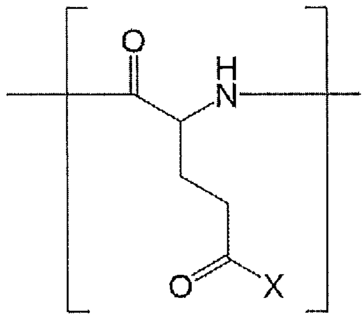

· · · (1)

(in the formula (1), X is as defined above.)

[3A] The pH-responsive polymer of the above-mentioned [2A], wherein Y is an atomic group containing an azido group or an - SH group.
[4A] The pH-responsive polymer of the above-mentioned [2A], wherein Y is a group induced from an atomic group containing alkyne.
[5A] The pH-responsive polymer of any of the above-mentioned [2A] to [4A], wherein a content percentage of Y is not less than 80%.

[Advantageous Effects of Invention]

According to the present invention, a highly pure pH-responsive polymer with a uniform side chain structure and a production method thereof capable of stably supplying the polymer can be provided.

[Brief Description of Drawings]

[Fig. 1]
Fig. 1 shows an example of each element required for calculation in the evaluation of a side chain purity index using formula (F1) (areaP1/areaA1) using areaA1 and areaP1 based on a $^1$H-NMR chart (Example 1 described later).
[Fig. 2]
Fig. 2 shows the calculation of the side chain purity index according to formula (F1) using the $^1$H-NMR chart of the polymer of Example 1 (Example 1 described later).

[Description of Embodiments]

Preferred embodiments of the present invention are explained in detail below. The pH-responsive polymer of the present invention has a structure represented by the following formula (I) and has the purity and content percentage of the side chain structure characterized by satisfying specific conditions in a $^1$H-NMR chart when analyzed using a nuclear magnetic resonance apparatus.

<Structure of pH-responsive polymer>

The pH-responsive polymer of the present invention is a pH-responsive polymer represented by the following formula (I):

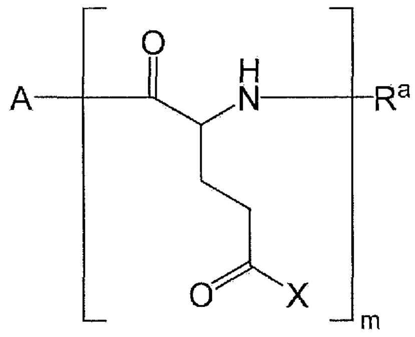

・・・(I)

(in the formula (I), A is a substituent,

$R^a$ is H, or $-CO-CH_3$ or $-CO-(CH_2)_{X1}-COOH$ (wherein X1 is 2 or 3), a group represented by a partial structural formula (I-a):

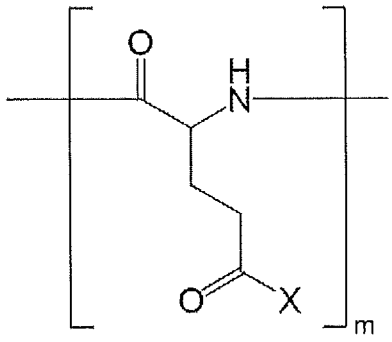

・・・(I－a)

shows a polymerized portion in which a repeat unit represented by the following formula (1) is polymerized (hereinafter to be also indicated as a pH-responsive functional group polymerization portion),

m shows a degree of polymerization of the total repeat unit including the repeat unit represented by the following formula (1) and is not less than 5)

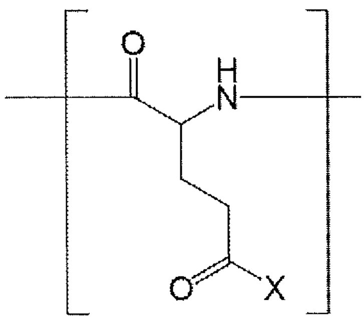

・・・(1)

(in the formula (1), X is a pH-responsive functional group represented by the following formula (2))

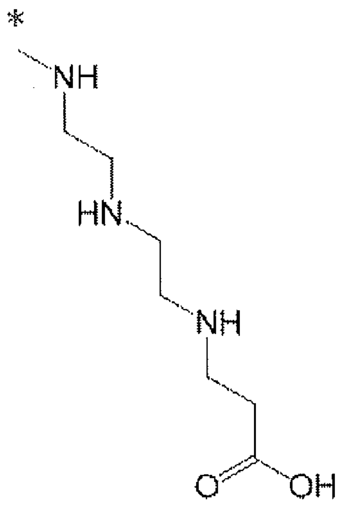

• • • (2)

(in the formula (2), * shows a bond), wherein

1) a side chain purity index Q1 calculated from the following formula (F1) is not less than 0.9:

$$\text{area P1/area A1} \quad (F1)$$

wherein
area A1 is the area of peak A1 detected between 2.85 ppm and 3.10 ppm, and area P1 is the area of peak P1 detected between 2.85 ppm and 2.95 ppm, in a $^1$H-NMR chart obtained by analyzing the polymer using a nuclear magnetic resonance apparatus in a 0.65% deuterium chloride deuterium oxide solution, wherein a peak derived from a trimethyl group of trimethylsilyl propanoic acid as the internal standard is set to 0 ppm, a straight line connecting -1.0 ppm to 9.0 ppm is a base L1, and a perpendicular line is drawn vertically from the point of 2.95 ppm on the base L1 to divide a peak, and
2) in the pH-responsive functional group polymerized portion (I-a), a content percentage Q2 of a repeat unit represented by the following formula (1) is not less than 90% (mol%).

As mentioned above, the pH-responsive polymer of the present invention includes two preferred embodiments, one in which Ra is H (pH-responsive polymer (I-1), etc.) and the other in which $R^a$ is $-CO-CH_3$ or $-CO-(CH_2)_{X1}-COOH$ (pH-responsive polymer (1-2), etc.).

(Embodiments of the pH-responsive polymer of the present invention)

The pH-responsive polymer of the present invention is not particularly limited as long as the aforementioned conditions of the side chain purity index Q1 and the repeat unit content percentage Q2 are met. The "substituent" represented by A can be selected as appropriate by a person skilled in the art according to the purpose of use thereof. For example, when used as a modifier for biofunctional molecules or as a surface modifier for base materials, etc., a polymer having a functional group as a "substituent" represented by A at the terminal of the pH-responsive polymer may be used. Furthermore, when used as a polymer micelle, a block copolymer having a hydrophobic peptide or hydrophobic polymer as the "substituent" represented by A may be used. Furthermore, when used as a liposome or lipid nanoparticle, a lipid or cholesterol may be bound as a "substituent" represented by A.
The range of m is not less than 5, preferably from 5 to 300, more preferably from 5 to 200, most preferably from 5 to 150. A person skilled in the art can appropriately determine the type of "substituent" represented by A.
The pH-responsive polymer represented by the formula (I) of the present invention is as described above. Among them, polymers having structures represented by the following formulas (3-I), (3), and (3-1) are preferred, particularly when used as a modifier for biofunctional molecules.

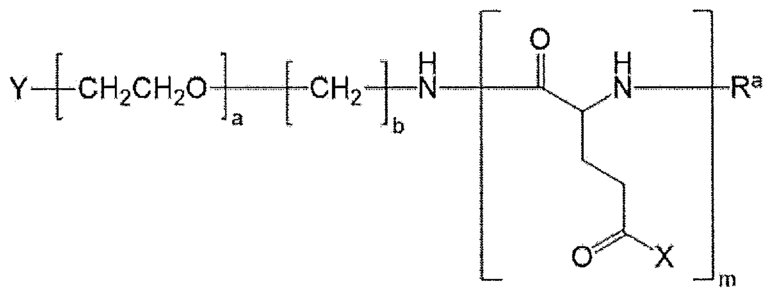

· · · (3 − I)

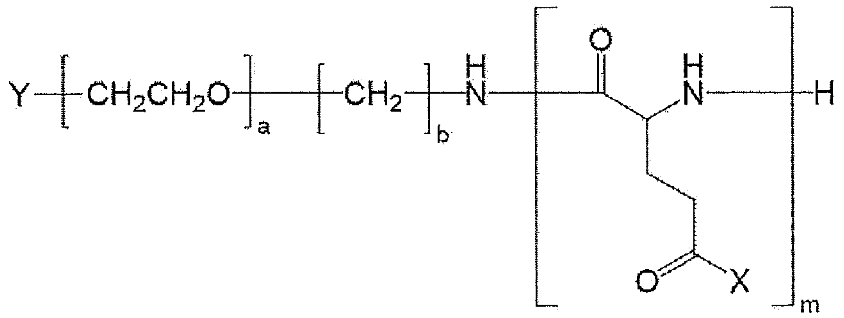

· · · (3)

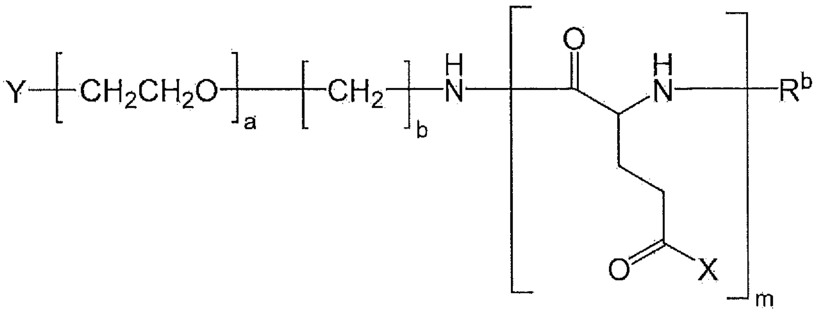

· · · (3 − 1)

(wherein $R^a$ is as defined above, and $R^b$ is $-CO-CH_3$ or $-CO-(CH_2)_{X1}-COOH$ (wherein X1 is 2 or 3). Other each symbol is as described below.)

A polymer having the above-mentioned structure corresponds to a pH-responsive polymer of the formula (I), wherein a substituent represented by A is a group represented by the formula:

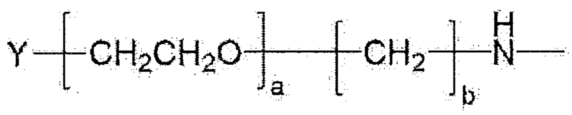

· · · (3 − a)

Each symbol in the above-mentioned formula is described below.

While the N-terminal of the peptide structure in the formula (I-1) and the formula (3) is described as a hydrogen atom, for example, an onium salt structure by pH change or a γ-lactam ring by an intramolecular nucleophilic substitution reaction may be formed instead of the terminal amino group, depending on the synthesis method of the peptide skeleton, the production method of the pH-responsive polymer, the storage conditions, and the like.

In addition, for example, when there is a risk of side reaction in subsequent reactions, and the like, the amino group at the terminal may be protected or converted to a functional group such as an acetyl group or carboxyic acid.

The pH-responsive polymers represented by the formula (3) and the formula (3-1) are described in detail in the following. As for the pH-responsive polymer represented by the formula (3-I), such description can be referred to.

In the formula (3) and the formula (3-1), Y is an atomic group containing a functional group capable of forming a covalent bond with a functional group present in a biofunctional molecule.

The aforementioned atomic group Y is an atomic group included in the pH-responsive polymers represented

by the formula (3) and the formula (3-1) and includes a functional group (Y') capable of forming a covalent bond with a functional group present in a biofunctional molecule. Y may be the aforementioned functional group (Y') alone, or may consist of a bonding site (W) between the aforementioned functional group (Y') and the aforementioned pH-responsive polymer, which is represented by the following formula:

Y-=Y'-W-

In the aforementioned formula, Y' is a functional group capable of forming a covalent bond with a functional group present in a biofunctional molecule, and W is a binding site or a bond to the pH-responsive polymer.

Examples of the bonding site W include amide bond, ether bond, divalent hydrocarbon group containing secondary amino group, single bond, and divalent hydrocarbon group. The aforementioned hydrocarbon group preferably has not more than 12 carbon atoms, and methylene group, ethylene group, trimethylene group, propylene group, isopropylene group, tetramethylene group, butylene group, isobutylene group, pentamethylene group, hexamethylene group, and the like can be mentioned.

A functional group appropriate as the functional group Y' is not particularly limited as long as it is a functional group that can react with functional groups present in biofunctional' molecules (protein drug, polypeptide, enzyme, antibody, antibody drug, gene, nucleic acid compound including oligonucleic acid, nucleic acid drug, anticancer agent, other drugs such as low-molecular-weight drug) to form covalent bonds. The following formula (14) to the following formula (22) are preferred.

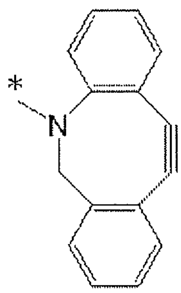

・・・(14)

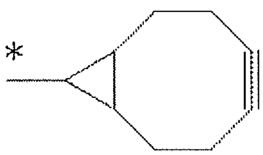

・・・(15)

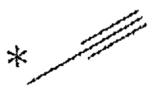

・・・(16)

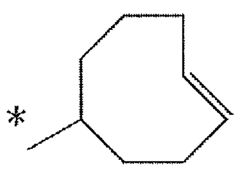

・・・(17)

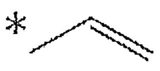

・・・(18)

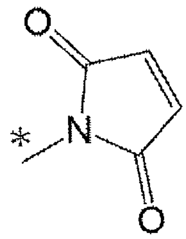

・・・(19)

*-N=N=N ... (20)

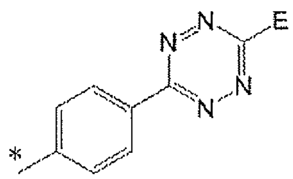

・・・(21)

(in the formula (21), E is a hydrogen atom or a methyl group.)

*SH... (22)

(in the formula (14) to the formula (22), * is a bond.)

For example, the aforementioned functional group Y' can be reacted with an azido group, a tetrazine group, etc., which are used in a click reaction, in case of the aforementioned formulas (14) to (16), with a tetrazine group, etc., which are used in a click reaction, in case of the aforementioned formula (17), with SH group, which is used in a thiol-ene reaction or a thioMichael addition reaction, in case of the formula (18) or (19), with a terminal alkynyl group, a cyclooctyne group, etc., which are used in a click reaction, in case of the formula (20) or (21), and with an alkenyl group, a maleimide group, etc., which are used in a thiol-ene reaction or a thioMichael addition reaction, in case of the formula (22).

From the viewpoint of ease of production and ease of using the pH-responsive polymer as a modifier for biofunctional molecules, a group induced from an atomic group containing an azido group represented by the aforementioned formula (20), or an -SH group represented by the aforementioned formula (22), and further, an alkyne represented by the aforementioned formula (14) to (16) is particularly preferable.

In the formula (3) and the formula (3-1), the content percentage (mol%) of Y is preferably not less than 80%, more preferably not less than 90%.

When Y is smaller than 80%, the content of a functional group that can form a covalent bond with a functional group present in biofunctional molecules in the pH-responsive polymer (3) and the formula (3-1) decreases, and when used as a modifier of biofunctional molecules via said functional group, the polymer that cannot be used for modification increases and is wasted and after the modification reaction, it may be difficult to remove and purify the pH-responsive polymer that did not contribute to the reaction.

In the formula (3) and the formula (3-1), X is a pH-responsive functional group represented by the aforementioned formula (2).

In the formula (3) and the formula (3-1), a, b, and m each show the degree of polymerization of each repeat unit.

In the formula (3) and the formula (3-1), the range of a is 0 to 500. When using the pH-responsive polymer as a modifier for biofunctional molecules, it can be arbitrarily set depending on the function desired to be imparted.

In the formula (3) and the formula (3-1), b is an integer of 1 to 3.

In the formula (3) and the formula (3-1), m shows the degree of polymerization of the peptide structure in the pH-responsive polymer. The range of m is 5 to 300, preferably 5 to 200, most preferably 5 to 150.

When m is smaller than 5, the content of pH-responsive functional group in the pH-responsive polymer becomes small, and when the pH-responsive polymer is used as a modifier of biofunctional molecules, the accumulation effect in tumor tissues by pH-response may be insufficient. When m is larger than 300, the content of pH-responsive functional group in the pH-responsive polymer becomes large. When the pH-responsive polymer is used as a modifier of biofunctional molecules, no improvement in the accumulation effect in tumor tissues by pH-response is expected, and production may be difficult.

Similarly, among the pH-responsive polymers represented by the formula (I) of the present invention, particularly when used as polymer micelles, liposomes, lipid nanoparticles, and the like, a polymer having a structure represented

by the following formula (34) or (34-1) is preferred.

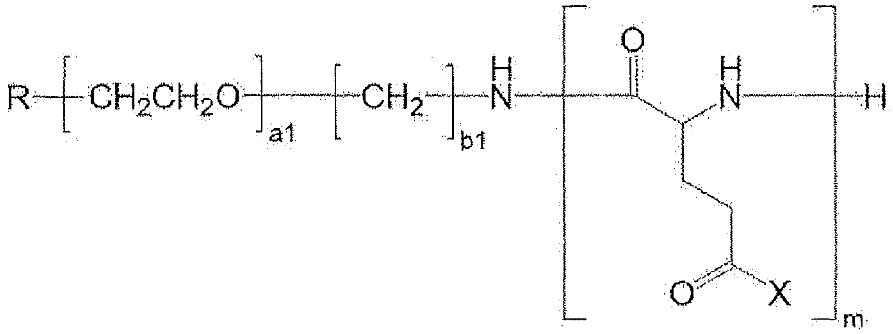

・・・(34)

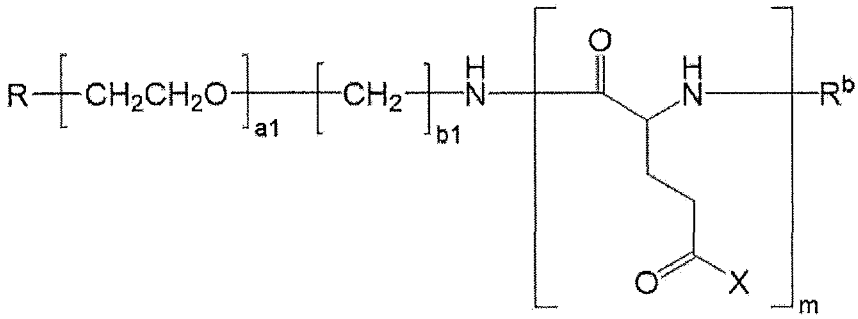

・・・(34-1)

A polymer having the above-mentioned structure corresponds to a pH-responsive polymer of the formula (I), wherein a substituent represented by A is a group represented by the formula:

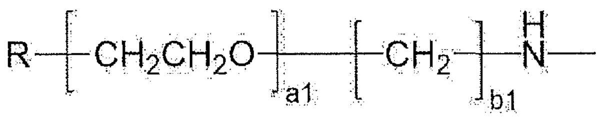

・・・(34-a)

(in the formula (34-a), R is an alkyl group having 1 to 4 carbon atoms, a1 and b1 each show a degree of polymerization of each repeat unit, a1 is 0 to 500, and b1 is an integer of 1 to 3.)

From the aspects of easy availability of starting materials and ease of production, a structure wherein R is a methyl group, a1 is 0, and b1 is 3, or R is a methyl group, a1 is 10 to 500, and b1 is 2 to 3 is preferred.

<Purity index Q1 of pH-responsive polymer>

Successively, purity of pH-responsive polymer is explained.

The pH-responsive polymer of the present invention meets a side chain purity index Q1 of not less than 0.9 as calculated from the following formula (F1):

$$areaP1/areaA1 \qquad (F1).$$

The formula (F1) is a formula for calculating the index of the content of the target structure represented by the formula (2) among the structures obtained from diethylenetriamine and an acrylic acid derivative, that is, the side chain purity index Q1.

First, the structures of other impurities that can be obtained from diethylenetriamine and acrylic acid derivatives in the production process of the present invention are explained.

Detailed production methods for the pH-responsive polymer of the present invention are described below. The diethylenetriamine derivative represented by the aforementioned formula (5) which is used in step (A1) or step (A2), and step (A3) or step (A4) may be a purchased commercially available product or produced by a known production method. For example, after a Michael addition reaction between diethylenetriamine and an acrylic acid derivative, a highly pure diethylenetriamine derivative having the formula (5) as a main component can be produced by purification

such as distillation, column chromatography, and the like.

In the following, various side chain structures that can be obtained in this production step are explained.

When impurities represented by the formula (23) are contained in the diethylenetriamine derivative represented by the aforementioned formula (5), a repeat unit represented by the formula (1) wherein X is a structure represented by the formula (24) instead of a structure represented by the formula (2) is introduced as an impurity structure by performing step (A1) or step (A2), and step (B1) or step (B2), and step (A3) or step (A4) and step (B3) or step (B4). That is, a structure represented by the following formula (10) is introduced as an impurity structure instead of a structure represented by the formula (1).

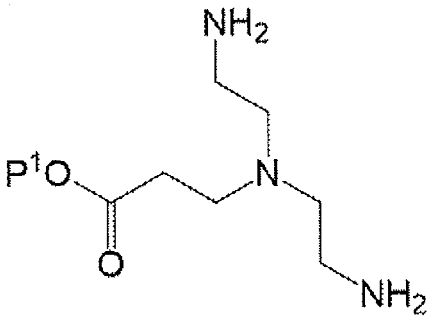
・・・(23)

In the formula (23), $P^1$ is as defined in the aforementioned formula (5). That is, in the formula (23), $P^1$ is a carboxy-protecting group.

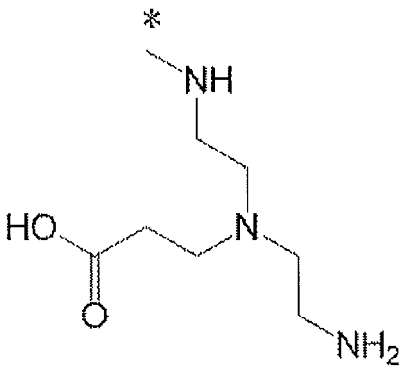
・・・(24)

(in the formula (24), * shows a bond.)

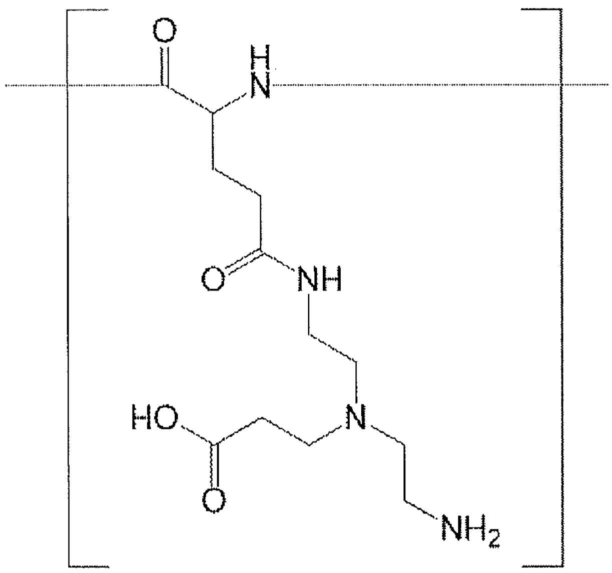
・・・(10)

The structure represented by the above-mentioned formula (24) has the property of being neutral in an environment of pH 7.4 and becoming cationic in an environment of pH 6.0 to 6.6. However, since it has a highly reactive primary amino group, a structure in which polymers are crosslinked (see the following formula (25)) is provided.

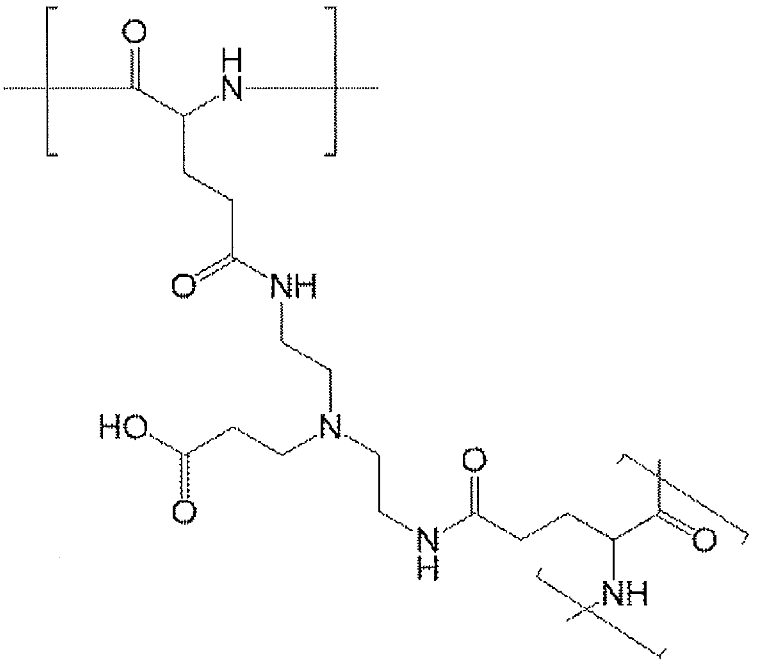

• • • (25)

The structure represented by the above-mentioned formula (25) is neutral in an environment of pH 7.4 and also neutral in an environment of pH 6.0 - 6.6, and therefore, the desired effect cannot be obtained.

Furthermore, since the crosslinked product can form a network structure, it may form a gel when dissolved in water, and the solubility in water may decrease.

When impurities represented by the formula (26) are contained in the diethylenetriamine derivative represented by the formula (5), a repeat unit represented by the formula (1) wherein X is a structure represented by the formula (27) instead of a structure represented by the formula (2) is introduced as an impurity structure by performing step (A1) or step (A2), and step (B1) or step (B2), and step (A3) or step (A4) and step (B3) or step (B4). That is, a structure represented by the following formula (11) is introduced as an impurity structure instead of a structure represented by the formula (1).

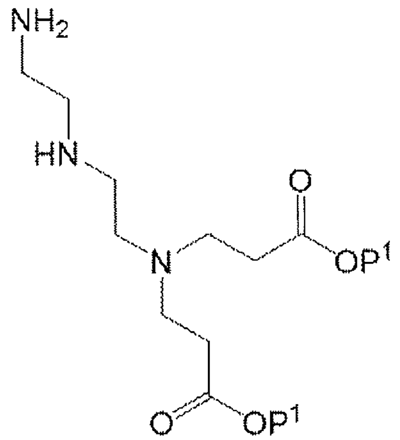

• • • (26)

In the formula (26), $P^1$ is as defined in the aforementioned formula (5). That is, in the formula (26), $P^1$ is a carboxy-protecting group.

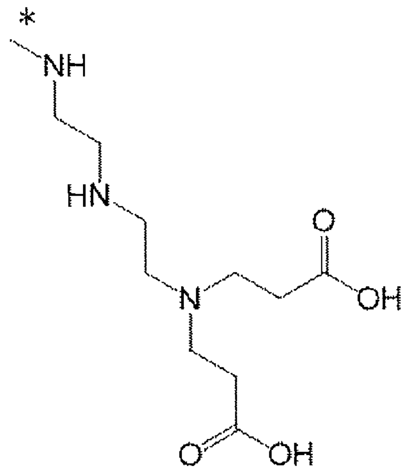

・・・(27)

(in the formula (27), * shows a bond.)

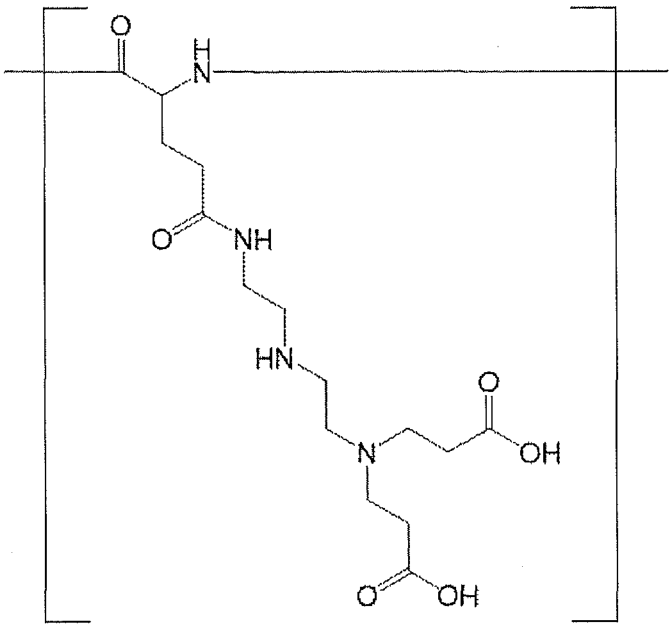

・・・(11)

The structure represented by the above-mentioned formula (27) is anionic in an environment of pH 7.4 and also anionic in an environment of pH 6.0 - 6.6, and therefore, the desired effect cannot be obtained.

When impurities represented by the formula (28) are contained in the diethylenetriamine derivative represented by the formula (5), a repeat unit represented by the formula (1) wherein X is a structure represented by the formula (29) instead of a structure represented by the formula (2) is introduced as an impurity structure by performing step (A1) or step (A2), and step (B1) or step (B2), and step (A3) or step (A4) and step (B3) or step (B4). That is, a structure represented by the following formula (12) is introduced as an impurity structure instead of a structure represented by the formula (1).

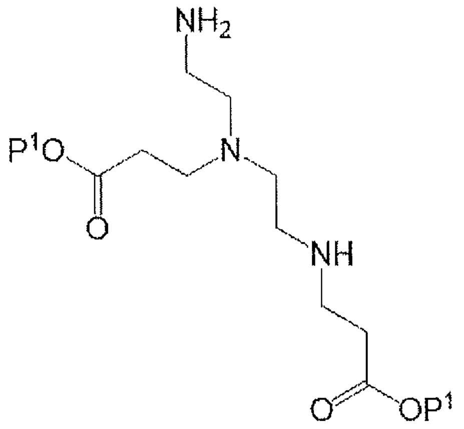

. . . (28)

In the formula (28), $P^1$ is as defined in the aforementioned formula (5). That is, in the formula (28), $P^1$ is a carboxy-protecting group.

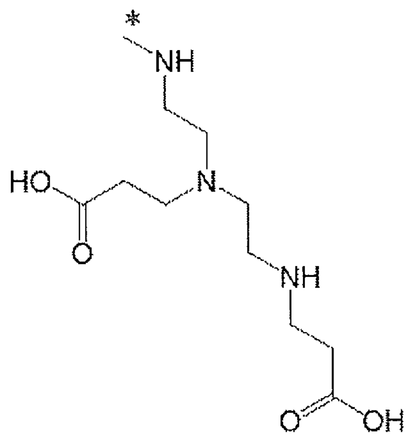

. . . (29)

(in the formula (29), * shows a bond.)

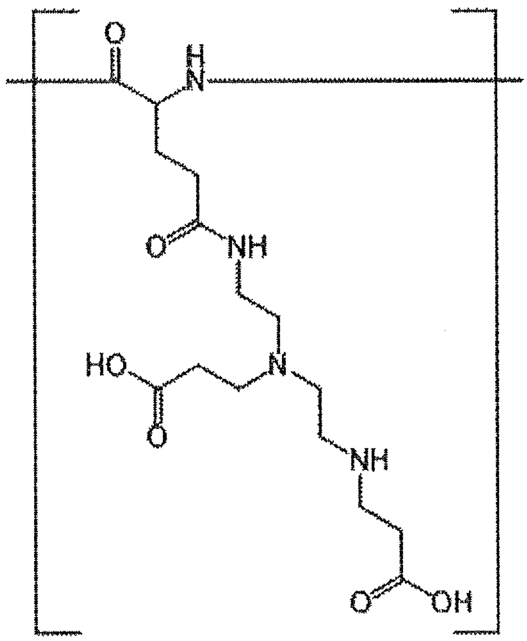

. . . (12)

The structure represented by the above-mentioned formula (29) is anionic in an environment of pH 7.4 and

also anionic in an environment of pH 6.0 - 6.6, and therefore, the desired effect cannot be obtained.

When impurities represented by the formula (30) are contained in the diethylenetriamine derivative represented by the formula (5), a repeat unit represented by the formula (1) wherein X is a structure represented by the formula (31) instead of a structure represented by the formula (2) is introduced as an impurity structure by performing step (A1) or step (A2), and step (B1) or step (B2), and step (A3) or step (A4) and step (B3) or step (B4). That is, a structure represented by the following formula (13) is introduced as an impurity structure instead of a structure represented by the formula (1).

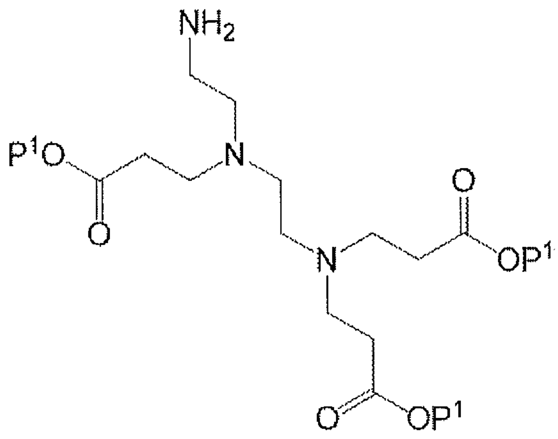

・・・(30)

In the formula (30), $P^1$ is as defined in the aforementioned formula (5). That is, in the formula (30), $P^1$ is a carboxy-protecting group.

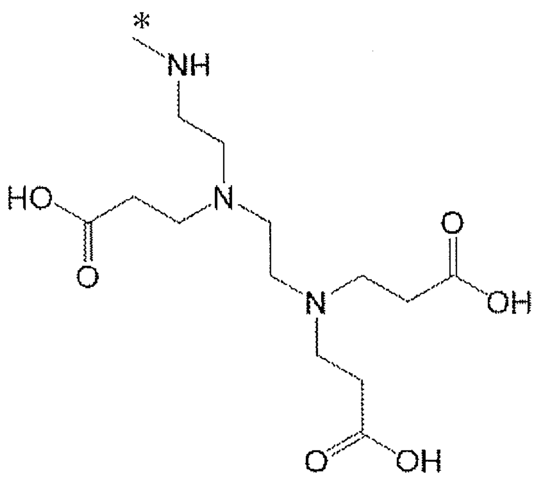

・・・(31)

(in the formula (31), * shows a bond.)

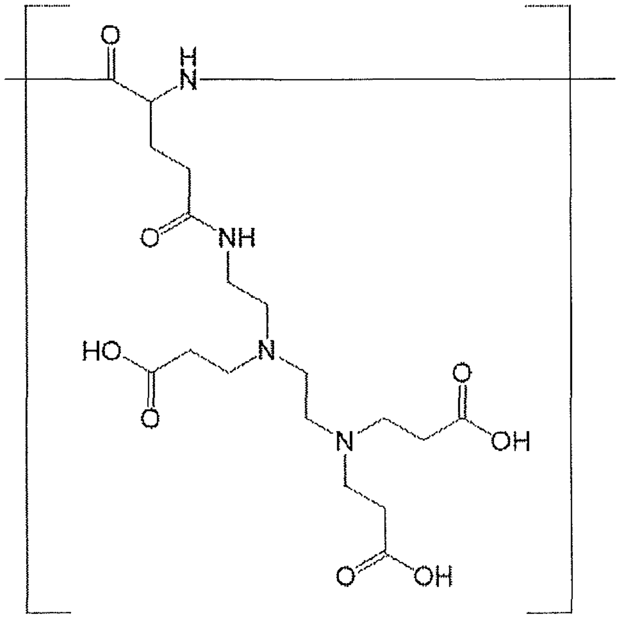

• • • (1 3)

The structure represented by the above-mentioned formula (31) is anionic in an environment of pH 7.4 and also anionic in an environment of pH 6.0 - 6.6, and therefore, the desired effect cannot be obtained.

The target structure (the aforementioned formula (2)) and the impurity structures (the formulas (24), (27), (29), and the formula (31)) each can be detected in a $^1$H-NMR chart when analyzed using a nuclear magnetic resonance apparatus. The NMR measurement conditions and the method for calculating the side chain purity index Q1 are explained below.

In the present invention, the "$^1$H-NMR chart" is a chart in which the horizontal axis (x-axis) shows the chemical shift value, and the vertical axis (y-axis) shows the relative intensity of the proton signal.

As for the measurement condition, $^1$H-NMR chart can be obtained by setting the peak derived from the trimethyl group of trimethylsilyl propanoic acid as the internal standard to 0 ppm, when the pH-responsive polymer (I-A) having a repeat unit represented by the aforementioned formula (1) is analyzed using a nuclear magnetic resonance apparatus in a 0.65% deuterium chloride deuterium oxide solution. In the obtained $^1$H-NMR chart, the straight line connecting -1.0 ppm to 9.0 ppm is set as baseLl, the area of peakA1 detected between 2.85 ppm and 3.10 ppm is defined as areaA1, a perpendicular line is drawn from the point of 2.95 ppm on baseLl to divide a peak, the area of peakP1 detected between 2.85 ppm and 2.95 ppm is defined as areaP1, whereby an index of the content percentage of the object structure represented by the aforementioned formula (2), that is, side chain purity index Q1, can be calculated from the aforementioned formula (F1).

formula (F1): areaP1/areaA1=Q1

Under the conditions, peakA1 detected between 2.85 ppm and 3.10 ppm is a peak derived from the α-position proton of a carboxy group in the structures represented by the aforementioned formula (2), the aforementioned formulas (24), (27), (29), and the aforementioned formula (31).

In peakA1, peakP1 detected between 2.85 ppm and 2.95 ppm is a peak derived from the α-position proton of a carboxy group in the structure represented by the aforementioned formula (2), and a peak derived from the α-position proton of the carboxy group in the carboxyethyl group bonded to the secondary amino group in the structure represented by the aforementioned formula (29).

In peakA1, a peak detected between 2.95 ppm and 3.10 ppm is a peak derived from the α-position proton of a carboxy group in the structure represented by the aforementioned formula (24), a peak derived from the α-position proton of a carboxy group of the structure represented by the aforementioned formula (27), a peak derived from the α-position proton of a carboxy group in the carboxyethyl group bonded to the tertiary amino group in the structure represented by the aforementioned formula (29), and a peak derived from the α-position proton of a carboxy group in the structure represented by the aforementioned formula (31).

Therefore, the value Q1 calculated from the aforementioned formula (F1) is an index of the content percentage of X in the repeat unit represented by the aforementioned formula (1) in the pH-responsive polymer (I) being the target structure, the structure represented by the aforementioned formula (2), i.e., side chain purity index.

In the pH-responsive polymer (I) of the present invention, the value of Q1 is not less than 0.9, preferably not less than 0.92, most preferably not less than 0.95.

As described above, in peak A1, peak P1 detected between 2.85 ppm and 2.95 ppm is a peak derived from the α-position proton of a carboxy group in the structure represented by the aforementioned formula (2), and in the structure represented by the aforementioned formula (29), a peak derived from the α-position proton of a carboxy group in the carboxyethyl group bonded to the secondary amino group. In peak A1, a peak detected between 2.95 ppm and 3.10 ppm is a peak derived from the α-position proton of a carboxy group in the structure represented by the aforementioned formula (24), a peak derived from the α-position proton of a carboxy group in the structure represented by the aforementioned formula (27), a peak derived from the α-position proton of a carboxy group in the structure represented by the aforementioned formula (31), and in the structure represented by the aforementioned formula (29), a peak derived from the α-position proton of a carboxy group in a carboxyethyl group bonded to the tertiary amino group. Therefore, peaks derived from the same number of protons possessed by the structure represented by the aforementioned formula (29) are included in "peak P1" in peak A1 and the remaining portion of peak A1 ("peak A1 - peak P1"). When Q1 is not less than 0.9, the "peak A1 - peak P1" is not more than 0.1, and therefore, the ratio of the peak derived from the structure represented by the aforementioned formula (29) is also not more than 0.1 (0.1 at maximum), and the ratio of the peak derived from the structure represented by the aforementioned formula (29) in peak P1 is also not more than 0.1.

Q1 is related to the content of both the peak derived from the structure represented by the aforementioned formula (2) and the peak derived from the structure represented by the aforementioned formula (29). When "Q1 is not less than 0.9" which is satisfied by the pH-responsive polymer (I) of the present invention, since the content percentage of the peak derived from the structure represented by the aforementioned formula (29) is extremely low, it can be substantially assumed to be the content percentage of the peak derived from the structure represented by the aforementioned formula (2). Therefore, Q1 can be said to be an index of the content percentage of X in the repeat unit represented by the aforementioned formula (1) as the target structure, namely, the structure represented by the aforementioned formula (2) in the pH-responsive polymer (I), i.e., side chain purity index (to be also simply indicated as "content percentage" or "side chain purity" in the present specification).

When the value of Q1 is smaller than 0.9, as X in the repeat unit represented by the aforementioned formula (1), one or more groups selected from the group of structures represented by the aforementioned formula (24), (27), (29) or (31) is contained as impurity structures in an amount of more than 0.1 in addition to the aforementioned formula (2). When this pH-responsive polymer is used in the pharmaceutical field, the compound is treated as a separate compound from the main structure depending on its content. In this case, problems occur in that it is necessary to separately identify the compound, conduct various safety tests, and evaluate tolerance levels. Furthermore, since the content of the pH-responsive functional group represented by the aforementioned formula (2) decreases, there is a possibility that the accumulation effect in tumor tissues due to pH response may be insufficient.

<Content percentage Q2 of repeat unit represented by the aforementioned formula (1)>

Successively, a content percentage of the repeat unit represented by the aforementioned formula (1) in the pH-responsive polymer (I) is explained.

The pH-responsive polymer (I) of the present invention has a content percentage Q2 of the repeat unit represented by the aforementioned formula (1) of not less than 90%.

Other repeat units obtained by the production step of the present invention are explained.

When a deprotection reaction does not proceed completely in the step of deprotecting a polymer having a repeat unit represented by the following formula (6), which is carried out in step (B1) or step (B2), and step (B3) or step (B4), a repeat unit represented by the following formula (6) remains as an impurity structure instead of a repeat unit represented by the formula (1).

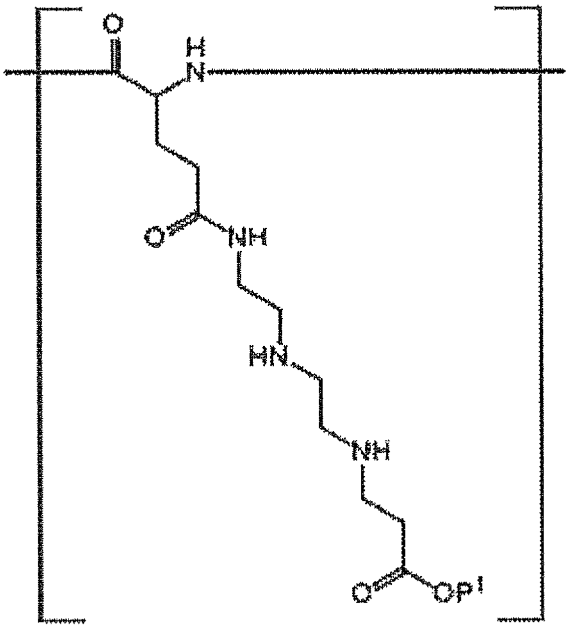

・・・(6)

In the formula (6), $P^1$ is as defined in the aforementioned formula (5). That is, in the formula (6), $P^1$ is a carboxy-protecting group.

This content percentage can be calculated from the peak intensity derived from $P^1$, which is a carboxy-protecting group. For example, when $P^1$ is a t-butyl group, a peak derived from the t-butyl group is detected at 1.45 ppm. Therefore, by comparing the integral value derived from the t-butyl group and the integral value derived from the repeat unit represented by the aforementioned formula (1), the content percentage of the structure represented by the aforementioned formula (6) can be calculated.

When a repeat unit represented by the aforementioned formula (6) is contained in an amount of more than 10% instead of the repeat unit represented by the aforementioned formula (1) and when this pH-responsive polymer is used in the pharmaceutical field, the compound is treated as a separate compound from the main structure depending on its content. In this case, problems may occur in that it is necessary to separately identify the compound, conduct various safety tests, and evaluate tolerance levels.

In addition, since $P^1$, which is a carboxy-protecting group, remains in the repeat unit represented by the aforementioned formula (6), there is a possibility that the solubility of the pH-responsive polymer in water may be reduced, and along therewith, there is a possibility that the blood retention property may be decreased. Furthermore, since the aforementioned formula (6) is a repeat unit having a secondary amino group and exhibiting cationic property, it may increase the cationic property of the pH-responsive polymer and decrease blood retention property.

Furthermore, as an impurity other than the repeat unit represented by the aforementioned formula (6), a repeat unit represented by the following formula (4) remains as an impurity structure instead of a repeat unit represented by the formula (1) when the addition reaction does not proceed completely in the step of reacting a polymer having a repeat unit represented by the following formula (4) and a diethylenetriamine derivative represented by the aforementioned formula (5), which is carried out in step (A1), step (A2), step (A3), or step (A4).

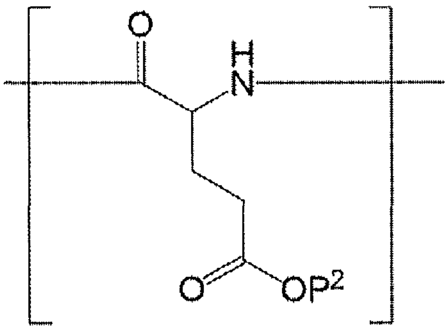

・・・(4)

In the formula (4), $P^2$ is a carboxy-protecting group.

This content percentage can be calculated from the peak intensity derived from $P^2$, which is a carboxy-protecting group. For example, when $P^2$ is a benzyl group, a peak derived from an aromatic ring is detected at 7.00 to 7.50 ppm. Therefore, by comparing the integral value derived from the aromatic ring and the integral value derived from the repeat unit represented by the aforementioned formula (1), the content percentage of the structure represented by the aforementioned formula (4) can be calculated.

When a repeat unit represented by the aforementioned formula (4) is contained in an amount of more than 10% instead of the repeat unit represented by the aforementioned formula (1) and when this pH-responsive polymer is used in the pharmaceutical field, the compound is treated as a separate compound from the main structure depending on its content. In this case, problems may occur in that it is necessary to separately identify the compound, conduct various safety tests, and evaluate tolerance levels.

In addition, since $P^2$, which is a carboxy-protecting group, remains in the repeat unit represented by the aforementioned formula (4), there is a possibility that the solubility of the pH-responsive polymer in water may be reduced, and along therewith, there is a possibility that the blood retention property may be decreased.

When the content percentage of the repeat unit represented by the formula (1) calculated according to the above is (1A), the content percentage of the repeat unit represented by the formula (4) calculated according to the above is (4A), and the content percentage of the repeat unit represented by the formula (6) calculated according to the above is (6A), Q2 can be shown by

$$[(1A)/\{(1A)+(4A)+(6A)\}]\times 100$$

In the present invention, the content percentage Q2 of repeat unit represented by the formula (1) satisfies not less than 90%, preferably not less than 92%, most preferably not less than 95%.

When the content percentage of the repeat unit represented by the formula (1) is less than 90%, not less than 10% of one or more kinds of repeat units selected from the repeat units represented by the aforementioned formula (4) or the aforementioned formula (6) is included in addition to the repeat unit represented by the aforementioned formula (1). When this pH-responsive polymer is used in the pharmaceutical field, the compound is treated as a separate compound from the main structure depending on its content. In this case, problems may occur in that it is necessary to separately identify the compound, conduct various safety tests, and evaluate tolerance levels.

Since the pH-responsive polymer of the present invention (I) has the purity specified above, for example, even when it is used in the pharmaceutical field, its high purity characteristics make it possible to minimize identification of impurities, conducting various safety tests and the like, and the necessity of allowable amount evaluation. Moreover, since the content of the pH-responsive functional group represented by the aforementioned formula (2) in the pH-responsive polymer (I) is high, a high accumulation effect in tumor tissues due to pH response is expected.

In the present invention, the measurement conditions of the nuclear magnetic resonance apparatus are the following conditions:

sample amount: 10 mg/mL
deuterated solvent: 0.65% deuterium chloride deuterium oxide solution
integration number: 64
pulse delay: 4.95 seconds

<Production method of pH-responsive polymer>

Successively, the production method of a pH-responsive polymer is explained. The pH-responsive polymer (I) of the present invention can be obtained by producing (i) a pH-responsive polymer wherein $R^a$ is H (pH-responsive polymers represented by the formula (I-1) and the formula (3)), and (ii) a pH-responsive polymer wherein $R^a$ is $-CO-CH_3$ or $-CO-(CH_2)_{X1}-COOH$ (wherein X1 is 2 or 3) (pH-responsive polymers represented by the formula (I-2) and the formula (3-1)).

Specific production methods are shown below, but the invention is not limited thereto.

<u>(i) Production method of pH-responsive polymer (I-1) (including pH-responsive polymer represented by the formula (3))</u>

The pH-responsive polymer (I-1) having a repeat unit represented by the aforementioned formula (1) is produced by performing the following step (A1), step (B1), and step (C1) in this order. Furthermore, among the pH-responsive polymers (I) having a repeat unit represented by the aforementioned formula (1), the pH-responsive polymer represented by the aforementioned formula (3) which is a structure preferable from the viewpoint of modifying biofunctional molecules can be produced by performing the following step (A2), step (B2), and step (C2) in this order.

[Explanation of step (A1) and step (A2)]

Step (A1) is a step of obtaining a polymer represented by the following formula (33) by reacting a polymer represented by the following formula (32) and a diethylenetriamine derivative represented by the following formula (5).

In addition, step (A2) is a step of obtaining a polymer represented by the following formula (8) by reacting a polymer represented by the following formula (7) and a diethylenetriamine derivative represented by the aforementioned formula (5).

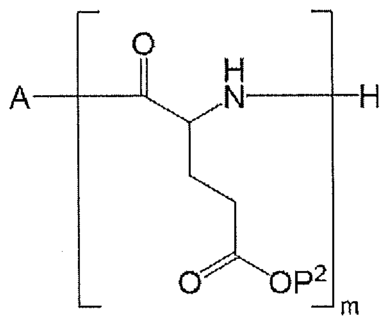

・・・(32)

In the formula (32), A is a substituent, $P^2$ is a carboxy-protecting group. It is not particularly limited as long as it is a general carboxy-protecting group, and a methyl group, an ethyl group, a t-butyl group, an allyl group, a benzyl group, and the like can be specifically mentioned. A benzyl group is preferred from the aspects of easy availability and ease of reaction in the subsequent step (B1).

The polymer represented by the formula (32) may be a purchased commercially available product or synthesized produced by a known method.

As a known method to obtain a polypeptide structure, polycondensation, ring opening polymerization, and the like can be mentioned.

As a method for ring-opening polymerization, methods described in, for example, Peptide-Basede Materials, 2011, 1-26, Angew. Chem., 2018, 5151-5155, Proceedings of the National Academy of Sciences of the United States of America, 2019, 10658-10663 can be used.

A person skilled in the art can introduce the substituent represented by A into the polymer represented by the formula (32) by preparing the substituent by using a commercially available product or one synthesized by a known method according to the structure of the polymer.

As a polymer represented by the aforementioned formula (32), a polymer represented by the following formula (7) can be preferably mentioned.

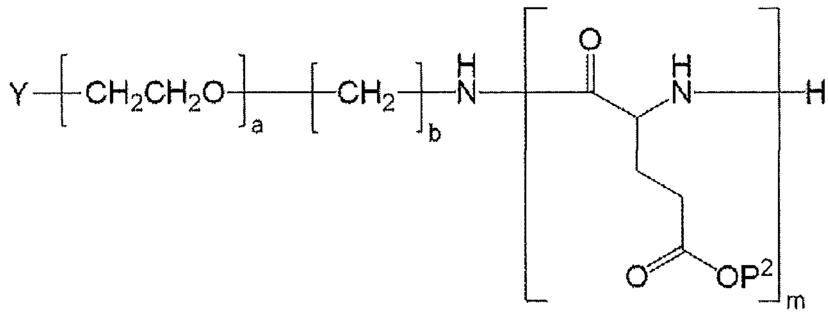

・・・(7)

In the formula (7), Y is as defined for Y in the aforementioned formula (3).

That is, in the formula (7), Y is an atomic group containing a functional group capable of forming a covalent bond with a functional group present in a biofunctional molecule.

In the formula (7), a is as defined for a in the aforementioned formula (3). That is, in the formula (7), a is 0 to 500.

In the formula (7), b is as defined for b in the aforementioned formula (3). That is, in the formula (7), b is an integer of 1 to 3.

In the formula (7), $P^2$ is as defined in the aforementioned formula (4). That is, in the formula (7), $P^2$ is a carboxy-protecting group.

In the formula (7), m can be defined in the same manner as m in the aforementioned formula (3). That is, in

the formula (7), m is 5 to 300.

The polymer represented by the formula (7) may be a purchased commercially available product or can be synthesized by a known method.

As a known method to obtain a polypeptide structure, the above-mentioned polycondensation, ring opening polymerization, and the like can be mentioned.

For the production of a polymer represented by the formula (7) by the introduction of a group represented by the formula:

$$Y\text{-}[CH_2CH_2O]_a\text{-}[CH_2]_b\text{-}NH\text{-}$$

as a substituent represented by A in the polymer represented by the formula (32), a person skilled in the art can perform same by using a commercially available product or one synthesized by a known method according to the structure of the polymer.

As a polymer represented by the aforementioned formula (32), a polymer represented by the following formula (35) can be preferably mentioned.

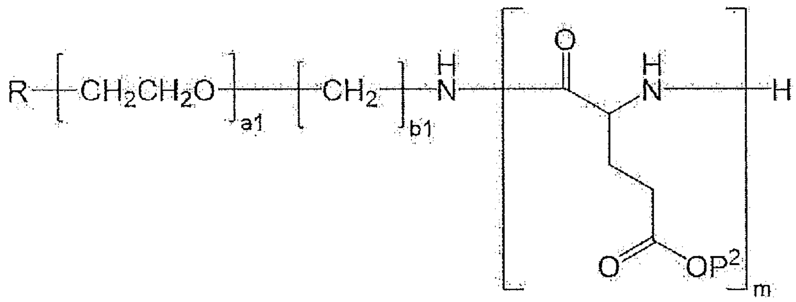
・・・(35)

In the formula (35), R is as defined for R in the aforementioned formula (34).

That is, in the formula (35), R is an alkyl group having 1 to 4 carbon atoms.

In the formula (35), a1 is as defined for a1 in the aforementioned formula (34). That is, in the formula (35), a1 is 0 to 500.

In the formula (35), b1 is as defined for b1 in the aforementioned formula (34). That is, in the formula (35), b1 is an integer of 1 to 3.

In the formula (35), $P^2$ is as defined in the aforementioned formula (4). That is, in the formula (35), $P^2$ is a carboxy-protecting group.

In the formula (35), m is as defined for m in the aforementioned formula (34). That is, in the formula (35), m is 5 to 300.

The polymer represented by the formula (35) may be a purchased commercially available product or can be synthesized by a known method.

As a known method to obtain a polypeptide structure, the above-mentioned polycondensation, ring opening polymerization, and the like can be mentioned.

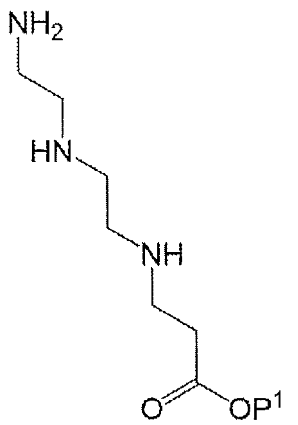
・・・(5)

In the formula (5), $P^1$ is a protecting group for a carboxy group. It is not particularly limited as long as it is a

general carboxy-protecting group, and a methyl group, an ethyl group, a t-butyl group, an allyl group, a benzyl group, and the like can be specifically mentioned. A t-butyl group is preferred from the aspect of easy deprotection.

The diethylenetriamine derivative represented by the structure of the formula (5) may be a purchased commercially available product or can be produced by a known production method, but a highly purified diethylenetriamine derivative is required. As a known production method, for example, a mixture of diethylenetriamine derivatives containing the desired structure of the formula (5) can be produced by performing a Michael addition reaction between diethylenetriamine and an acrylic acid derivative. Examples of the mixture include diethylenetriamine and positional isomers of acrylic acid derivatives as the raw materials. It is possible to improve the purity of the formula (5), which is the target structure, by performing purification such as distillation or column chromatography alone or in combination.

The presence or absence of impurities contained in the diethylenetriamine derivative, that is, the purity of the diethylenetriamine derivative, can be determined by general methods such as $^1$H-NMR measurement using a nuclear magnetic resonance apparatus, analysis by gas chromatography, thin layer chromatography, and analysis by liquid chromatography. From the viewpoint of the purity measurement of the diethylenetriamine derivative, analysis by liquid chromatography is preferred as a technique, and the column used is particularly preferably a reversed-phase column or a cation exchange column. The mobile phase to be used is not particularly limited as long as it can dissolve the diethylenetriamine derivative, and can be freely set according to the column to be used.

For example, the measurement conditions of the liquid chromatography may be the following conditions:

column: Asahipak ES-502C 7C
eluent: 20 mM disodium hydrogen phosphate aqueous solution/MeOH (4/6 vol ratio)

The purity of the diethylenetriamine derivative represented by the formula (5) is not less than 90%, preferably not less than 92%, most preferably not less than 95%. When the purity of the diethylenetriamine derivative is lower than 90%, through the addition reaction in step (A1) or step (A2), not less than 10% of a structure other than the target structure is introduced into X in the pH-responsive polymer represented by the formula (I) or the formula (3). When this pH-responsive polymer is used in the pharmaceutical field, the compound is treated as a separate compound from the main structure depending on its content. In this case, problems occur in that it is necessary to separately identify the compound, conduct various safety tests, and evaluate tolerance levels. Furthermore, since the content of the aforementioned formula (2) decreases, there is a possibility that the accumulation effect in tumor tissues due to pH response may be insufficient.

The amount of the diethylenetriamine derivative represented by the formula (5) is generally 2- to 10-fold amount, preferably 3- to 8-fold amount, most preferably 4- to 6-fold amount, in molar ratio, relative to m of the polymer represented by the aforementioned formula (32) or a polymer represented by the aforementioned formula (7).

When the amount is less than 2-fold amount, there is a risk that a structure in which the polymers are crosslinked by the diethylenetriamine derivative may be formed, or the addition rate of the diethylenetriamine derivative to the polymer may decrease. When the amount is more than 10-fold amount, the diethylenetriamine derivative not used for the reaction is wasted, and further, removal and purification of the diethylenetriamine derivative added in excess becomes difficult.

A catalyst can be used in this reaction and for example, a catalyst such as 2-hydroxypyridine, pyridine, triethylamine, or the like can be used.

The addition reaction can be performed in various solvents. The solvent is not particularly limited as long as it has no reactivity with the polymer represented by the aforementioned formula (32) or the polymer represented by the aforementioned formula (7) and the diethylenetriamine derivative represented by the formula (5). For example, various organic solvents such as tetrahydrofuran, 1,4-dioxane, toluene, acetonitrile, chloroform, N-methyl-2-pyrrolidone, N,N-dimethylformamide, and the like, and mixtures thereof can be mentioned. N-methyl-2-pyrrolidone, N,N-dimethylformamide, and the like, which are aprotic polar solvent, and 1,4-dioxane, tetrahydrofuran, which are ether solvents, are preferred from the aspect of polymer solubility and the reaction rate of addition reaction. Furthermore, from the aspect of enabling step (A2) and step (B2) performed in one pot, 1,4-dioxane and tetrahydrofuran, which are ether solvents, are most preferred.

The total amount of the solvent used in the addition reaction is 1.5- to 70-fold amount, preferably 1.8- to 50-fold amount, most preferably 2- to 30-fold amount, in volume ratio, relative to the polymer represented by the aforementioned formula (32) or the polymer represented by the aforementioned formula (7).

The reaction temperature during the addition reaction varies depending on the solvent to be used, and is generally 0 to 100°C. The reaction time at this time varies depending on the conditions such as reaction temperature and the like, and is generally preferably 3 hr to 72 hr.

In step (A1), an amide bond is formed by an addition reaction between the polymer represented by the formula (32) and the primary amino group of the diethylenetriamine derivative represented by the formula (5), whereby a polymer represented by the formula (33) is obtained.

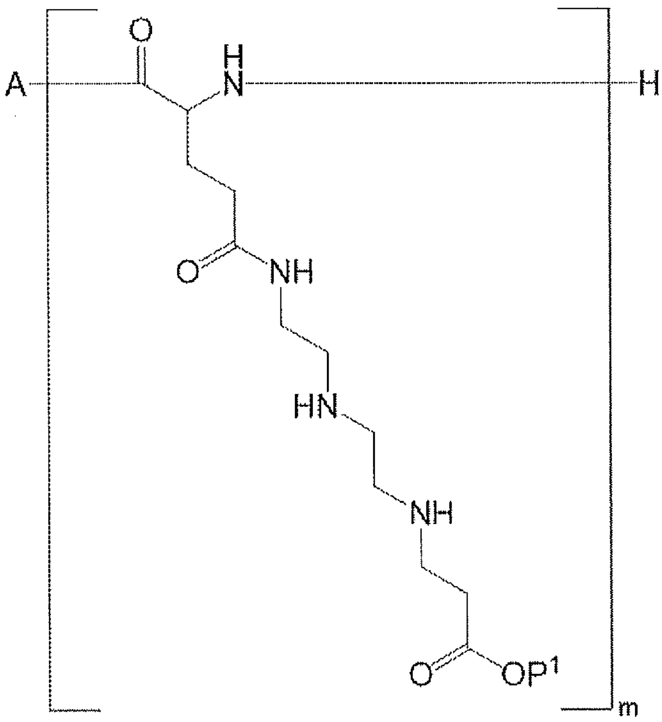

・・・(33)

In step (A2), an amide bond is formed by an addition reaction between the polymer represented by the formula (7) and the primary amino group of the diethylenetriamine derivative represented by the formula (5), whereby a polymer represented by the formula (8) is obtained.

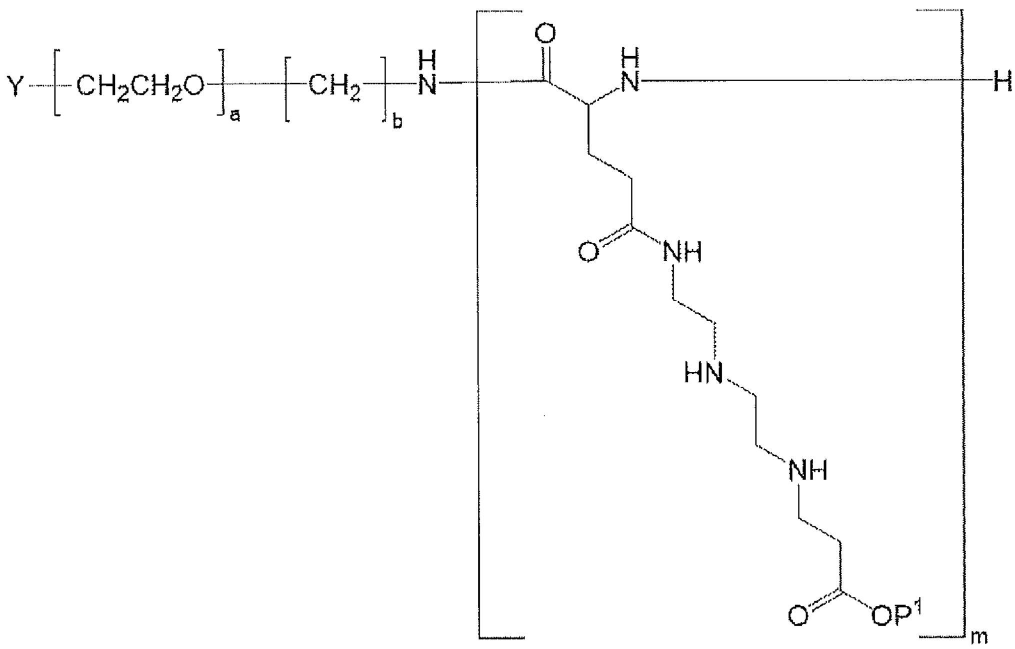

・・・(8)

The polymer obtained in step (A1) or step (A2) may be used as it is unpurified, or may be isolated and purified by treatments such as reprecipitation, gel filtration chromatography, membrane purification and the like.

[Explanation of step (B1) and step (B2)]

Step (B1) is a step of obtaining a solution containing a pH-responsive polymer represented by the aforementioned formula (I-1) by deprotecting a polymer represented by the aforementioned formula (33) obtained in the aforementioned step (A1) .

In addition, step (B2) is a step of obtaining a solution containing a pH-responsive polymer represented by the aforementioned formula (3) by deprotecting a polymer represented by the aforementioned formula (8) obtained in the aforementioned step (A2).

As the deprotection method, known methods can be used according to $P^1$ of the diethylenetriamine derivative introduced in step (A1) or step (A2). For example, when $P^1$ is a t-butyl group, it is deprotected by hydrolysis under acidic conditions to be a carboxy group.

For example, the case wherein $P^1$ in the polymer represented by the aforementioned formula (33) or in the aforementioned formula (8) is a t-butyl group is described. In this case, acid hydrolysis proceeds under acidic conditions to form a carboxy group.

The acid used in the acid hydrolysis reaction is not particularly limited as long as it is an acid. Inorganic acids are preferred, aqueous hydrochloric acid solution, nitric acid aqueous solution, and phosphoric acid aqueous solution are more preferred, and aqueous hydrochloric acid solution is most preferred.

The concentration of the acid varies depending on the type of acid. For example, in the case of an aqueous solution of hydrochloric acid, it is generally 1 to 11.2N, preferably 1.5 to 11.2N, and most preferably 2 to 11.2N.

When it is thinner than 1N, a longer time is required to complete the acid hydrolysis reaction.

Acid hydrolysis reaction may be performed by mixing with other solvents, and solvents that are miscible with aqueous hydrochloric acid solution are preferred. Examples of the mixed solvent to be used in the acid hydrolysis reaction include aqueous hydrochloric acid solution-THF and aqueous hydrochloric acid solution-1,4-dioxane.

Furthermore, step (A1) or step (A2) and step (B1) or step (B2) can be reacted in one pot. In such a case, an acidic solution may be added to the reaction solution after the completion of step (A1) or step (A2), or an acidic solution may be added to the reaction solution after concentration under reduced pressure after the completion of step (A1) or step (A2).

The total amount of the solvent used in the acid hydrolysis is 3- to 100-fold amount, preferably 4- to 75-fold amount, most preferably 5- to 50-fold amount, in volume ratio, relative to the polymer represented by the formula (33) or the polymer represented by the formula (8). When a mixed solvent is used, the ratio is not particularly limited, and various compounds represented by the formula (8) are preferably dissolved in an amount of an organic solvent to be used.

The reaction temperature during the acid hydrolysis is generally 20 to 80°C, preferably 25 to 60°C. The reaction time at this time varies depending on the conditions such as reaction temperature and the like, and is generally preferably 3 hr to 48 hr.

From the above, a solution containing the pH-responsive polymer represented by the aforementioned formula (I-1) or the pH-responsive polymer represented by the aforementioned formula (3) can be obtained.

[Explanation of step (C1) and step (C2)]

Step (C1) is a step of purifying the pH-responsive polymer represented by the aforementioned formula (I-1) obtained in the aforementioned step (B1) by crystallization or membrane purification.

Step (C2) is a step of purifying a solution containing the pH-responsive polymer represented by the aforementioned formula (3) obtained in the aforementioned step (B2) by crystallization or membrane purification.

A solution containing the pH-responsive polymer represented by the aforementioned formula (I-1) obtained in the aforementioned step (B1) or the pH-responsive polymer represented by the aforementioned formula (3) obtained in the aforementioned step (B2) can be purified by crystallization. For example, by adding the solution obtained in the aforementioned step (B1) or the aforementioned step (B2) to a large excess of a poor solvent of the polymer, such as 2-propanol, only the pH-responsive polymer represented by the aforementioned formula (I-1) or the pH-responsive polymer represented by the aforementioned formula (3) is precipitated as a solid, and other low molecular weight impurities can be removed by filtration.

By vacuum drying the solid obtained by crystallization, the pH-responsive polymer represented by the aforementioned formula (I-1) or the pH-responsive polymer represented by the aforementioned formula (3) can be obtained.

Membrane purification of a solution containing the pH-responsive polymer represented by the aforementioned formula (I-1) obtained in the aforementioned step (B1) or the pH-responsive polymer represented by the aforementioned formula (3) obtained in the aforementioned step (B2) is possible. For example, other low-molecular-weight impurities can be removed by circulating the solution obtained in the aforementioned step (B1) or the aforementioned step (B2) through a membrane with a fractional molecular weight smaller than that of polymer while adding water.

As the membrane purification method, ultrafiltration and the like can be mentioned. For example, a membrane such as dialysis membrane, flat membrane, hollow fiber membrane, or the like can be used. Fractional molecular weight of various membranes is not limited as long as low molecular weight impurities can be removed and separation from polymer is possible. It is preferably smaller than the molecular weight of the desired pH-responsive polymer.

By drying under reduced pressure or freeze-drying an aqueous solution purified by the membrane purification

method, a pH-responsive polymer represented by the aforementioned formula (I-1) or a pH-responsive polymer represented by the aforementioned formula (3) can be obtained.

The pH-responsive polymer represented by the aforementioned formula (3) obtained in the present invention has an atomic group Y containing a functional group Y' capable of forming a covalent bond with a functional group present in a biofunctional molecule at the terminal thereof. The content percentage of this atomic group Y (ratio of the number of moles of Y per mole of the pH-responsive polymer represented by the aforementioned formula (3)) can be analyzed by performing a modification reaction on the functional group Y'.

For example, when a pH-responsive polymer represented by the above formula (3) that is generally hydrophilic is modified with a substituent that has hydrophobicity, peak separation is possible by liquid chromatography using a reversed-phase column or a gel filtration column that can recognize hydrophobicity. The content percentage of the pH-responsive polymer modified with a substituent having hydrophobicity can be calculated from the ratio of the obtained area values. This calculation result is the content percentage of the functional group Y', that is, the content percentage of the atomic group Y.

For example, when the pH-responsive polymer represented by the aforementioned formula (3) is modified with a substituent or fluorescent dye having a specific UV absorption wavelength, and the like, the amount of a pH-responsive polymer modified with a substituent or fluorescent dye having a specific UV absorption wavelength contained in the polymer can be calculated using an ultraviolet visible spectrophotometer or a fluorescence spectrophotometer.

By allocating this calculation result by the amount of pH-responsive polymer actually used and multiplying it by 100, the content percentage of the functional group Y', that is, the content percentage of the atomic group Y, can be calculated.

<u>(ii) Production method of pH-responsive polymer (I-2) (including pH-responsive polymer represented by the formula (3-1))</u>

The pH-responsive polymer (I-2) having a repeat unit represented by the aforementioned formula (1) is produced by performing the following step (A3), step (B3), and step (C3) in this order. Furthermore, among the pH-responsive polymers (I-2) having a repeat unit represented by the aforementioned formula (1), the pH-responsive polymer represented by the aforementioned formula (3-1) which is a structure preferable from the viewpoint of modifying biofunctional molecules can be produced by performing the following step (A4), step (B4), and step (C4) in this order.

[Explanation of step (A3) and step (A4)]

Step (A3) is a step of obtaining a polymer represented by the following formula (33-1) by reaction of a polymer represented by the aforementioned formula (32-1) (also referred to as polymer (32-1)) with a diethylenetriamine derivative represented by the aforementioned formula (5).

In addition, step (A4) is a step of obtaining a polymer represented by the following formula (8-1) by reaction of a polymer represented by the aforementioned formula (7-1) with a diethylenetriamine derivative represented by the aforementioned formula (5).

A polymer represented by the formula (32-1) may be a purchased commercially available product or synthesized by a known method.

Polymer (32-1) can be synthesized by protecting or converting the terminal amino group of the polymer represented by the aforementioned formula (32) (also referred to as polymer (32)). Known reactions can be used to protect or convert the terminal amino group.

For example, a polymer (32-1) in which $R^b$ is $-CO-CH_3$ can be obtained by reacting acetic anhydride as an electrophile with the terminal amino group of the polymer (32).

Also, for example, a polymer (32-1) in which $R^b$ is $-CO-(CH_2)_2-COOH$ can be obtained by reacting succinic anhydride as an electrophile with the terminal amino group of the polymer (32) .

The amount of the electrophile to be used is generally 2-to 10-fold amount, preferably 3- to 8-fold amount, most preferably 4- to 6-fold amount, in molar ratio, relative to the terminal amino group of the polymer (32).

In addition, a catalyst can be used in this reaction and for example, catalysts such as DMAP and the like can be used.

The reaction can be performed in various solvents. The solvent is not particularly limited as long as it can dissolve polymer (32) and has no reactivity with electrophile. For example, various organic solvents such as tetrahydrofuran, 1,4-dioxane, toluene, acetonitrile, dichloromethane, chloroform, N-methyl-2-pyrrolidone, N,N-dimethylformamide, and the like, and mixture thereof can be used.

The total amount of the solvent used in the reaction is 1.5- to 70-fold amount, preferably 1.8- to 50-fold amount, most preferably 2- to 30-fold amount, in volume ratio, relative to the polymer (32).

The reaction temperature during the reaction varies depending on the solvent to be used, and is generally 0 to 100°C. The reaction time at this time varies depending on the conditions such as reaction temperature and the like,

and is generally preferably 3 hr to 72 hr.

As a known method to obtain a polypeptide structure, polycondensation, ring opening polymerization, and the like can be mentioned. Those of ordinary skill in the art can perform step (A3) and step (A3) by appropriately determining reaction conditions and the like by reference to [Explanation of step (A1) and step (A2)] described in detail above for the production of the pH-responsive polymer (I-1).

[Explanation of step (B3) and step (B4)]

Step (B3) is a step of obtaining a solution containing a pH-responsive polymer represented by the aforementioned formula (I-2) by deprotecting a polymer represented by the aforementioned formula (33-1) obtained in the aforementioned step (A3).

In addition, step (B4) is a step of obtaining a solution containing a pH-responsive polymer represented by the aforementioned formula (3-1) by deprotecting a polymer represented by the aforementioned formula (8-1) obtained in the aforementioned step (A4).

Those of ordinary skill in the art can perform step (B3) and step (B4) by appropriately determining reaction conditions and the like by reference to [Explanation of step (B1) and step (B2)] described in detail above for the production of the pH-responsive polymer (I-1).

[Explanation of step (C3) and step (C4)]

Step (C3) is a step of purifying the pH-responsive polymer represented by the aforementioned formula (I-2) obtained in the aforementioned step (B3) by crystallization or membrane purification.

Step (C4) is a step of purifying a solution containing the pH-responsive polymer represented by the aforementioned formula (3-1) obtained in the aforementioned step (B4) by crystallization or membrane purification.

Those of ordinary skill in the art can perform step (C3) and step (C4) by appropriately determining purification conditions and the like by reference to [Explanation of step (C1) and step (C2)] described in detail above for the production of the pH-responsive polymer (I-1).

In addition, in the aforementioned formula (I), a pH-responsive polymer represented by the formula (34) or (34-1), wherein A is a group represented by the formula (34-a), can be synthesized by those of ordinary skill in the art by using a commercially available product or one synthesized by a known method according to the structure thereof and appropriately determining starting materials, reaction conditions, and the like by referring to production method of the pH-responsive polymer (I-1)/(I-2) described in detailed above.

[Example]

The present invention is explained in more detail in the following by referring to Examples and the like; however, the present invention is not limited to the following Examples and the like.

[Measurement of molecular weight by gel filtration chromatography (GPC) analysis]

Trade name "Prominence" manufactured by Shimadzu Corporation or trade name "Ianfinity Lab 2D-LC" manufactured by Agilent Technologies (hereinafter Agilent) was used.

The measurement of poly(β-benzyl L-glutamic acid) (hereinafter to be abbreviated as pBLG) was performed under conditions of column: PL gel (trade name "MIaXED-D") (two columns combined) manufactured by Agilent, column temperature: 40°C, sample concentration: 0.2 wt%, injection volume: 100 μL, eluent: 10 mM LiBr-added N-methyl-2-pyrrolidone, flow rate: 0.6 ml/min, detector: refractive index detector (RIa), standard: polymethyl methacrylate.

The measurement of poly(glutamic acid diethylenetriamine carboxylic acid) (hereinafter to be abbreviated as pGlu (DET-Car)) was performed under conditions of column: two kinds of TSK gel manufactured by Tosoh Corporation (trade name "TSKgel G3000$PW_{XL}$" and trade name "TSKgel G5000$PW_{XL}$") combined, column temperature: 40°C, sample concentration: 0.2 wt%, injection volume: 100 μL, eluent: 10 mM HEPES buffer (pH 7.4) added with NaCl to 500 mM, flow rate: 0.4 ml/min, detector: refractive index detector (RIa), standard: polyethylene glycol.

[Production Example 1] Synthesis of N-(2-(2-aminoethylamino)ethyl)-3-aminopropionic acid t-butyl ester (DET-Car tBu, compound 3))

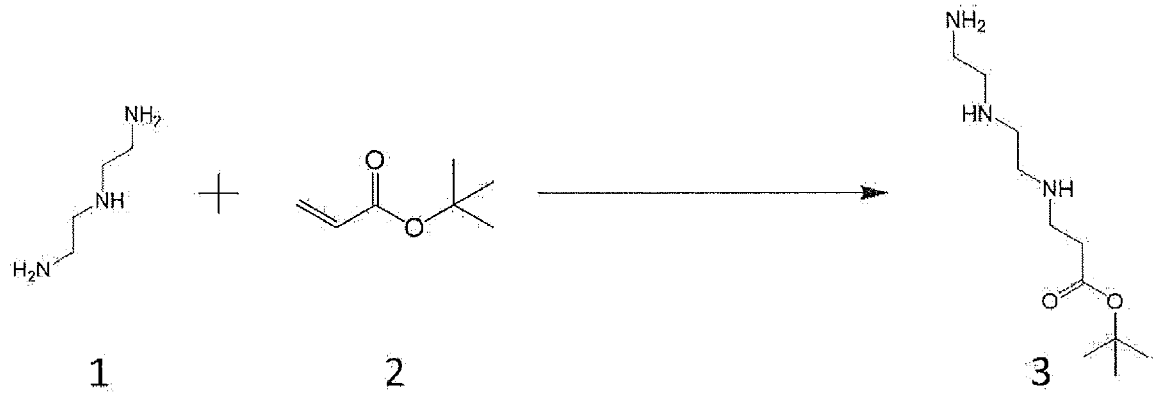

1 2 3

474.9 g of diethylenetriamine (hereinafter to be abbreviated as DET, compound 1) was dissolved in 500 mL of methanol under ice-cooling, and separately, 59 g of acrylic acid t-butyl ester (compound 2) was dissolved in 270 mL of methanol. To the DET solution under stirring, the acrylic acid t-butyl ester solution was added dropwise over 3 hr at 15-25°C.

After the completion of the dropwise addition, the mixture was stirred at 15-25°C for 1 hr and evaporated under reduced pressure after stirring to obtain a yellow transparent oil (109.7 g).

The obtained oil was subjected to column purification using a silica gel column to obtain DET-Car tBu (compound 3) as a colorless transparent oil (66.0 g). Liquid chromatography analysis results confirmed a purity of 95%. $^1$H NMR(MeOD 400MHz):δ 2.60-2.85(m,10H),2.42(t,2H),1.44(s,9H). ESIa-MS:calcd for $C_{11}H_{26}N_3O2^+[M+H^+]$ :232.2020; found 232.1995.

[Production Example 2] Synthesis of AZ-pBLG60 (compound 6)

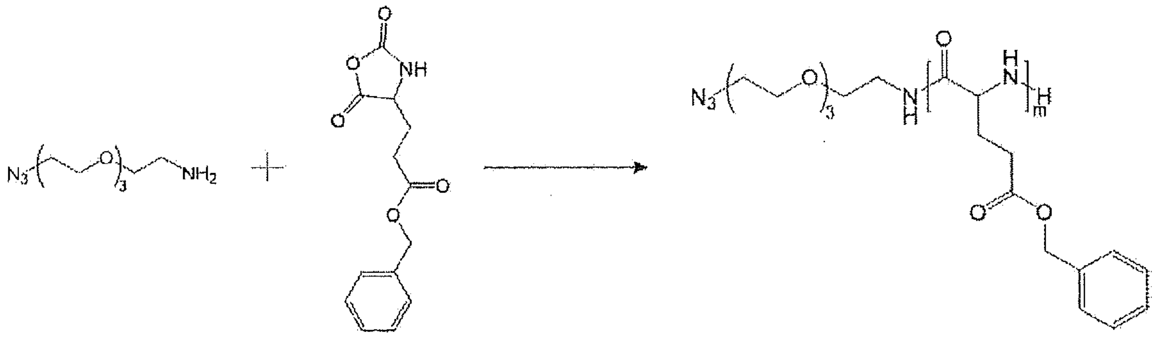

4 5 6

39.8 g of BLG-N-carboxyanhydride (BLG-NCA, compound 5) was dissolved under a nitrogen atmosphere in 200 mL of N,N-dimethylformamide (DMF), and 200 mL of dichloromethane (DCM) was further added.

To the obtained solution was added 308 mg of 11-azido-3,6,9-trioxaundecane-1-amine (compound 4), and the mixture was stirred under a nitrogen atmosphere for 9 hr at 30°C. The completion of the reaction was confirmed by the disappearance of the peak adjacent to amide (-NH-CH(CO-)-$CH_2$-), δ=4.35-4.60 ppm) of compound 5 by $^1$H-NMR measurement in a deuterated DMSO solvent at 25°C. DCM in the reaction solution was evaporated at room temperature under reduced pressure, and then 280 mL of MeOH and 280 mL of ion exchange water were added while stirring the reaction solution. The resultant product was reprecipitated and collected, washed with 140 mL of MeOH, and dried under reduced pressure to obtain a white solid. To this solid was added 120 mL of EtOH, pulverized, stirred, washed, collected, and dried under reduced pressure to obtain AZ-pBLG60 (compound 6) as a white powder (31.4 g).

The object product (10 mg) was dissolved in a deuterated dimethyl sulfoxide (DMSO) solvent (1.0 mL) added with trimethylsilane (TMS) and using the sample, the structure was confirmed by $^1$H-NMR analysis, and it was confirmed to be AZ-pBLG60 (compound 6). In addition, the molecular weight was calculated by size-exclusion chromatography (SEC) analysis, and it was confirmed to be Mn=19,000, Mw=22,100, PDIa=1.16. $^1$H NMR(deuterated DMSO 400MHz):δ 7.00-7.60(m,degree of polymerization ×5H),4.80-5.30(m,degree of polymerization ×2H),3.75-4.40(m,degree of polymerization ×1H),3.00-3.65(m,16H),1.55-2.70(m,degree of polymerization ×4H).

[Example 1] (Synthesis of AZ-pGlu(DET-Car)60 (compound 7, m=61 in the formula (3)), when step (C2) is hollow fiber membrane purification)

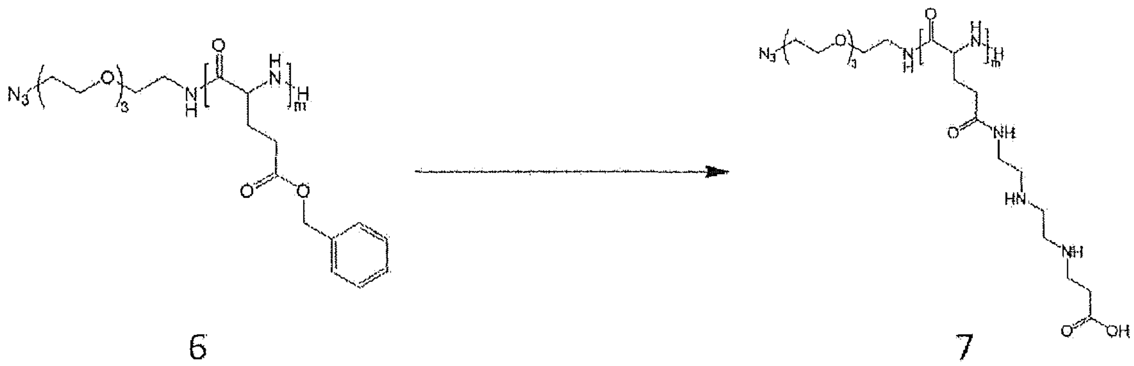

6 7

Step (A2)

154 mL of THF was added to 30.8 g of AZ-pBLG60 synthesized in Production Example 2, 39.9 g of 2-hydroxypyridine, and 161.6 g of DET-Car tBu (compound 3) synthesized in Production Example 1 and they were uniformly dissolved. The mixture was reacted at 50°C for 26 hr, and the reaction was discontinued. The completion of the reaction was confirmed by the disappearance of the benzyl proton peak ($CH_2$-$C_6H_5$, δ=5.02 ppm) in the pBLG side chain by $^1$H-NMR measurement in a deuterated DMSO solvent at 25°C.

Step (B2)

The mixture was evaporated under reduced pressure to give a yellow oily solution and 272.7 g of 11.2N hydrochloric acid solution was added dropwise. After reacting at 30°C for 13 hr, the reaction was discontinued and a pale-brown transparent solution was recovered. The completion of the reaction was confirmed by the disappearance of the tBu proton peak (C-$(CH_3)_3$, 5=1.45 ppm) at the terminal Car tBu in the side chain by $^1$H-NMR measurement in an aqueous deuterium chloride solvent at 25°C.

Step (C2)

To this solution was added 5N sodium hydroxide solution (255.3 g) to adjust pH to 3-4, and hollow fiber membrane purification using ion exchange water (fractional molecular weight: 5 kD) and freeze-drying were performed to obtain AZ-pGlu(DET-Car)60 (compound 7) as a white yellow powder (30.3 g).
To 0.65% deuterium chloride deuterium oxide solution was added trimethylsilyl propionic acid (TMSP). To the object product (10 mg) was added the above-mentioned deuterated solvent (1.0 mL). Using the resulting dissolved sample, the structure was confirmed by $^1$H-NMR analysis, and it was confirmed to be AZ-pGlu(DET-Car)60.
In addition, the molecular weight was calculated by SEC analysis, and it was confirmed to be Mn=17,500, Mw=19,300, PDI=1.10 at pH 7.4.
$^1$H NMR(deuterium chloride +deuterium oxide 400MHz):δ 4.30-4.50(m,degree of polymerization ×1H),3.20-3.85(m,degree of polymerization ×10H+16H),2.85-3.00(t,degree of polymerization ×2H),2.35-2.55(m,degree of polymerization ×2H),1.90-2.25(m, d,degree of polymerization ×2H).
In the following, a specific calculation method for AZ-pGlu(DET-Car)60 is recited as one embodiment.

(Calculation of m in the formula (3))

The m described in the formula (3) is the degree of polymerization of the pH-responsive polymer calculated by SEC analysis under the pH 7.4 condition. That is, the degree of polymerization m is calculated to be equivalent to 61 from Mn at pH 7.4 and the molecular weight of the repeat unit (286).

(Calculation of side chain purity index Q1)

A peak derived from a trimethyl group of trimethylsilyl propanoic acid (TMSP), which is the internal standard, is set to 0 ppm, a straight line connecting -1.0 ppm to 9.0 ppm is set as a base L1, the area of a peak detected between 2.85 ppm and 3.10 ppm is set as peak A1, the peak is divided by drawing a perpendicular line from the 2.95 ppm point on the base L1, the area of a peak detected between 2.85 ppm and 3.10 ppm is set as areaP1, and a content percentage of the desired structure represented by the aforementioned formula (2), namely, side chain purity index Q1, was calculated from formula (F1): (areaP1/areaA1).

Fig. 1 shows an example of each element required for calculation in the $^1$H-NMR chart of the polymer of Example 1, and Fig. 2 shows an enlarged view of areaA1 and areaP1.

In the case of the polymer of Example 1, as shown in Fig. 2, areaA1 and areaP1 were 2.026 and 2.000, respectively. Therefrom it was calculated that Q1=2.000/2.026=0.987, and it was confirmed that Q1≥0.90 was satisfied.

(Content percentage of repeat unit represented by the aforementioned formula (1))

In the case of AZ-pGlu(DET-Car) 60 obtained in Example 1, the protecting group $P^2$ for the carboxy group of polyglutamic acid is a benzyl group, and the protecting group $P^1$ for the carboxy group of the diethylenetriamine derivative is a t-butyl group. The content percentage of the repeat unit represented by the aforementioned formula (1) can be calculated by $^1$H-NMR analysis. A specific example of Example 1 is shown below.

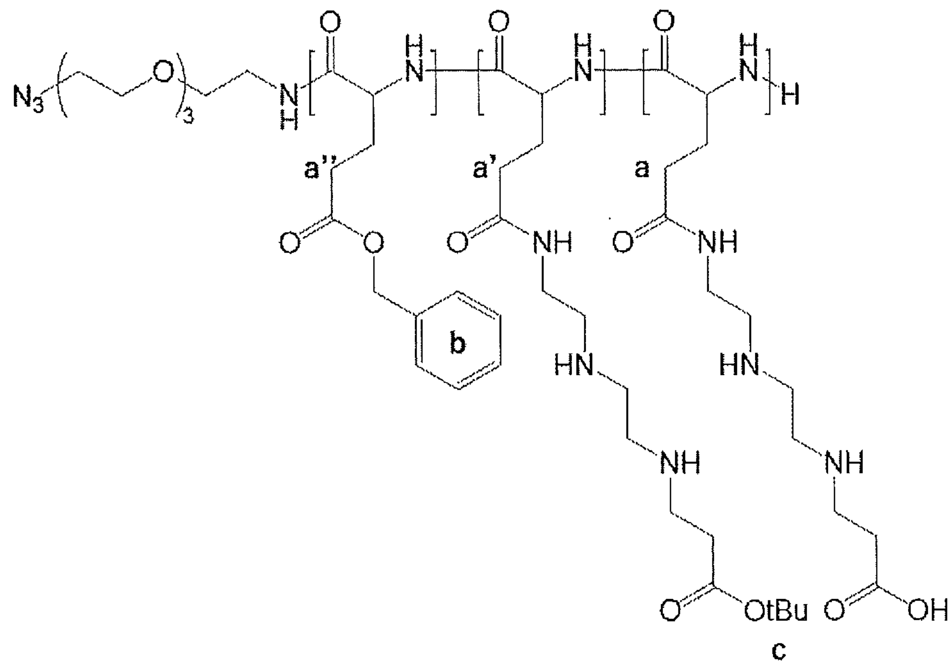

The peak (δ=2.42 ppm) derived from methylene of a+a'+a" shown in the above Figure is set as the standard 2 proton for the integral value, each peak integral value of peak b (δ=7.00-7.50 ppm) derived from aromatic ring and peak c (δ=1.45 ppm) derived from tBu was divided by each proton number, whereby the content ratios of the repeat unit expressed by the aforementioned above formula (4), the repeat unit expressed by the aforementioned formula (6), and the repeat unit expressed by the aforementioned formula (1) were calculated. The aforementioned formula (4):the aforementioned formula (6):the aforementioned formula (1)=(b peak integral value)/5:(c peak integral value)/9:1-(b peak integral value)/5-(c peak integral value)/9=0.011:0.001:0.988 was calculated as, and it was confirmed that the content percentage of the repeat unit represented by the aforementioned formula (1) satisfied not less than 90%.

(Measurement of content percentage of Y)

After reacting Cy5-DBCO (manufactured by Click Chemistry Tools) with a 10 mg/mL aqueous solution of AZ-pGlu (DET-Car) 60, excess fluorescent reagent was removed with a desalting column (PD-10, manufactured by Cytiva) to give a polymer modified with Cy5 at the terminal. The polymer was dissolved in ion-exchange water, and the absorbance was measured using an ultraviolet-visible spectrophotometer (650 nm). The amount of Cy5-modified polymer calculated

from the calibration curve prepared with Cy5-DBCO was divided by the actually dissolved polymer and multiplied by 100 to calculate the content percentage of Y. The calculated value was 85%.
Hereinafter the final target polymer of each Example is sometimes referred to as the polymer of Example O. As an example, AZ-pGlu(DET-Car)60 synthesized in Example 1 is the polymer of Example 1.

[Example 2] (In step (A2), reaction solvent is THF)

0.1 g of AZ-pBLG60 (compound 6) synthesized in Production Example 2, 0.26 g of 2-hydroxypyridine, and 1.05 g of DET-Car tBu (compound 3) synthesized in Production Example 1 were added to 0.5 mL of THF and uniformly dissolved. The mixture was reacted at 30°C for 48 hr, and the reaction was discontinued. The progression of the reaction was confirmed by the decrease in the benzyl proton peak ($CH_2$-$C_6H_5$, $\delta$=5.02 ppm) in the pBLG side chain by $^1$H-NMR measurement in a deuterated DMSO solvent at 25°C.

[Example 3] (In step (A2), reaction solvent is NMP)

A reaction similar to that in Example 2 was performed using 0.25 mL of N-methyl-2-pyrrolidone (NMP) instead of 0.5 mL of THF.

[Example 4] (In step (A2), reaction solvent is chloroform)

A reaction similar to that in Example 2 was performed using 0.5 mL of chloroform instead of 0.5 mL of THF.

[Example 5] (Synthesis of AZ-pGlu(DET-Car)60 (compound 7, in the formula (3), m=63), when step (C2) is crystallization purification)

Step (A2) and step (B2) were performed in the same manner as in Example 1. The reaction solution in which 0.11 g of AZ-pGlu(DET-Car)60 (compound 7) obtained in step (B2) was dissolved was added dropwise to 24 mL of 2-propanol (IaPA) for crystallization purification.
The precipitated solid was collected by filtration, uniformly dissolved again in 0.36 mL of ion exchange water. The solution was added dropwise to 24 mL of IaPA for crystallization purification. The precipitated solid was collected by filtration and dried under reduced pressure to obtain AZ-pGlu(DET-Car)60 (compound 7) as a white yellow powder (0.09 g).
By a method similar to that in Example 1, the structure was confirmed by $^1$H-NMR analysis, and it was confirmed to be AZ-pGlu(DET-Car)60.
In addition, the molecular weight was calculated by SEC analysis, and it was confirmed to be Mn=18,000, Mw=20,900, PDIa=1.16 at pH 7.4. The degree of polymerization m was calculated to be equivalent to 63 from Mn at pH 7.4 and the molecular weight of the repeat unit (286).
$^1$H NMR(deuterium chloride +deuterium oxide 400MHz):$\delta$ 4.30-4.50(m,degree of polymerization $\times$1H), 3.20-3.85(m,degree of polymerization $\times$10H+16H),2.85-3.00(t,degree of polymerization $\times$2H),2.35-2.55(m,degree of polymerization $\times$2H),1.90-2.25(m, d,degree of polymerization $\times$2H).

(Side chain purity index Q1 and content percentage Q2 of repeat unit represented by the aforementioned formula (1))

The side chain purity index Q1 was calculated as 2.000/2.021=0.990, and it was confirmed to satisfy Q1$\geq$0.90.
By a method similar to that in Example 1, calculation was performed, the content ratio of each repeat unit was calculated as the aforementioned formula (4):the aforementioned formula (6):the aforementioned formula (1)=0.021:0.025:0.954, and it was confirmed that the content percentage Q2 of the repeat unit represented by the aforementioned formula (1) satisfies not less than 90%.

(Measurement of content percentage of Y)

By a method similar to that in Example 1, the content percentage was calculated as 86%.

[Comparative Example 1] (Synthesis of AZ-pGlu(DET-3Car) (compound 9))

10.0 g of compound 5 was dissolved in 50 mL of DMF under an argon atmosphere, and 150 mL of DCM was further added.
To the obtained solution was added 76.7 mg of compound 4, and the mixture was stirred under an argon

atmosphere for 2 days at room temperature. Successively, the reaction solution was poured into an excess amount of diethyl ether. The resultant product was reprecipitated, collected, and dried under reduced pressure to obtain AZ-pBLG60 (compound 6) as a white solid (7.8 g).

By a method similar to that in Production Example 2, the structure was confirmed by $^{1}$H-NMR analysis, and it was confirmed to be AZ-pBLG60(compound 6). In addition, the molecular weight was calculated by SEC analysis, and it was confirmed to be Mn=19,700, Mw=25,900, PDIa=1.31.

$^{1}$H NMR(deuterated DMSO 400MHz):$\delta$ 7.00-7.60(m,degree of polymerization $\times$5H),4.80-5.30(m,degree of polymerization $\times$2H),3.75-4.40(m,degree of polymerization $\times$1H),3.00-3.65(m,16H),1.55-2.70(m,degree of polymerization $\times$4H).

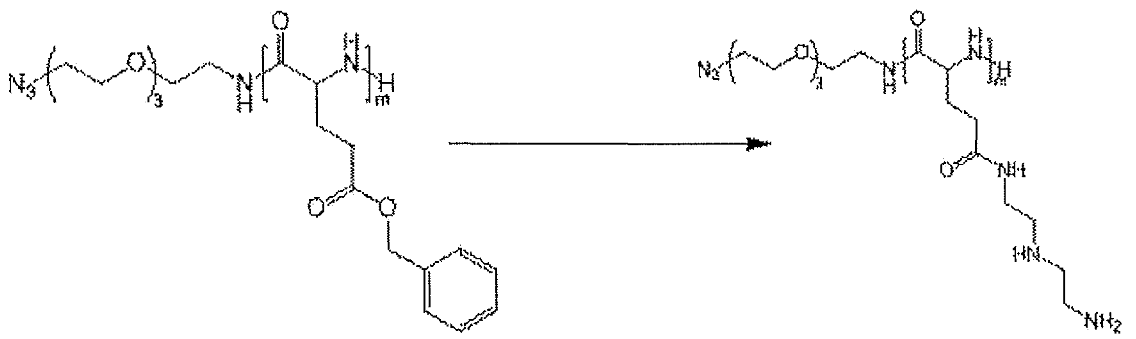

6 8

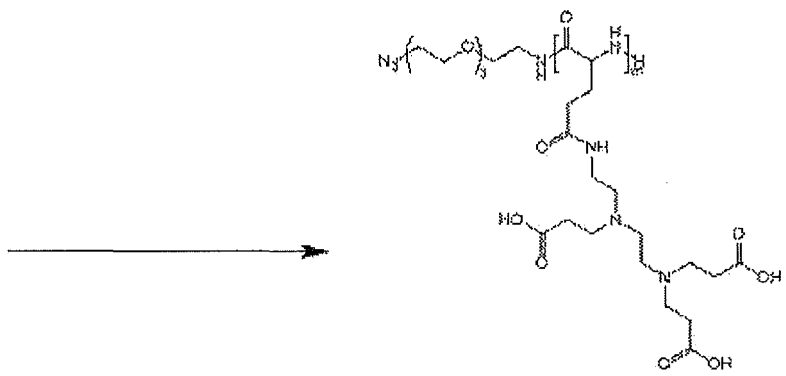

9

1 g of the obtained AZ-pBLG60 (compound 6) and 2.7 g of 2-hydroxypyridine were dissolved in 45 mL of NMP. To the obtained reaction solution was added 23.4 g of diethylenetriamine (DET), and the mixture was reacted. The obtained reaction solution was subjected to dialysis membrane purification (fractional molecular weight: 1 kD) using 0.3 M hydrochloric acid, and further subjected to dialysis membrane purification (fractional molecular weight: 1 kD) using ion exchange water. The obtained solution was evaporated under reduced pressure and dried to obtain AZ-pGlu(DET)60 (compound 8) as a white solid (0.92 g).

200 mg of the obtained compound 8 was dissolved in 60 mL of 0.5 M sodium carbonate aqueous solution, and 34.0 mL of acrylic acid was added. Using 5 M sodium hydroxide aqueous solution, the reaction solution was adjusted to pH 9-10, and stirred at room temperature for one week. The obtained reaction solution was subjected to dialysis membrane purification (fractional molecular weight: 1kD) using 0.01 M hydrochloric acid, and further subjected to dialysis membrane purification (fractional molecular weight: 1kD) using ion exchange water. The obtained solution was lyophilized to obtain AZ-pGlu(DET-3Car)60 (compound 9) as a milk-white solid.

By a method similar to that in Example 1, the structure was confirmed by $^{1}$H-NMR analysis, and it was confirmed to be AZ-pGlu(DET-3Car)60 (compound 9).

In addition, the molecular weight was calculated by SEC analysis, and it was confirmed to be Mn=17,000, Mw=20,400, PDIa=1.20 at pH 7.4. From Mn at pH 7.4 and the molecular weight of the repeat unit (286), the degree of polymerization m was calculated to be equivalent to 59.

$^{1}$H NMR(deuterium chloride +deuterium oxide 400MHz):$\delta$ 4.30-4.50(m,degree of polymerization $\times$1H),3.20-4.00(m,degree of polymerization $\times$10H+16H),2.95-3.10(t,degree of polymerization $\times$2H+6H),2.30-2.55(m,degree of polymerization ×2H),1.90-2.25(m, d,degree of polymerization ×2H).

The side chain purity index Q1 was calculated as 2.000/56.1=0.036, and it was confirmed that Q1≥0.90 was not met.

(Content percentage Q2 of the repeat unit represented by the aforementioned formula (1))

By a method similar to that in Example 1, calculation was performed, the content ratio of each repeat unit was calculated as the aforementioned formula (4):the aforementioned formula (6):the aforementioned formula (1)=0.001:0:0.999, and it was confirmed that the content percentage Q2 of the repeat unit represented by the aforementioned formula (1) satisfies not less than 90%.

(Measurement of content percentage of Y)

By a method similar to that in Example 1, the content percentage was calculated as 83%.

[Comparative Example 2]

By a method similar to that in Example 1 except that the reaction time in step (B2) was set to 6 hr, AZ-pGlu(DET-Car)60 (compound 7) was obtained as a white-yellow powder (30.5 g).

By a method similar to that in Example 1, the structure was confirmed by $^1$H-NMR analysis, and it was confirmed to be AZ-pGlu(DET-Car)60 (compound 7).

In addition, the molecular weight was calculated by SEC analysis, and it was confirmed to be Mn=17,700, Mw=21,500, PDIa=1.21 at pH 7.4. From Mn at pH 7.4 and the molecular weight of the repeat unit (286), the degree of polymerization m was calculated to be equivalent to 62.

$^1$H NMR(deuterium chloride +deuterium oxide 400MHz):δ 4.30-4.50(m,degree of polymerization ×1H),3.20-4.00(m,degree of polymerization ×10H+16H),2.85-3.10(t,degree of polymerization ×2H+α),2.30-2.55(m,degree of polymerization ×2H),1.90-2.25(m, d,degree of polymerization ×2H),1.35-1.55(s,degree of polymerization ×9H).

(Side chain purity index Q1 and the content percentage Q2 of the repeat unit represented by the aforementioned formula (1))

The side chain purity index Q1 was calculated as 2.000/2.045=0.978, and it was confirmed to satisfy Q1≥0.90.

By a method similar to that in Example 1, calculation was performed, the content ratio of each repeat unit was calculated as the aforementioned formula (4):the aforementioned formula (6):the aforementioned formula (1)=0.015:0.0478:0.507, and it was confirmed that the content percentage Q2 of the repeat unit represented by the aforementioned formula (1) does not satisfy not less than 90%.

(Measurement of content percentage of Y)

By a method similar to that in Example 1, the content percentage was calculated as 84%.

[Comparative Example 3]

By a method similar to that in Example 1 except that the reaction time in step (A2) was set to 13 hr, AZ-pGlu(DET-Car)60 (compound 7) was obtained as a white-yellow powder (31.0 g).

By a method similar to that in Example 1, the structure was confirmed by $^1$H-NMR analysis, and it was confirmed to be AZ-pGlu(DET-Car)60 (compound 7).

In addition, the molecular weight was calculated by SEC analysis, and it was confirmed to be Mn=17,700, Mw=21,700, PDIa=1.23 at pH 7.4. From Mn at pH 7.4 and the molecular weight of the repeat unit (286), the degree of polymerization m was calculated to be equivalent to 62.

$^1$H NMR(deuterium chloride +deuterium oxide 400MHz):δ 7.00-7.60(m,degree of polymerization ×5H),4.30-4.50(m,degree of polymerization ×1H),3.20-4.00(m,degree of polymerization ×10H+16H),2.85-3.10(t,degree of polymerization ×2H+α),2.30-2.55(m,degree of polymerization ×2H),1.90-2.25(m, d,degree of polymerization ×2H).

(Side chain purity index Q1 and the content percentage Q2 of the repeat unit represented by the aforementioned formula (1))

The side chain purity index Q1 was calculated as 2.000/2.031=0.985, and it was confirmed to satisfy Q1≥0.90.

By a method similar to that in Example 1, calculation was performed, the content ratio of each repeat unit was calculated as the aforementioned formula (4):the aforementioned formula (6):the aforementioned formula (1)=0.431:0.012:0.557, and it was confirmed that the content percentage Q2 of the repeat unit represented by the aforementioned formula (1) does not satisfy not less than 90%.

(Measurement of content percentage of Y)

By a method similar to that in Example 1, the content percentage was calculated as 85%.

[Production Example 3] Synthesis of AZ-pBLG30 (compound 6)

By a method similar to that in Production Example 2, 10.0 g of compound 5 was dissolved in 51 mL of DMF under a nitrogen atmosphere, 51 mL of DCM was further added.

To the obtained solution was added 256 mg of compound 4, and the mixture was stirred under a nitrogen atmosphere for 4 hr at 30°C. Dichloromethane in the reaction solution was evaporated under reduced pressure at room temperature, and then 70 mL of MeOH and 140 mL of ion exchange water were added while stirring the reaction solution. The resultant product was reprecipitated and collected, and dried under reduced pressure to obtain a white solid. The solid was dissolved in 28 mL of THF, 253 mL of EtOH was added to obtain a white precipitate. The precipitate was collected and dried under reduced pressure to obtain AZ-pBLG30 (compound 6) as a white powder (7.9 g).

By a method similar to that in Production Example 2, the structure was confirmed by $^1$H-NMR analysis, and it was confirmed to be AZ-pBLG30. In addition, the molecular weight was calculated by SEC analysis, and it was confirmed to be Mn=7,200, Mw=9,900, PDIa=1.38.

$^1$H NMR(deuterated DMSO 400MHz):δ 7.00-7.60(m,degree of polymerization ×5H),4.80-5.30(m,degree of polymerization ×2H),3.75-4.40(m,degree of polymerization ×1H),3.00-3.65(m,16H),1.55-2.70(m,degree of polymerization ×4H).

[Example 6] (Synthesis of AZ-pGlu(DET-Car)30 (compound 7, in the formula (3), m=32), step (C2) is flat membrane purification)

Step (A2)

By a method similar to that in Example 1, 18 mL of THF was added to 3.5 g of AZ-pBLG30 (compound 6) synthesized in Production Example 3, 4.5 g of 2-hydroxypyridine, and 18.4 g of DET-Car tBu(compound 3) synthesized in Production Example 1 and they were uniformly dissolved. The mixture was reacted at 50°C for 21 hr, and the reaction was discontinued.

Step (B2)

The mixture was evaporated under reduced pressure to give a yellow oily solution and 53.9 g of 6N hydrochloric acid solution was added dropwise. After reacting at 30°C for 15 hr, the reaction was discontinued and a pale-brown transparent solution was recovered.

Step (C2)

To this solution was added 5N sodium hydroxide solution (29.0 g) to adjust pH to 3-4, and flat membrane purification using ion exchange water (fractional molecular weight: 1 kD) and freeze-drying were performed to obtain AZ-pGlu(DET-Car)30 (compound 7) as a white yellow powder (3.8 g).

By a method similar to that in Example 1, the structure was confirmed by $^1$H-NMR analysis, and it was confirmed to be AZ-pGlu(DET-Car)30 (compound 7).

In addition, the molecular weight was calculated by SEC analysis, and it was confirmed to be Mn=9,100, Mw=11,400, PDIa=1.25 at pH 7.4. The degree of polymerization m was calculated to be equivalent to 32 from Mn at pH 7.4 and the molecular weight of the repeat unit (286).

$^1$H NMR(deuterium chloride +deuterium oxide 400MHz):δ 4.30-4.50(m,degree of polymerization ×1H),3.20-3.85(m,degree of polymerization ×10H+16H),2.85-3.00(t,degree of polymerization ×2H),2.35-2.55(m,degree of polymerization ×2H),1.90-2.25(m, d,degree of polymerization ×2H).

(Side chain purity index Q1 and content percentage Q2 of repeat unit represented by the aforementioned formula (1))

The side chain purity index Q1 was calculated as 2.000/2.053=0.974, and it was confirmed to satisfy Q1≥0.90.

By a method similar to that in Example 1, calculation was performed, the content ratio of each repeat unit was calculated as the aforementioned formula (4):the aforementioned formula (6):the aforementioned formula (1)=0.005:0.030:0.965, and it was confirmed that the content percentage Q2 of the repeat unit represented by the aforementioned formula (1) satisfies not less than 90%.

(Measurement of content percentage of Y)

By a method similar to that in Example 1, the content percentage was calculated as 94%.

[Production Example 4] (Synthesis of AZ-PEG20k-pBLG120 (compound 11))

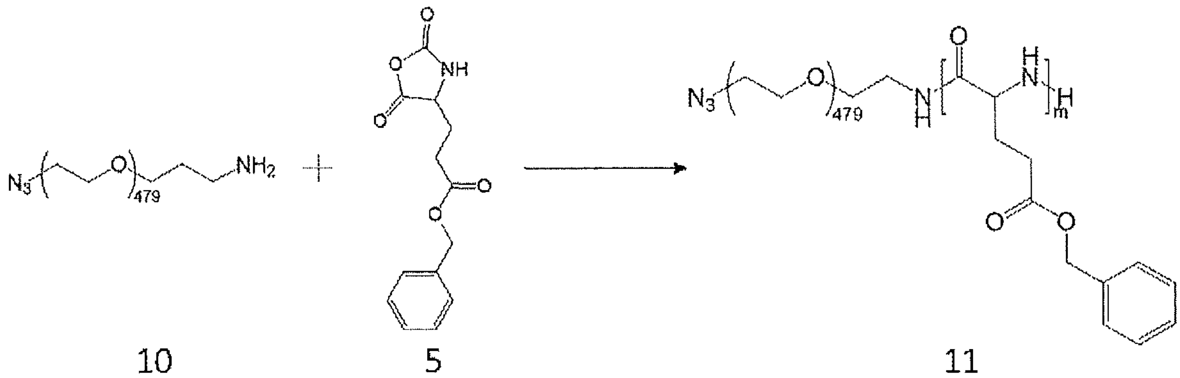

10 5 11

By a method similar to that in Production Example 2, 5.44 g of compound 5 was dissolved in 26 mL of DMF under a nitrogen atmosphere, and an additional 26 mL of DCM was added.

To the obtained solution was added 2.0 g of AZ-PEG20k-propylamine (compound 10, Mn=21,200, ethylene glycol repeat unit 479), and the mixture was stirred under a nitrogen atmosphere for 19 hr at 30°C. The reaction solution was evaporated under reduced pressure at 40°C, the precipitated viscose solid was washed with 100 mL of ion exchange water, and the supernatant liquid was discarded. Thereafter, 200 mL of IaPA was added to form a dispersion of the target product, and the solid was collected by filtration and dried under reduced pressure to obtain AZ-PEG20k-pBLG120 (Compound 11) as a white powder (5.5 g).

By a method similar to that in Production Example 2, the structure was confirmed by $^1$H-NMR analysis, and it was confirmed to be AZ-PEG20k-pBLG (compound 11).

In addition, the molecular weight was calculated by SEC analysis, and it was confirmed to be Mn=58,600, Mw=67,400, PDIa=1.15.

$^1$H NMR(deuterated DMSO 400MHz):$\delta$ 7.00-7.60(m,degree of polymerization $\times$5H),4.80-5.30(m,degree of polymerization $\times$2H),3.75-4.40(m,degree of polymerization $\times$1H),3.20-3.70(m+t,1,919H),1.55-2.70(m,degree of polymerization $\times$4H).

[Example 7] (Synthesis of AZ-PEG20k-pGlu(DET-Car)120 (compound 12), in the formula (3), m=123), when step (C2) is dialysis membrane purification)

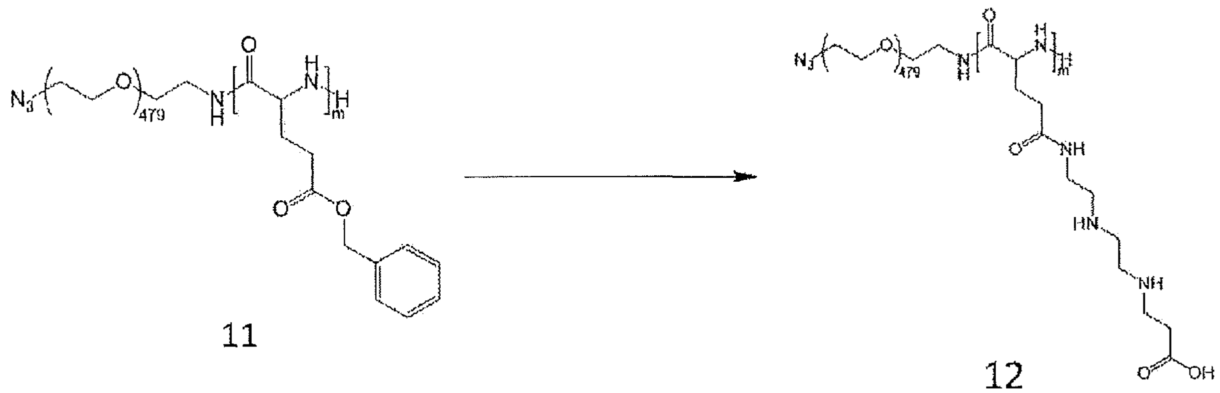

11

12

Step (A2)

By a method similar to that in Example 1, 1.7 g of AZ-PEG20k-pGlu(DET-Car)120 (compound 11) synthesized in Production Example 3, 2.2 g of 2-hydroxypyridine, and 9.2 g of DET-Car-tBu (compound 3) synthesized in Production Example 1 were added to 8.5 mL of THF and uniformly dissolved. The mixture was reacted at 50°C for 30 hr, and the reaction was discontinued.

Step (B2)

The mixture was evaporated under reduced pressure to give a yellow oily solution and 27.8 g of 6N hydrochloric acid solution was added dropwise. After reacting at 30°C for 15 hr, the reaction was discontinued and a pale-brown transparent solution was recovered.

Step (C2)

To this solution was added 5N sodium hydroxide solution (19 g) to adjust pH to 3-4, and dialysis membrane purification using ion exchange water (fractional molecular weight: 1 kD) and freeze-drying were performed to obtain AZ-PEG20k-pGlu(DET-Car)120 (compound 12) as a white yellow powder (1.0 g).

By a method similar to that in Example 1, the structure was confirmed by $^1H$-NMR analysis, and it was confirmed to be AZ-PEG20k-pGlu(DET-Car)120 (compound 12).

In addition, the molecular weight was calculated by SEC analysis, and it was confirmed to be Mn=56,400, Mw=65,600, PDIa=1.16 at pH 7.4. The degree of polymerization m was calculated to be equivalent to 123 from Mn at pH 7.4, Mn(21,200) of initiator, and the molecular weight of the repeat unit (286).

$^1H$ NMR(deuterium chloride +deuterium oxide 400MHz):$\delta$ 4.30-4.50(m,degree of polymerization $\times$1H),3.20-3.85(m,degree of polymerization $\times$10H+1,919H),2.85-3.00(t,degree of polymerization $\times$2H),2.35-2.55(m,degree of polymerization $\times$2H),1.90-2.25(m, d,degree of polymerization $\times$2H).

(Side chain purity index Q1 and the content percentage Q2 of the repeat unit represented by the aforementioned formula (1))

The side chain purity index Q1 was calculated as 2.000/2.007=0.997, and it was confirmed to satisfy Q1$\geq$0.90.

By a method similar to that in Example 1, calculation was performed, the content ratio of each repeat unit was calculated as the aforementioned formula (4):the aforementioned formula (6):the aforementioned formula (1)=0.012:0.019:0.969, and it was confirmed that the content percentage Q2 of the repeat unit represented by the aforementioned formula (1) satisfies not less than 90%.

(Measurement of content percentage of Y)

By a method similar to that in Example 1, the content percentage was calculated as 90%.

[Production Example 5] (Synthesis of SH-pBLG30 (compound 14))

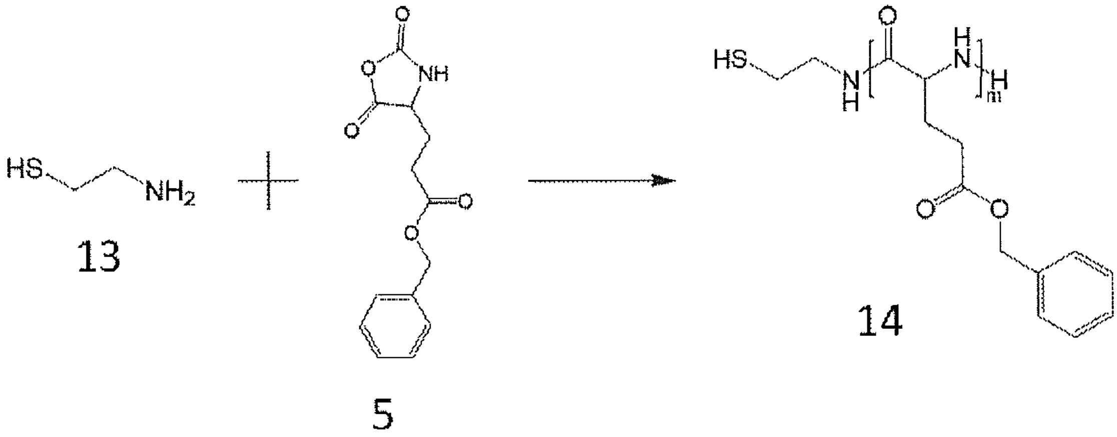

13

5

14

By a method similar to that in Production Example 2, 10.0 g of compound 5 was dissolved in 51 mL of DMF under a nitrogen atmosphere, 51 mL of DCM was further added.

To the obtained solution was added 90 mg of aminoethanethiol (compound 13), and the mixture was stirred under a nitrogen atmosphere for 4 hr at 30°C. Dichloromethane in the reaction solution was evaporated under reduced pressure at room temperature, and then 70 mL of MeOH and 140 mL of ion exchange water were added while stirring the reaction solution. The resultant product was reprecipitated and collected, and dried under reduced pressure to obtain a white solid. The solid was dissolved in 28 mL of THF, 253 mL of EtOH was added to obtain a white precipitate. The precipitate was collected and dried under reduced pressure to obtain SH-pBLG30 (compound 14) as a white powder (7.8 g).

By a method similar to that in Production Example 2, the structure was confirmed by $^1$H-NMR analysis, and it was confirmed to be SH-pBLG30. In addition, the molecular weight was calculated by SEC analysis, and it was confirmed to be Mn=7,600, Mw=10,600, PDIa=1.39.

$^1$H NMR(deuterated DMSO 400MHz):$\delta$ 7.00-7.60(m,degree of polymerization $\times$5H),4.80-5.30(m,degree of polymerization $\times$2H+1H),3.75-4.40(m,degree of polymerization $\times$1H),2.65-3.20(m,4H),1.55-2.65(m,degree of polymerization $\times$4H).

[Example 8] (SH-pGlu(DET-Car)30 (compound 15, in the formula (3), m=33), when step (C2) is dialysis membrane purification)

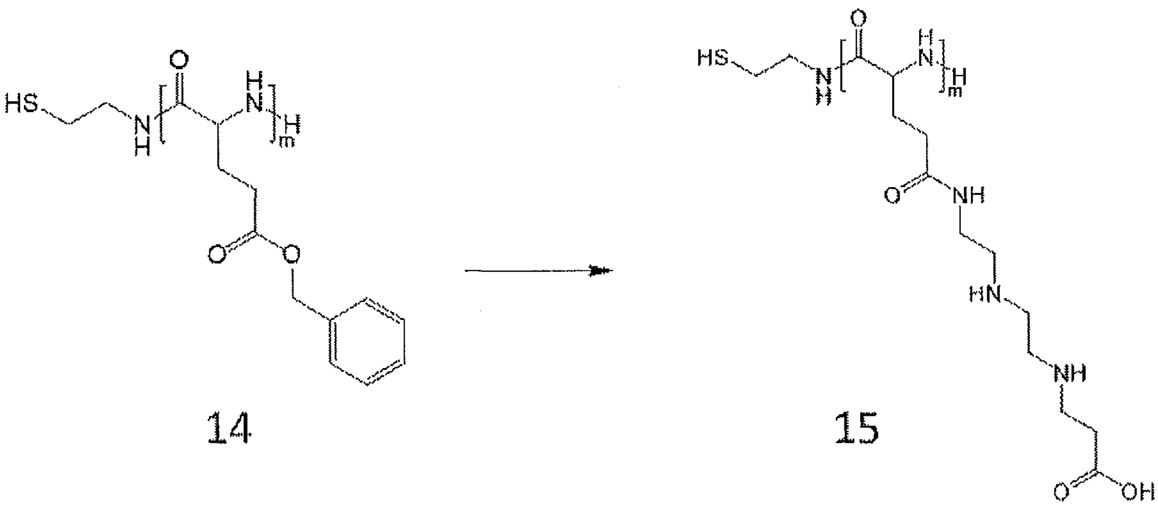

14

15

Step (A2)

18 mL of THF was added to 3.5 g of SH-pBLG (compound 14) synthesized in Production Example 5, 4.5 g of 2-hydroxypyridine, and 18.4 g of DET-Car tBu(compound 3) synthesized in Production Example 1 and they were uniformly

dissolved. The mixture was reacted at 50°C for 21 hr, and the reaction was discontinued.

Step (B2)

The mixture was evaporated under reduced pressure to give a yellow oily solution and 53.9 g of 6N hydrochloric acid solution was added dropwise. After reacting at 30°C for 15 hr, the reaction was discontinued and a pale-brown transparent solution was recovered.

Step (C2)

To this solution was added 5N sodium hydroxide solution (29.0 g) to adjust pH to 3-4, and dialysis purification using ion exchange water (fractional molecular weight: 1 kD) and freeze-drying were performed to obtain SH-pGlu(DET-Car)30 (compound 15) as a white yellow powder (3.8 g).

By a method similar to that in Example 1, the structure was confirmed by $^1$H-NMR analysis, and it was confirmed to be SH-pGlu(DET-Car)30 (compound 15).

In addition, the molecular weight was calculated by SEC analysis, and it was confirmed to be Mn=9,500, Mw=11,800, PDIa=1.24 at pH 7.4. The degree of polymerization m was calculated to be equivalent to 33 from Mn at pH 7.4 and the molecular weight of the repeat unit (286).

$^1$H NMR(deuterium chloride +deuterium oxide 400MHz):$\delta$ 5.00(s,1H),4.30-4.50(m,degree of polymerization $\times$1H),3.20-3.85(m,degree of polymerization $\times$10H+16H),2.65-3.00(t+m,degree of polymerization $\times$2H+4H),2.35-2.55(m,degree of polymerization $\times$2H),1.90-2.25(m, d,degree of polymerization $\times$2H).

(Side chain purity index Q1 and content percentage Q2 of repeat unit represented by the aforementioned formula (1))

The side chain purity index Q1 was calculated as 2.000/2.056=0.973, and it was confirmed to satisfy Q1$\geq$0.90.

By a method similar to that in Example 1, calculation was performed, the content ratio of each repeat unit was calculated as the aforementioned formula (4):the aforementioned formula (6):the aforementioned formula (1)=0.008:0.010:0.982, and it was confirmed that the content percentage Q2 of the repeat unit represented by the aforementioned formula (1) satisfies not less than 90%.

(Measurement of content percentage of Y)

By a method similar to that in Example 1 except that the fluorescence reagent was changed to Sulfo-Cyanine5 maleimide (manufactured by Lumiprobe), and the measurement wavelength of the ultraviolet visible spectrophotometer was changed to 646 nm, the content percentage was calculated as 89%.

[Production Example 6] (Synthesis of Alkyne-pBLG60 (compound 17))

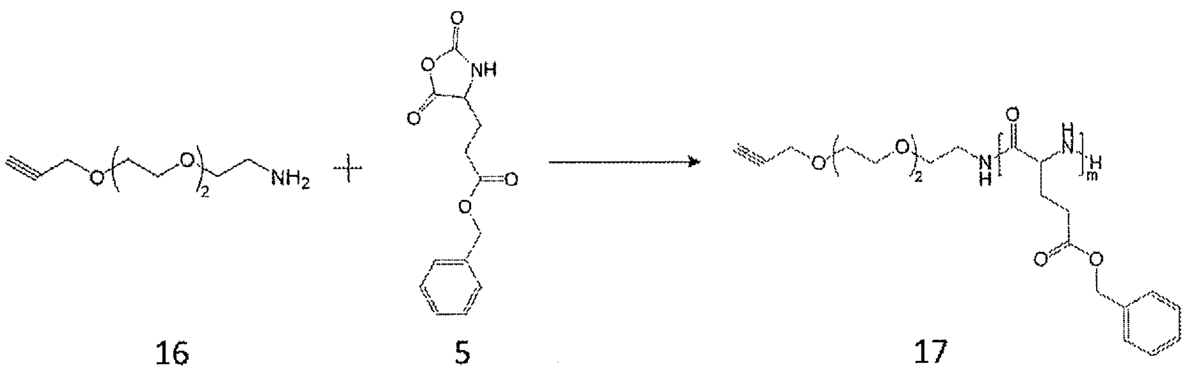

16 5 17

By a method similar to that in Production Example 2, 10.0 g of compound 5 was dissolved in 51 mL of DMF under a nitrogen atmosphere, 51 mL of DCM was further added.

To the obtained solution was added 66 mg of Propargyl-PEG3-amine (compound 16, manufactured by Broad-Pharm), and the mixture was stirred under a nitrogen atmosphere for 9 hr at 30°C. Dichloromethane in the reaction solution was evaporated under reduced pressure at room temperature, and then 70 mL of MeOH and 140 mL of ion

exchange water were added while stirring the reaction solution. The resultant product was reprecipitated and collected, and dried under reduced pressure to obtain a white solid. The solid was dissolved in 30 mL of THF, and the mixture was disrupted and stirred, collected, and dried under reduced pressure to obtain a white precipitate. The precipitate was collected and dried under reduced pressure to obtain Alkyne-pBLG60 (compound 17) as a white solid (7.9 g).

By a method similar to that in Production Example 2, the structure was confirmed by $^1$H-NMR analysis, and it was confirmed to be Alkyne-pBLG60 (compound 17). In addition, the molecular weight was calculated by size-exclusion chromatography (SEC) analysis, and it was confirmed to be Mn=18,200, Mw=21,200, PDIa=1.16.
$^1$H NMR(deuterated DMSO 400MHz):$\delta$ 7.00-7.60(m,degree of polymerization $\times$5H),4.80-5.30(m,degree of polymerization $\times$2H),3.75-4.40(m,degree of polymerization $\times$1H+2H),3.00-3.65(m,14H),1.55-2.70(m,degree of polymerization $\times$4H+1H).

[Example 9] (Synthesis of Alkyne-pGlu(DET-Car)60 (compound 18), in the formula (3), m=59), when step (C2) is dialysis membrane purification)

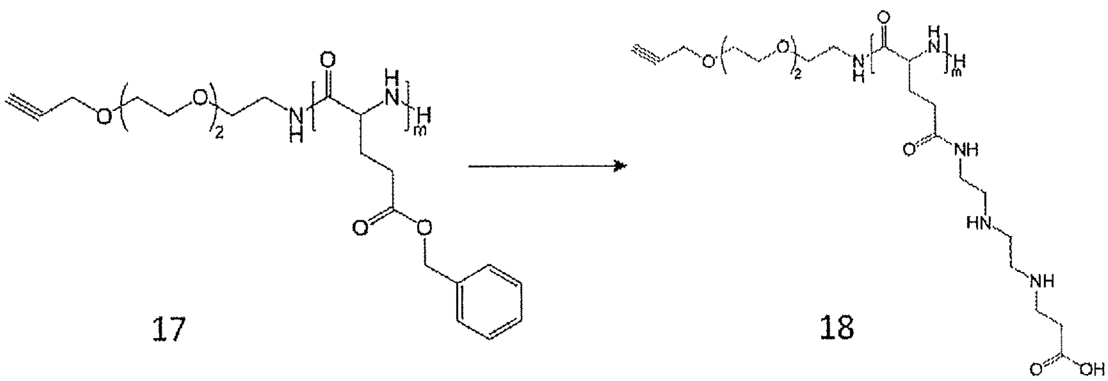

17

18

Step (A2)

By a method similar to that in Example 1, 35 mL of THF was added to 7.0 g of Alkyne-pBLG60 (compound 17) synthesized in Production Example 6, 9.1 g of 2-hydroxypyridine, and 36.7 g of DET-Car-tBu(compound 3) synthesized in Production Example 1 and they were uniformly dissolved. The mixture was reacted at 50°C for 30 hr, and the reaction was discontinued.

Step (B2)

The mixture was evaporated under reduced pressure to give a yellow oily solution and 106 g of 6N hydrochloric acid solution was added dropwise. After reacting at 30°C for 15 hr, the reaction was discontinued and a pale-brown transparent solution was recovered.

Step (C2)

To this solution was added 5N sodium hydroxide solution (58 g) to adjust pH to 3-4, and dialysis membrane purification using ion exchange water (fractional molecular weight: 1 kD) and freeze-drying were performed to obtain Alkyne-pGlu(DET-Car)60 (compound 18) as a white yellow powder (7.3 g).

By a method similar to that in Example 1, the structure was confirmed by $^1$H-NMR analysis, and it was confirmed to be Alkyne-pGlu(DET-Car)60 (compound 18).

In addition, the molecular weight was calculated by SEC analysis, and it was confirmed to be Mn=16,800, Mw=19,700, PDIa=1.17 at pH 7.4. The degree of polymerization m was calculated to be equivalent to 59 from Mn at pH 7.4 and the molecular weight of the repeat unit (286).
$^1$H NMR(deuterium chloride +deuterium oxide 400MHz):$\delta$ 4.30-4.50(m,degree of polymerization $\times$1H+2H),3.20-3.85(m,degree of polymerization $\times$10H+14H),2.85-3.00(t,degree of polymerization $\times$2H),2.35-2.55(m,degree of polymerization x2H+1H),1.90-2.25(m, d,degree of polymerization $\times$2H).

(Side chain purity index Q1 and content percentage Q2 of repeat unit represented by the aforementioned formula (1))

The side chain purity index Q1 was calculated as 2.000/2.018=0.991, and it was confirmed to satisfy Q1≥0.90.

By a method similar to that in Example 1, calculation was performed, the content ratio of each repeat unit was calculated as the aforementioned formula (4):the aforementioned formula (6):the aforementioned formula (1)=0.009:0.014:0.977, and it was confirmed that the content percentage Q2 of the repeat unit represented by the aforementioned formula (1) satisfies not less than 90%.

(Measurement of content percentage of Y)

By a method similar to that in Example 1, labeling was performed using Cy5-Azide (manufactured by Click Chemistry Tools) instead of Cy5-DBCO, sulfuric acid copper (Iala) (manufactured by Fujifilm Corporation) and ascorbic acid Na (manufactured by Tokyo Chemical Industry Co., Ltd.), and the content percentage was calculated as 84%.

[Production Example 7] (Synthesis of Butyl-pBLG60 (compound 20))

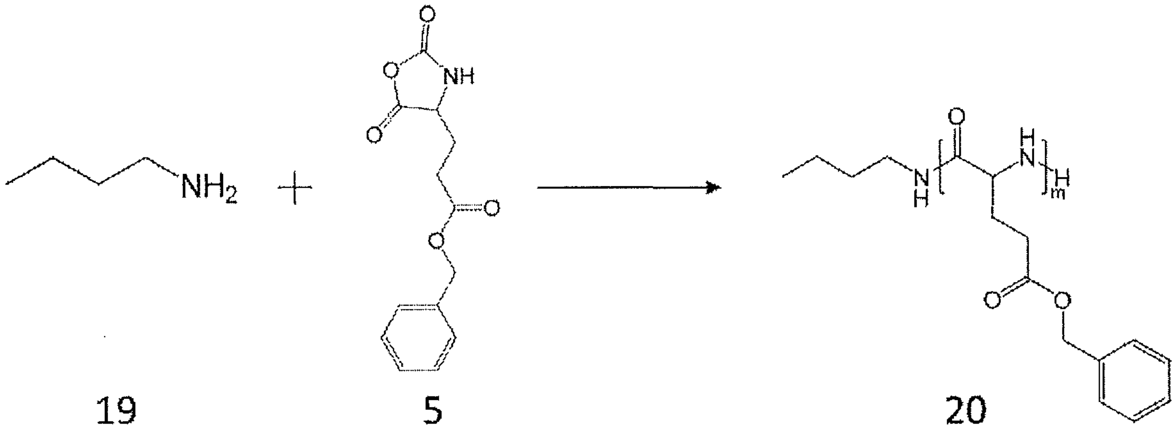

19 5 20

By a method similar to that in Production Example 2, 10.0 g of compound 5 was dissolved in 51 mL of DMF under a nitrogen atmosphere, 51 mL of DCM was further added.

To the obtained solution was added 25.7 mg of butylamine (compound 19), and the mixture was stirred under a nitrogen atmosphere for 9 hr at 30°C. Dichloromethane in the reaction solution was evaporated under reduced pressure at room temperature, and then 70 mL of MeOH and 140 mL of ion exchange water were added while stirring the reaction solution. The resultant product was reprecipitated and collected, and dried under reduced pressure to obtain a white solid. The solid was dissolved in 30 mL of EtOH, and the mixture was disrupted and stirred, collected, and dried under reduced pressure to obtain Butyl-pBLG60 (compound 20) as a white solid (7.8 g).

By a method similar to that in Production Example 2, the structure was confirmed by $^1$H-NMR analysis, and it was confirmed to be Butyl-pBLG (compound 20). In addition, the molecular weight was calculated by SEC analysis, and it was confirmed to be Mn=19,000, Mw=22,100, PDIa=1.17.

$^1$H NMR(deuterated DMSO 400MHz):δ 7.00-7.60(m,degree of polymerization ×5H),4.80-5.30(m,degree of polymerization ×2H),3.75-4.40(m,degree of polymerization ×1H),3.55-3.65(t,2H),1.55-2.70(m,degree of polymerization ×4H),1.10-1.50(b+b,4H),0.75-0.90(m,3H) .

[Example 10] (Synthesis of Butyl-pGlu(DET-Car)60 (compound 21), in the formula (34), m=56), when step (C2) is dialysis membrane purification)

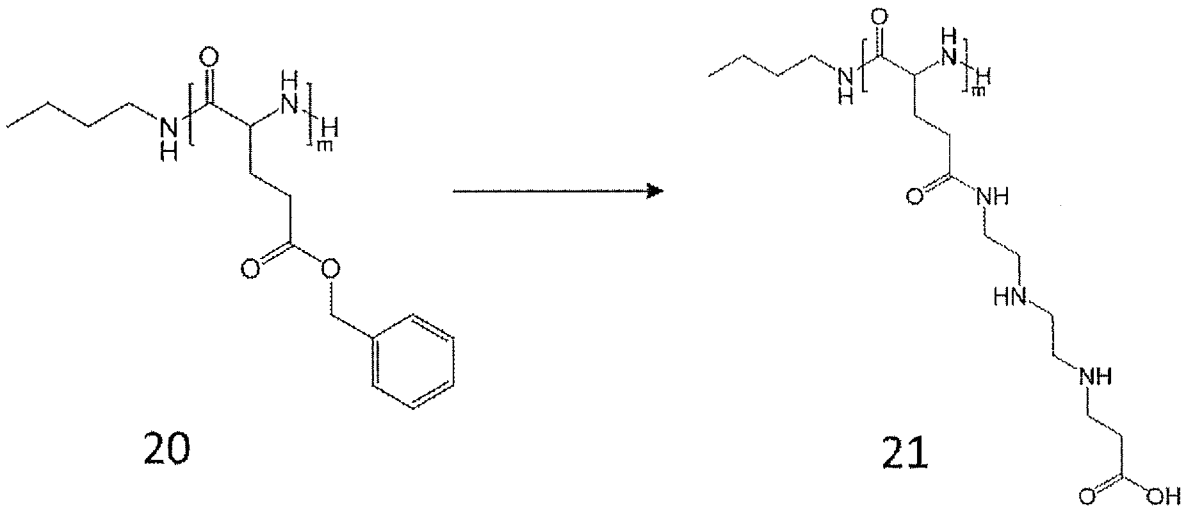

20

21

Step (A2)

By a method similar to that in Example 1, 35 mL of THF was added to 7.0 g of Butyl-pBLG60 (compound 20) synthesized in Production Example 7, 9.1 g of 2-hydroxypyridine, and 36.7 g of DET-Car-tBu(compound 3) synthesized in Production Example 1 and they were uniformly dissolved. The mixture was reacted at 50°C for 30 hr, and the reaction was discontinued.

Step (B2)

The mixture was evaporated under reduced pressure to give a yellow oily solution and 107 g of 6N hydrochloric acid solution was added dropwise. After reacting at 30°C for 15 hr, the reaction was discontinued and a pale-brown transparent solution was recovered.

Step (C2)

To this solution was added 5N sodium hydroxide solution (58 g) to adjust pH to 3-4, and dialysis membrane purification using ion exchange water (fractional molecular weight: 1 kD) and freeze-drying were performed to obtain Butyl-pGlu(DET-Car)60 (compound 21) as a white yellow powder (7.5 g).

By a method similar to that in Example 1, the structure was confirmed by $^1$H-NMR analysis, and it was confirmed to be Butyl-pGlu(DET-Car)60 (compound 21).

In addition, the molecular weight was calculated by SEC analysis, and it was confirmed to be Mn=16,100, Mw=19,300, PDIa=1.20 at pH 7.4. From Mn at pH 7.4 and the molecular weight of the repeat unit (286), the degree of polymerization was calculated to be equivalent to 56.

$^1$H NMR(deuterium chloride +deuterium oxide 400MHz):$\delta$ 4.30-4.50(m,degree of polymerization $\times$1H),3.20-3.85(m,degree of polymerization $\times$10H),3.10-3.20(b,2H),2.85-3.00(t,degree of polymerization $\times$2H),2.35-2.55(m,degree of polymerization $\times$2H),1.90-2.25(m, d,degree of polymerization $\times$2H),1.20-1.30(b+b,4H),0.80-0.90(t,3H).

(Side chain purity index Q1 and content percentage Q2 of repeat unit represented by the aforementioned formula (1))

The side chain.purity index Q1 was calculated as 2.000/2.032=0.984, and it was confirmed to satisfy Q1$\geq$0.90.

By a method similar to that in Example 1, calculation was performed, the content ratio of each repeat unit was calculated as the aforementioned formula (4):the aforementioned formula (6):the aforementioned formula (1)=0.003:0.003:0.994, and it was confirmed that the content percentage Q2 of the repeat unit represented by the aforementioned formula (1) satisfies not less than 90%.

[Production Example 8] (Synthesis of mPEG5k-pBLG60 (compound 23))

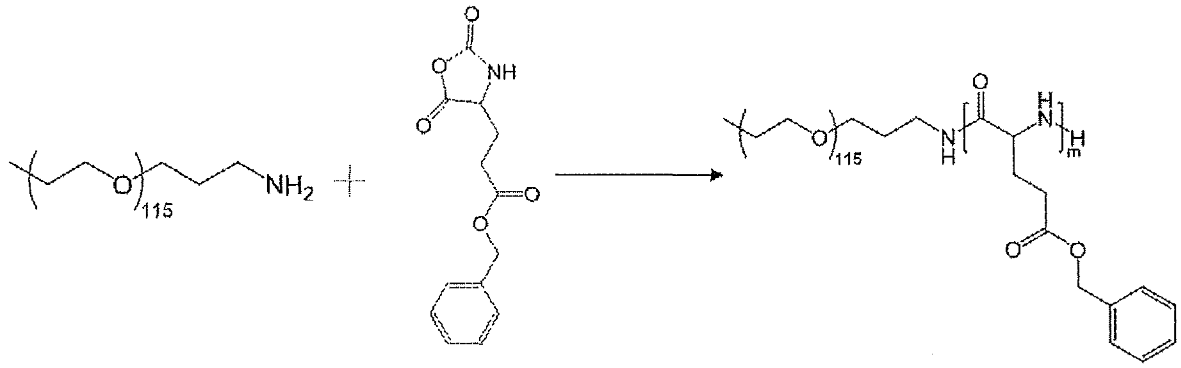

22 5 23

By a method similar to that in Production Example 2, 10.0 g of compound 5 was dissolved in 51 mL of DMF under a nitrogen atmosphere, 51 mL of DCM was further added.

To the obtained solution was added 1.79 g of mPEG5k-propylamine (compound 22, manufactured by NOF CORPORATION, SUNBRIaGHT MEPA-50H), and the mixture was stirred under a nitrogen atmosphere for 13 hr at 30°C. The reaction solution was evaporated under reduced pressure at 40°C, and then 140 mL of ion exchange water were added while stirring the reaction solution. The resultant product was reprecipitated and collected, and dried under reduced pressure to obtain a white solid. The solid was dissolved in 28 mL of THF, 253 mL of EtOH was added to obtain a white precipitate. The precipitate was collected and dried under reduced pressure to obtain mPEG5k-pBLG60 (compound 23) as a white powder (7.7 g).

By a method similar to that in Production Example 2, the structure was confirmed by $^1$H-NMR analysis, and it was confirmed to be mPEG5k-pBLG60 (compound 23). In addition, the molecular weight was calculated by SEC analysis, and it was confirmed to be Mn=25,200, Mw=28,900, PDIa=1.15.

$^1$H NMR(deuterated DMSO 400MHz):$\delta$ 7.00-7.60(m,degree of polymerization $\times$5H),4.80-5.30(m,degree of polymerization $\times$2H),3.75-4.40(m,degree of polymerization $\times$1H),3.20-3.70(m+t+s,467H),1.55-2.70(m,degree of polymerization $\times$4H), 1.20(m,2H) .

[Example 11] (Synthesis of mPEG5k-pGlu(DET-Car)60 (compound 24), in the formula (34), m=59), when step (C2) is dialysis membrane purification)

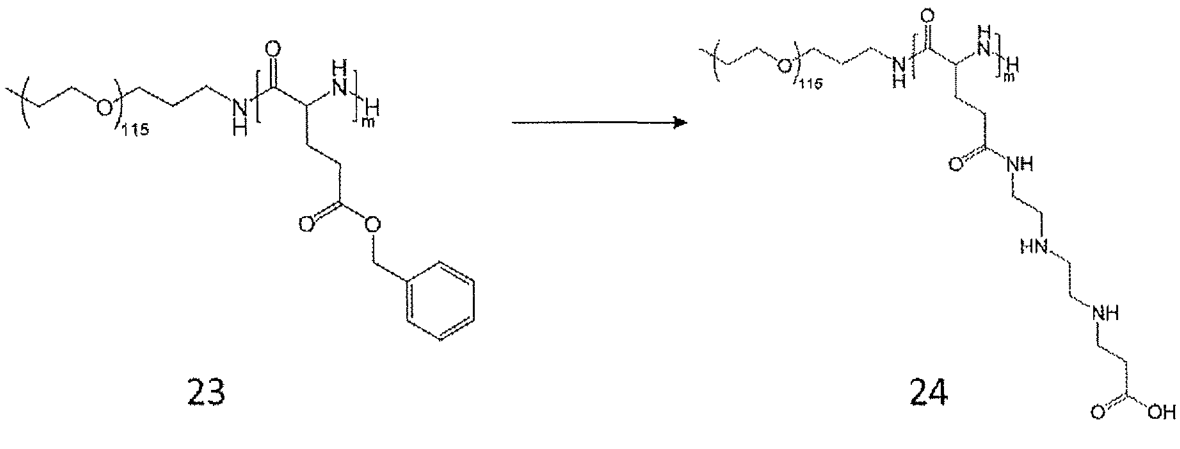

23 24

Step (A2)

By a method similar to that in Example 1, 7.0 g of mPEG5k-pBLG60 (compound 23) synthesized in Production Example 8, 7.4 g of 2-hydroxypyridine, and 29.8 g of DET-Car-tBu(compound 3) synthesized in Production Example 1 and they were uniformly dissolved. The mixture was reacted at 50°C for 30 hr, and the reaction was discontinued.

Step (B2)

The mixture was evaporated under reduced pressure to give a yellow oily solution and 87.4 g of 6N hydrochloric acid solution was added dropwise. After reacting at 30°C for 15 hr, the reaction was discontinued and a pale-brown transparent solution was recovered.

Step (C2)

To this solution was added 5N sodium hydroxide solution (47 g) to adjust pH to 3-4, and dialysis membrane purification using ion exchange water (fractional molecular weight: 1 kD) and freeze-drying were performed to obtain mPEG5k-pGlu(DET-Car)60 (compound 24) as a white powder (7.2 g).

By a method similar to that in Example 1, the structure was confirmed by $^1$H-NMR analysis, and it was confirmed to be mPEG5k-pGlu(DET-Car)60 (compound 24).

In addition, the molecular weight was calculated by SEC analysis, and it was confirmed to be Mn=22,100, Mw=25,100, PDIa=1.14 at pH 7.4. From Mn at pH 7.4, molecular weight (5,105) of initiator, and molecular weight of repeat unit (286), the degree of polymerization was calculated to be equivalent to 59.

$^1$H NMR(deuterium chloride +deuterium oxide 400MHz):δ 4.30-4.50(m,degree of polymerization ×1H),3.20-3.85(m+s,degree of polymerization ×10H+467H),3.10-3.20(b,2H),2.85-3.00(t,degree of polymerization ×2H),2.35-2.55(m,degree of polymerization ×2H),1.90-2.25(m, d,degree of polymerization ×2H), 1.20(m,2H).

(Side chain purity index Q1 and content percentage Q2 of repeat unit represented by the aforementioned formula (1))

The side chain purity index Q1 was calculated as 2.000/2.043=0.979, and it was confirmed to satisfy Q1≥0.90.

By a method similar to that in Example 1, calculation was performed, the content ratio of each repeat unit was calculated as the aforementioned formula (4):the aforementioned formula (6):the aforementioned formula (1)=0.001:0.031:0.968, and it was confirmed that the content percentage Q2 of the repeat unit represented by the aforementioned formula (1) satisfies not less than 90%.

[Production Example 9] Synthesis of (terminal acetylated AZ-pBLG30 (compound 25))

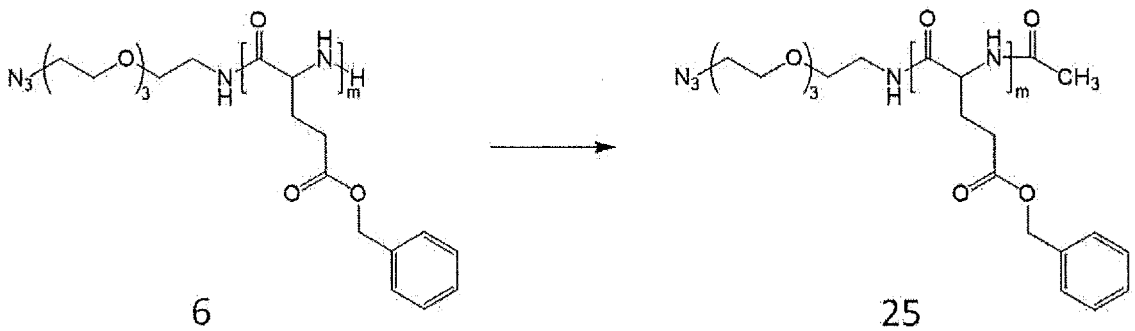

6

25

AZ-pBLG30 (5.0 g, 0.69 mmol, compound 6) synthesized in Production Example 3 and acetic anhydride (0.35 g, 3.5 mmol, 5-fold amount relative to number of moles of polymer), dimethylaminopyridine (4.0 mg, 35 pmol, 0.05-fold amount relative to number of moles of polymer) were uniformly dissolved in 50 mL of dichloromethane, and the mixture was reacted at room temperature for 16 hr. The completion of the reaction was confirmed by the disappearance of ninhydrin color development derived from starting materials by TLC spot.

After completion of the reaction, reprecipitation was performed using THF and EtOH, and the mixture was dried under reduced pressure to obtain terminal acetylated AZ-pBLG30 as a white powder (3.7g).

By a method similar to that in Production Example 2, the structure was confirmed by $^1$H-NMR analysis, and it was confirmed to be terminal acetylated AZ-pBLG30. In addition, the molecular weight was calculated by SEC analysis, and it was confirmed to be Mn=7,200, Mw=9,900, PDI=1.38.

$^1$H NMR(deuterated DMSO 400MHz):δ 7.00-7.60(m,degree of polymerization ×5H),4.80-5.30(m,degree of polymerization ×2H),3.75-4.40(m,degree of polymerization ×1H),3.00-3.65(m,16H),1.55-2.70(m,degree of polymerization ×4H+3H).

[Example 12] Synthesis of terminal acetylated AZ-pGlu(DET-Car)30 (compound 26, in the formula (3-1), m=32), when step (C4) is flat membrane purification)

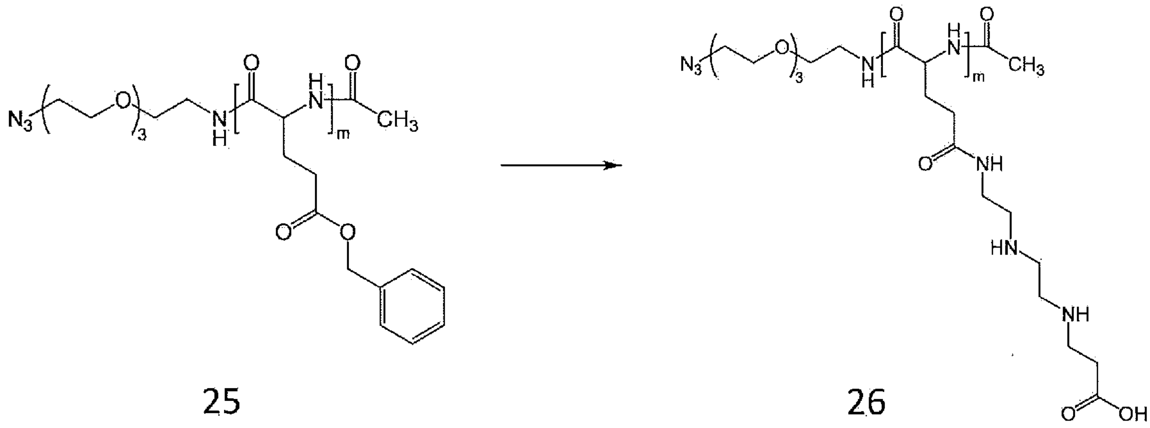

25

26

By performing step (A4), step (B4), ad step (C4) with a method similar to that in Example 6 except that terminal acetylated AZ-pBLG30 was used instead of AZ-pBLG30 of Production Example 3, terminal acetylated AZ-pGlu(DET-Car)30 (compound 26) was obtained as a white yellow powder (3.7 g).

By a method similar to that in Example 1, the structure was confirmed by $^1$H-NMR analysis, and it was confirmed to be terminal acetylated AZ-pGlu(DET-Car)30 (compound 26).

In addition, the molecular weight was calculated by SEC analysis, and it was confirmed to be Mn=9,100, Mw=11,200, PDI=1.23 at pH 7.4. From Mn at pH 7.4 and the molecular weight of the repeat unit (286), the degree of polymerization was calculated to be equivalent to 32.

$^1$H NMR(deuterium chloride +deuterium oxide 400MHz):$\delta$ 4.30-4.50(m,degree of polymerization $\times$1H),3.20-3.85(m,degree of polymerization $\times$10H+16H),2.85-3.00(t,degree of polymerization $\times$2H),2.35-2.55(m,degree of polymerization $\times$2H),1.90-2.25(m, d,degree of polymerization $\times$2H+3H).

(Side chain purity index Q1 and content percentage Q2 of repeat unit represented by the aforementioned formula (1))

The side chain purity index Q1 was calculated as 2.000/2.053=0.974, and it was confirmed to satisfy Q1$\geq$0.90.

By a method similar to that in Example 1, calculation was performed, the content ratio of each repeat unit was calculated as the aforementioned formula (4):the aforementioned formula (6):the aforementioned formula (1)=0.005:0.030:0.965, and it was confirmed that the content percentage Q2 of the repeat unit represented by the aforementioned formula (1) satisfies not less than 90%.

(Measurement of content percentage of Y)

By a method similar to that in Example 1, the content percentage was calculated as 94%.

[Experimental Example 1]

In Examples 2, 3, and 4, the addition reaction was performed using the minimum amount of various solvents necessary to uniformly dissolve AZ-pBLG60 (compound 6), and the influence of the solvent type on the reaction rate was confirmed. The reaction was performed at 30°C, and the rate of progress of the reaction was confirmed by the rate of decrease in the peak of benzyl proton in the pBLG side chain ($CH_2$-$C_6H_5$,$\delta$=5.02 ppm) with respect to the theoretical integral value thereof (2 protons) when the integral value of the proton on the carbon atom adjacent to amide (-CO-CH(-$CH_2$-)-NH-,$\delta$=3.75-4.40 ppm) in the main chain, to which carbon atom the side chain is attached, is regarded as the standard integral value of 1 proton in $^1$H-NMR measurement at 25°C in a deuterated DMSO solvent. The reaction rate of addition reaction at each reaction time, calculated as a result (calculated from content of formula (6) after addition reaction/content of formula (4) before addition reaction $\times$100) is shown in Table 1.

[Table 1]

| No. | solvent type | volume ratio of solvent amount/compound 6 | reaction time/h | | |
|---|---|---|---|---|---|
| | | | 0 | 24 | 48 |
| Example 2 | THF | 5.0-fold amount | 0% | 70% | 99% |
| Example 3 | NMP | 2.5-fold amount | 0% | 66% | 98% |
| Example 4 | $CHCl_3$ | 5.0-fold amount | 0% | 40% | 69% |

In Examples 2 and 3, it was confirmed that the addition reaction proceeded almost quantitatively in 48 hr. On the other hand, in Example 4, the reaction rate after 48 hr was 69%, confirming that the reaction rate was slower than in Examples 2 and 3. From the above, ether solvents and aprotic polar solvents are more useful in this reaction.

[Experimental Example 2] Solubility test

The polymers synthesized in Example 1 and Comparative Examples 1 to 3 were dissolved at a concentration of 20 mg/mL using 10 mM HEPES buffer (pH 7.4).
While the polymers synthesized in Example 1 and Comparative Example 1 provided homogeneous solutions, whereas in Comparative Example 2 and Comparative Example 3, it was confirmed that some parts remained undissolved. It was found that Comparative Examples 2 and 3 had low solubility in water because they contained a large number of hydrophobic repeat units.

[Experimental Example 3] pH responsiveness test in the presence of heparin

A pH responsiveness test was conducted on the polymers synthesized in Example 1 and Comparative Example 1.
Cy3 fluorescent labeling of both polymers was performed using click chemistry. Both the obtained fluorescently labeled polymers were subjected to fluorescence correlation spectroscopy (FCS) measurements at pH 7.4 (50 mM HEPES buffer) and pH 6.5 (50 mM MES buffer) in the presence of heparin.
The measurement method includes adding 0.2 mL of a 100 $\mu$g/mL heparin aqueous solution to 1 mL of a 200 nM fluorescently labeled polymer aqueous solution prepared using various buffers, and performing FCS measurement to measure the diffusion coefficient under various conditions.
The results are shown in Table 2.

[Table 2]

| | relative diffusion coefficient at pH 7.4 | relative diffusion coefficient at pH 6.5 |
|---|---|---|
| polymer of Example 1 | 1.01 | 0.86 |
| polymer of Comparative Example 1 | 1.07 | 1.04 |

The relative diffusion coefficient is a value calculated by (diffusion coefficient of polymer in the presence of heparin) ÷ (diffusion coefficient of polymer in the absence of heparin), and a decrease in the relative diffusion coefficient indicates that an association has been formed due to the interaction between heparin and the polymer.
Note that since heparin is known to exhibit anionic properties, it is suggested that the polymer associated with heparin is cationic.
While the relative diffusion coefficient of the polymer of Example 1 was 1.01 at pH 7.4, it decreased to 0.86 at pH 6.5, suggesting that it forms an association with heparin. That is, it was clarified that it exhibits pH responsiveness.
On the other hand, while the polymer of Comparative Example 1 had a relative diffusion coefficient of 1.07 at pH 7.4, it was 1.01 even at pH 6.5, thus clarifying that it does not form an association with heparin. In other words, it was revealed that it does not exhibit pH responsiveness.

[Industrial Applicability]

As described above, according to the present invention, a highly pure pH-responsive polymer that shows desired pH-responsiveness, has a uniform structure of the side chain, and contains a small residual amount of a protecting group

with hydrophobicity, and a production method thereof can be provided.

The pH-responsive polymer (Ia) of the present invention has a highly purified side chain structure that exhibits desired pH-responsiveness. Therefore, when used as a modifier for a biofunctional molecule, stealth properties and an accumulation effect in tumor tissues through pH response can be imparted with a smaller amount of modification with the polymer (Ia) .

In addition, the pH-responsive polymer (Ia) is characterized by a small content of side chain structure other than the target side chain structure showing the desired pH-responsiveness. Therefore, when used in the pharmaceutical field, problems in filing applications for pharmaceutical products caused by the presence of a compound having a different side chain structure are reduced.

Furthermore, since the pH-responsive polymer (Ia) is characterized by a small amount of remaining hydrophobic protecting groups used during synthesis, it can exhibit desired stealth properties and can be easily dissolved in water.

Furthermore, the method for producing the pH-responsive polymer (Ia) of the present invention can significantly reduce the amount of reagents required for introducing side chain structures, can reduce the amount of low-molecular impurities that are not used in the reaction, and can facilitate purification. Therefore, it is a production method particularly suitable for industrialization.

This application is based on patent application Nos. 2021-113190 filed in Japan (filing date: July 7, 2021), and 2021-178228 filed in Japan (filing date: October 29, 2021), the contents of which are incorporated in full herein.

## Claims

1. A pH-responsive polymer represented by the following formula (I):

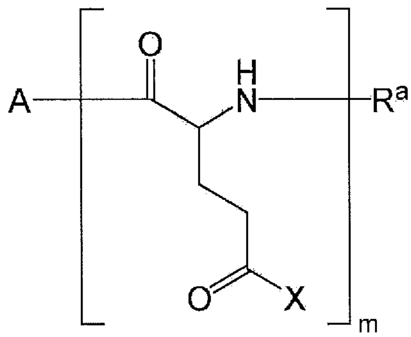

・・・(I)

(in the formula (I), A is a substituent,
m shows the degree of polymerization of the repeat unit and is not less than 5,
$R^a$ is H, or $-CO-CH_3$, or $-CO-(CH_2)_{x1}-COOH$ (wherein X1 is 2 or 3),
and
X is a pH-responsive functional group represented by the following formula (2):

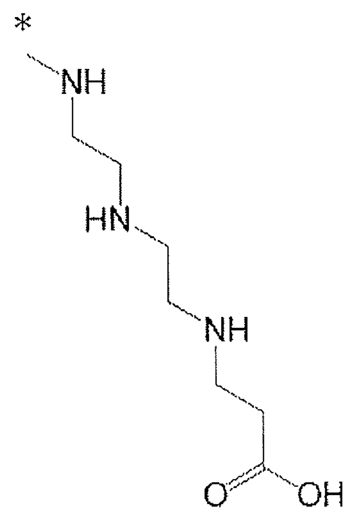

・・・(2)

(in the formula (2), * shows a bond)), wherein

1) a side chain purity index Q1 calculated from the following formula (F1) is not less than 0.9:

$$\text{area P1/area A1} \quad (F1)$$

wherein
area A1 is the area of peak A1 detected between 2.85 ppm and 3.10 ppm, and area P1 is the area of peak P1 detected between 2.85 ppm and 2.95 ppm, in a $^1$H-NMR chart obtained by analyzing the polymer using a nuclear magnetic resonance apparatus in a 0.65% deuterium chloride deuterium oxide solution, wherein a peak derived from a trimethyl group of trimethylsilyl propanoic acid as the internal standard is set to 0 ppm, a straight line connecting -1.0 ppm to 9.0 ppm is a base L1, and a perpendicular line is drawn vertically from the point of 2.95 ppm on the base L1 to divide a peak, and
2) a content percentage Q2 of a repeat unit represented by the following formula (1) is not less than 90% (mol%)

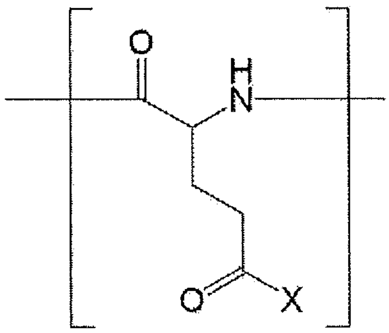
・・・(1)

(in the formula (1), X is as defined above).

**2.** The pH-responsive polymer according to claim 1, wherein $R^a$ is H.

**3.** The pH-responsive polymer according to claim 1, wherein $R^a$ is $-CO-CH_3$ or $-CO-(CH_2)_{x1}-COOH$ (wherein X1 is 2 or 3) .

**4.** The pH-responsive polymer according to claim 1, which is represented by the following formula (3-I):

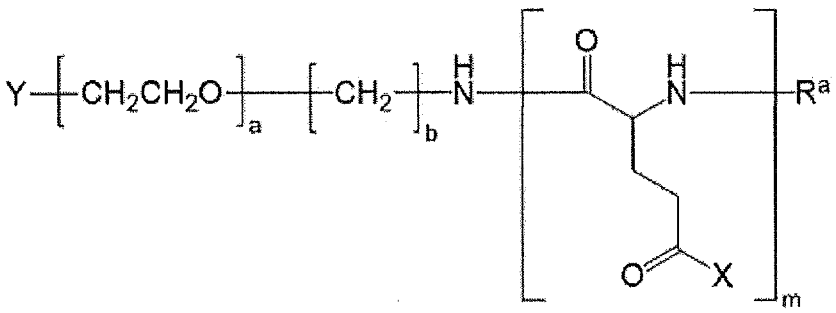
・・・(3−I)

(in the formula (3-I), Y is an atomic group containing a functional group capable of forming a covalent bond with a functional group present in a biofunctional molecule, a, b and m each show a degree of polymerization of each repeat unit, a is 0 to 500,
b is an integer of 1 to 3, m is 5 to 300,
$R^a$ is H, or $-CO-CH_3$ or $-CO-(CH_2)_{x1}-COOH$ (wherein X1 is 2 or 3), and
X is a pH-responsive functional group represented by the following formula (2):

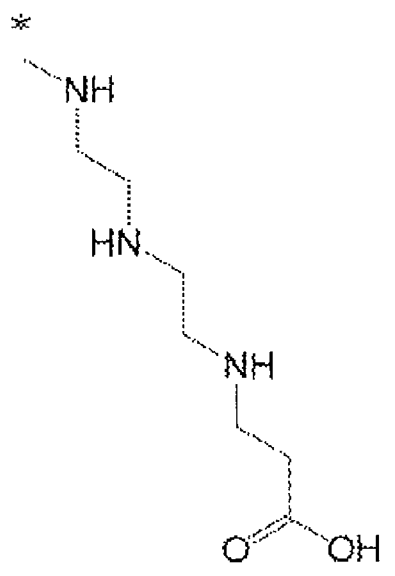

... (2)

(in the formula (2), * shows a bond)), wherein

1) a side chain purity index Q1 calculated from the following formula (F1) is not less than 0.9:

$$\text{area P1/area A1} \quad (F1)$$

wherein
area A1 is the area of peak A1 detected between 2.85 ppm and 3.10 ppm, and area P1 is the area of peak P1 detected between 2.85 ppm and 2.95 ppm, in a $^{1}$H-NMR chart obtained by analyzing the polymer using a nuclear magnetic resonance apparatus in a 0.65% deuterium chloride deuterium oxide solution, wherein a peak derived from a trimethyl group of trimethylsilyl propanoic acid as the internal standard is set to 0 ppm, a straight line connecting -1.0 ppm to 9.0 ppm is a base L1, and a perpendicular line is drawn vertically from the point of 2.95 ppm on the base L1 to divide a peak, and
2) a content percentage Q2 of a repeat unit represented by the following formula (1) is not less than 90% (mol%)

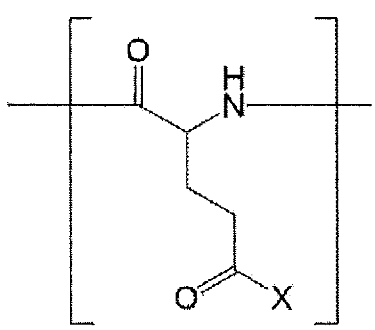

... (1)

(in the formula (1), X is as defined above).

5. The pH-responsive polymer according to claim 4, wherein Y is an atomic group containing an azido group or an -SH group.

6. The pH-responsive polymer according to claim 4, wherein Y is a group induced from an atomic group containing alkyne.

7. The pH-responsive polymer according to any one of claims 4 to 6, wherein a content percentage of Y is not less

than 80%.

**8.** A method for producing a pH-responsive polymer represented by the following formula (I):

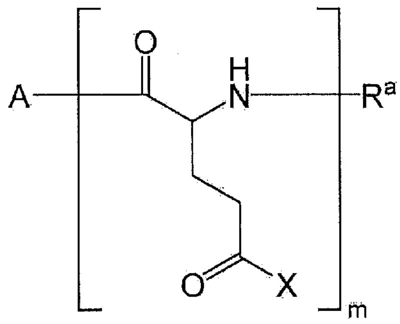

・・・(I)

(in the formula (I), A is a substituent,
m shows the degree of polymerization of the repeat unit and is not less than 5,
$R^a$ is H, or $-CO-CH_3$, or $-CO-(CH_2)_{x1}-COOH$ (wherein X1 is 2 or 3), and
X is a pH-responsive functional group represented by the following formula (2):

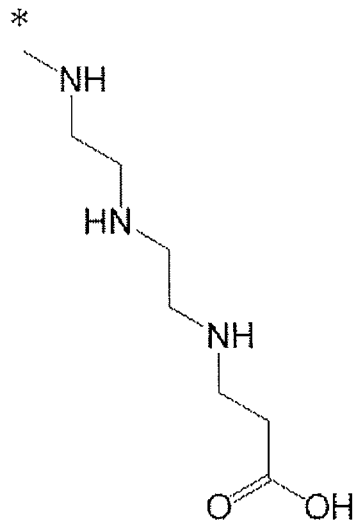

・・・(2)

(in the formula (2), * shows a bond)), wherein

1) a side chain purity index Q1 calculated from the following formula (F1) is not less than 0.9:

area P1/area A1 (F1)

wherein
area A1 is the area of peak A1 detected between 2.85 ppm and 3.10 ppm, and area P1 is the area of peak P1 detected between 2.85 ppm and 2.95 ppm, in a $^1$H-NMR chart obtained by analyzing the polymer using a nuclear magnetic resonance apparatus in a 0.65% deuterium chloride deuterium oxide solution, wherein a peak derived from a trimethyl group of trimethylsilyl propanoic acid as the internal standard is set to 0 ppm, a straight line connecting -1.0 ppm to 9.0 ppm is a base L1, and a perpendicular line is drawn vertically from the point of 2.95 ppm on the base L1 to divide a peak, and
2) a content percentage Q2 of a repeat unit represented by the following formula (1) is not less than 90% (mol%)

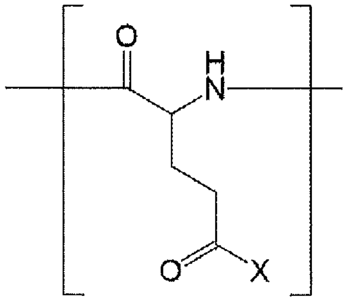

・・・(1)

(in the formula (1), X is as defined above), comprising performing the following step (A), step (B), and step (C) in this order

[step (A)]

a step of reacting a polymer represented by the following formula (32-1):

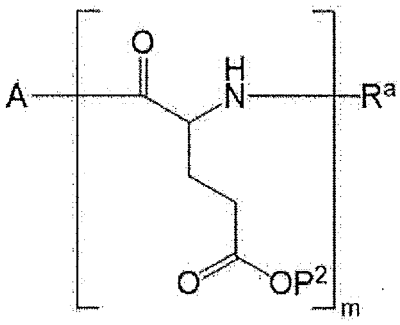

・・・(32-I)

(in the formula (32-1), $R^a$, A, and m are each as defined above, and $P^2$ is a carboxy-protecting group) and a diethylenetriamine derivative represented by the following formula (5):

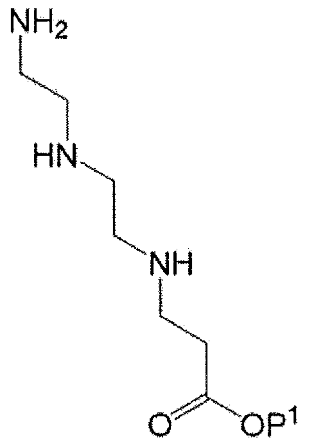

・・・(5)

(in the formula (5), $P^1$ is a carboxy-protecting group) with a polymer represented by the following formula (33-I):

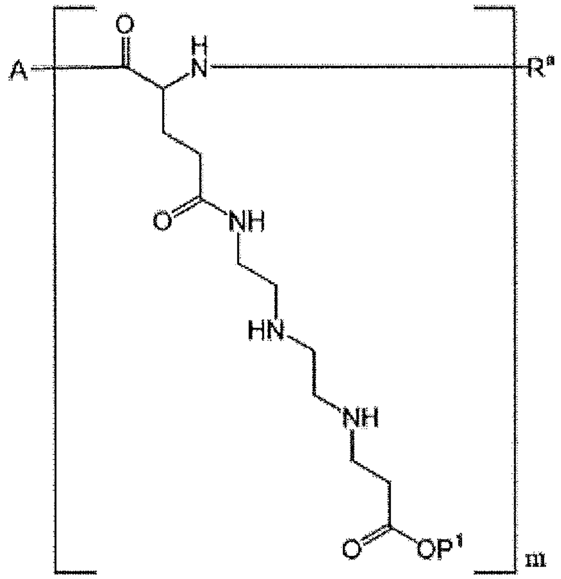

... (33-I)

(in the formula (33-1), $R^a$, A, m, and $P^1$ are each as defined above)

[step (B)]

a step of deprotecting the polymer represented by the aforementioned formula (33-I) obtained in the aforementioned step (A) to obtain a solution comprising a pH-responsive polymer represented by the aforementioned formula (I)

[step (C)]

a step of purifying the solution comprising a pH-responsive polymer represented by the aforementioned formula (I) obtained in the aforementioned step (B) by crystallization or membrane purification.

**9.** The production method according to claim 8, wherein step (A), step (B), and step (C) are the following step (Aa), step (Bb), and step (Cc), respectively, and the pH-responsive polymer represented by the formula (I) is represented by the following formula (3-I):

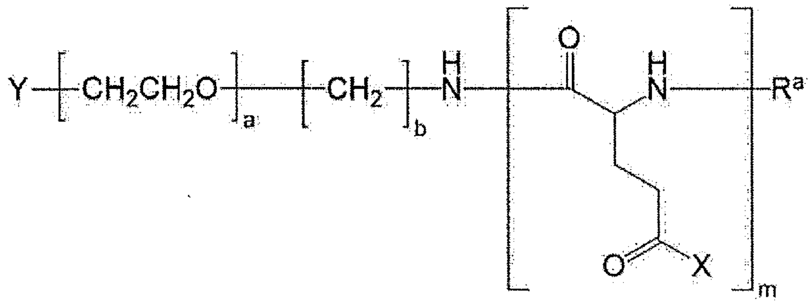

... (3-I)

(in the formula (3-I), Y is an atomic group containing a functional group capable of forming a covalent bond with a functional group present in a biofunctional molecule,

a, b, and m each show a degree of polymerization of each repeat unit, a is 0 to 500, b is an integer of 1 to 3, m is 5 to 300, $R^a$ is H, or $-CO-CH_3$, or $-CO-(CH_2)_{x1}-COOH$ (wherein X1 is 2 or 3), and

X is a pH-responsive functional group represented by the following formula (2)

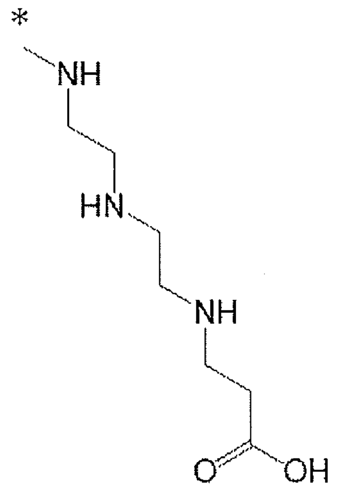

· · · (2)

(in the formula (2), * shows a bond)), wherein

1) a side chain purity index Q1 calculated from the following formula (F1) is not less than 0.9:

area P1/area A1   (F1)

wherein
area A1 is the area of peak A1 detected between 2.85 ppm and 3.10 ppm, and area P1 is the area of peak P1 detected between 2.85 ppm and 2.95 ppm, in a $^1$H-NMR chart obtained by analyzing the polymer using a nuclear magnetic resonance apparatus in a 0.65% deuterium chloride deuterium oxide solution, wherein a peak derived from a trimethyl group of trimethylsilyl propanoic acid as the internal standard is set to 0 ppm, a straight line connecting -1.0 ppm to 9.0 ppm is a base L1, and a perpendicular line is drawn vertically from the point.of 2.95 ppm on the base L1 to divide a peak, and
2) a content percentage Q2 of a repeat unit represented by the following formula (1) is not less than 90% (mol%)

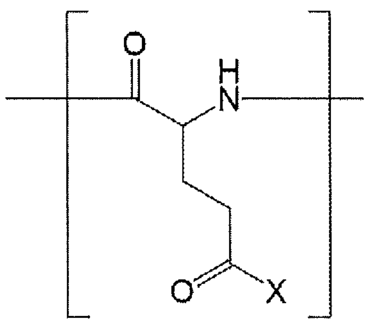

· · · (1)

(in the formula (1), X is as defined above)
[step (Aa)]
a step of reacting a polymer represented by the following formula (7-I):

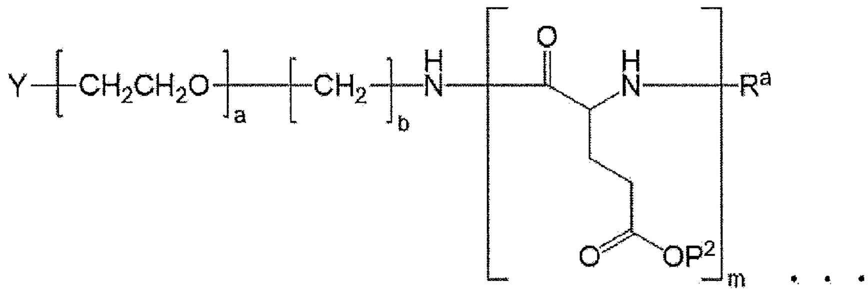

(7-I)

(in the formula (7-I), $R^a$, Y, a, b, and m are each as defined above, and $P^2$ is a carboxy-protecting group) and a diethylenetriamine derivative represented by the following formula (5):

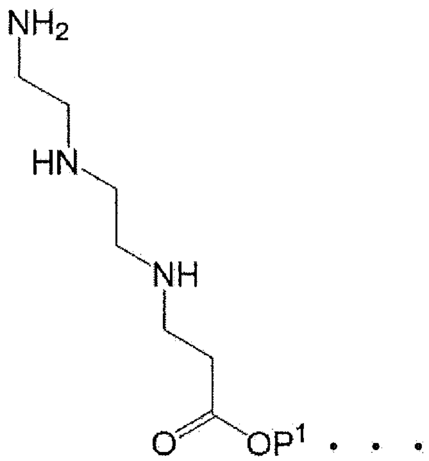

(5)

(in the formula (5), $P^1$ is a carboxy-protecting group) to obtain a polymer represented by the following formula (8-I)

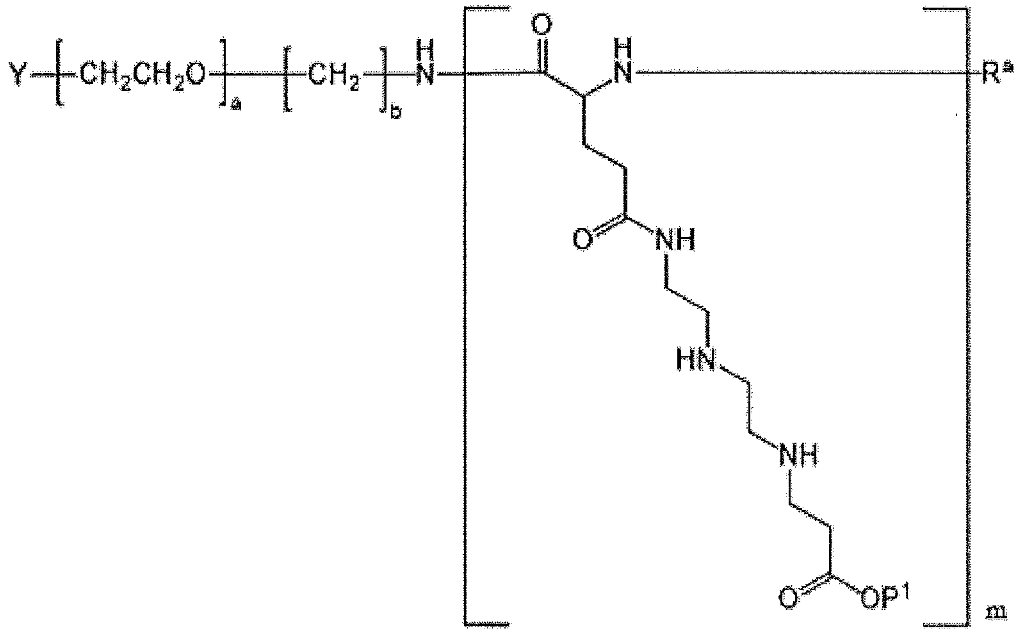

(8-I)

(in the formula (8-I), $R^a$, Y, a, b, m, and $P^1$ are each as defined above)
[step (Bb)]

a step of deprotecting the polymer represented by the aforementioned formula (8-I) obtained in the aforementioned step (Aa) to obtain a solution comprising a pH-responsive polymer represented by the aforementioned formula (3-I)
[step (Cc)]
a step of purifying the solution comprising a pH-responsive polymer represented by the aforementioned formula (3-I) obtained in the aforementioned step (Bb) by crystallization or membrane purification.

**10.** The production method according to claim 8 or 9, wherein, in the aforementioned step (A) or step (Aa), a diethylenetriamine derivative represented by the aforementioned formula (5) is used that satisfies a purity of not less than 90% when analyzed using liquid chromatography.

**11.** The production method according to claim 8 or 9, wherein, in the aforementioned step (A) or step (Aa), an ether solvent or an aprotic polar solvent is used as an organic layer.

**12.** The production method according to claim 8 or 9, wherein, in the aforementioned step (A) or step (Aa), a diethylenetriamine derivative represented by the aforementioned formula (5) wherein $P^1$ is a t-butyl group is used and, in the aforementioned step (B) or step (Bb), deprotection is performed under hydrochloric acid acidic conditions.

**13.** The production method according to claim 8 or 9, wherein, in the aforementioned step (C) or step (Cc), a solution comprising a pH-responsive polymer represented by the aforementioned formula (I) or a pH-responsive polymer represented by the aforementioned formula (3-1) is purified by membrane purification.

**14.** The pH-responsive polymer according to claim 1, wherein, in the aforementioned formula (I), A is represented by the following formula (34-a):

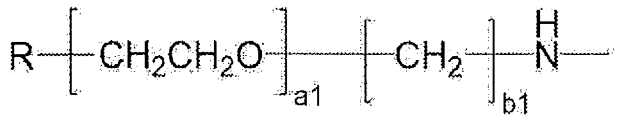
···(34-a)

(in the formula (34-a), R is a hydrocarbon group having 1 to 4 carbon atoms,
a1 and b1 each show a degree of polymerization of each repeat unit, a1 is 0 to 500, and b1 is an integer of 1 to 3).

[Fig. 1]

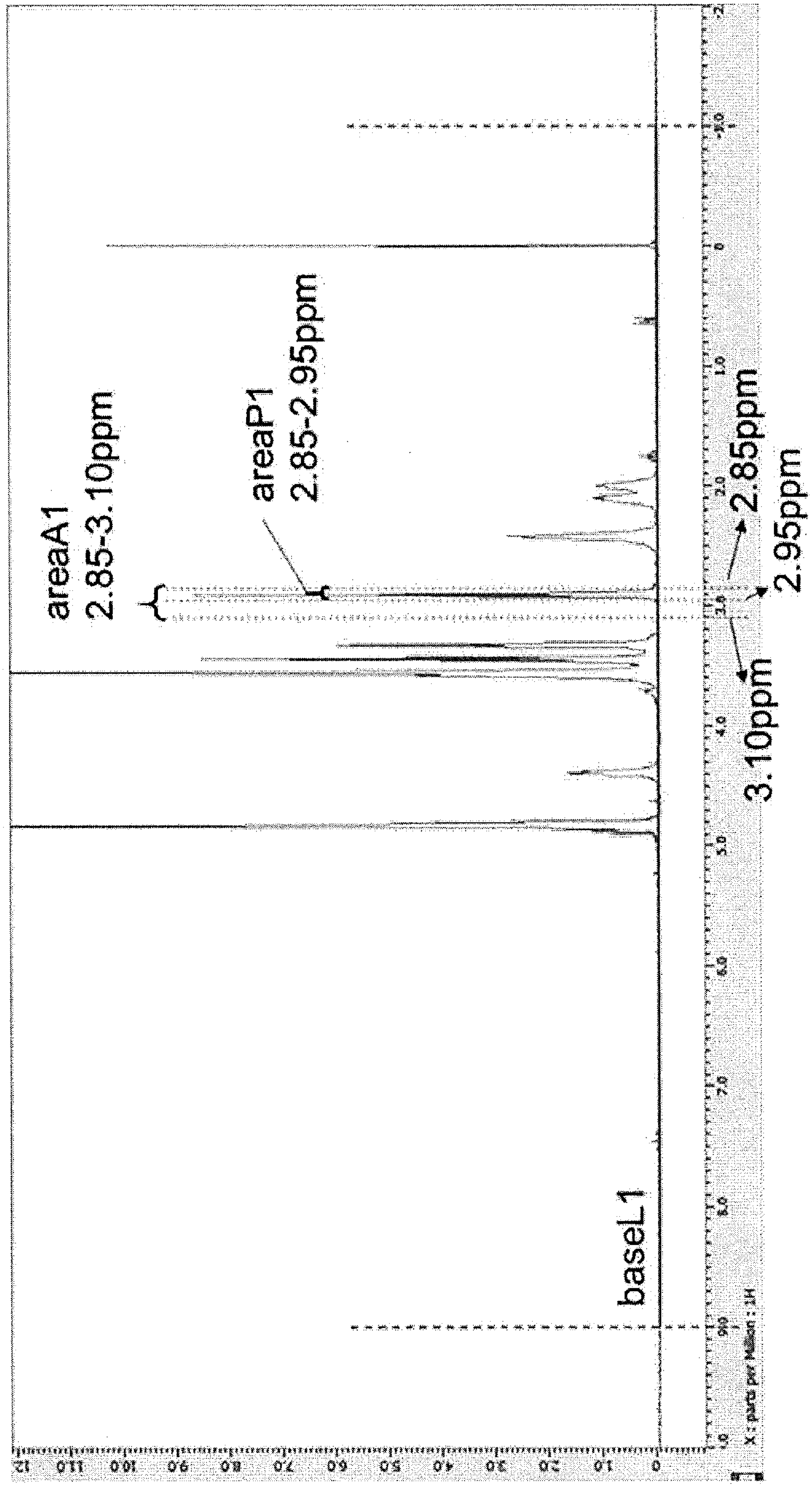
areaA1
2.85-3.10ppm
areaP1
2.85-2.95ppm
2.85ppm
2.95ppm
3.10ppm
baseL1

[Fig. 2]

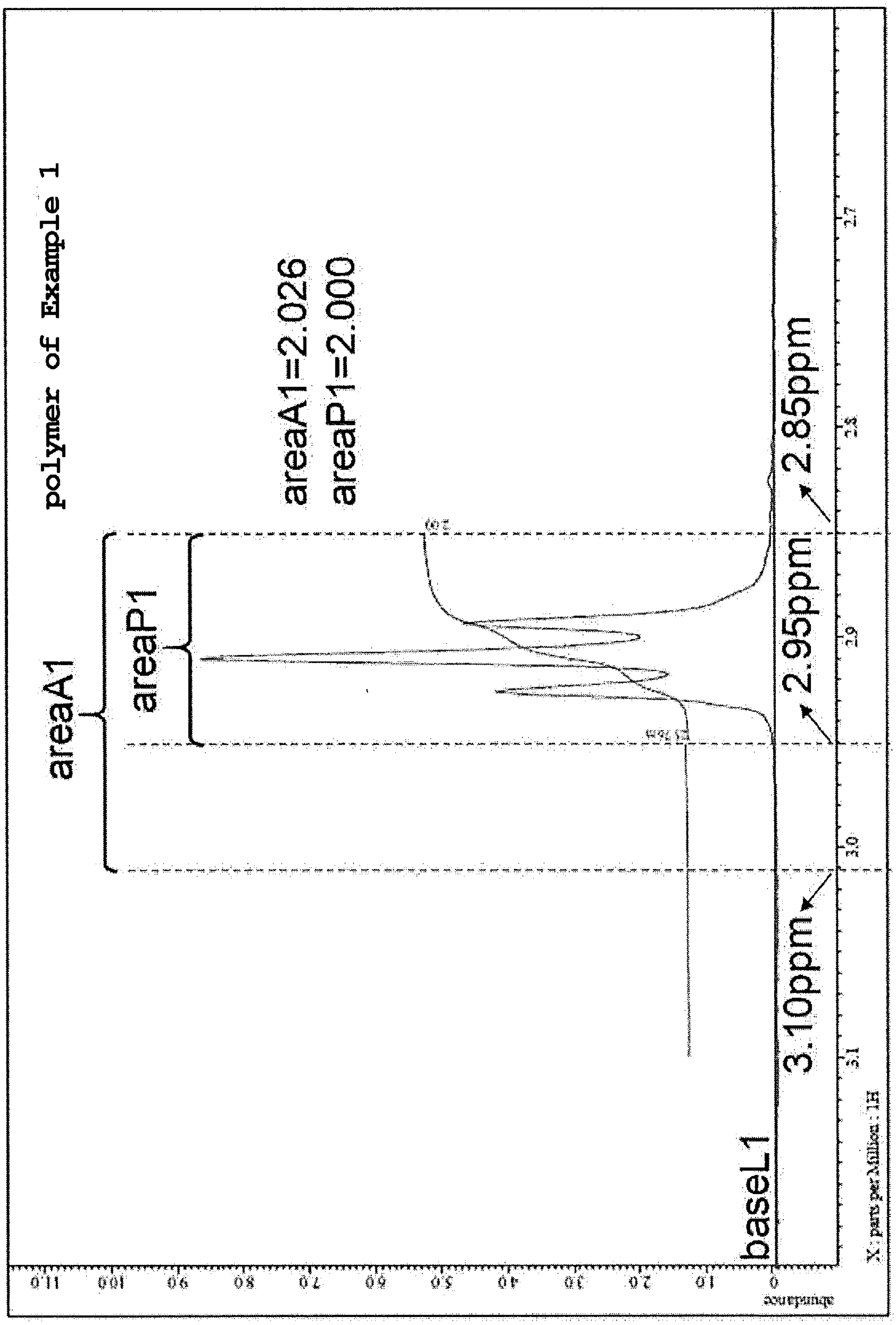
polymer of Example 1
areaA1
areaP1
areaA1=2.026
areaP1=2.000
3.10ppm
2.95ppm
2.85ppm
baseL1
X : parts per Million : 1H
abundance

## INTERNATIONAL SEARCH REPORT

International application No. **PCT/JP2022/026864**

**A. CLASSIFICATION OF SUBJECT MATTER**

***C08G 69/10***(2006.01)i; ***A61K 47/34***(2017.01)i
FI: C08G69/10; A61K47/34

According to International Patent Classification (IPC) or to both national classification and IPC

**B. FIELDS SEARCHED**

Minimum documentation searched (classification system followed by classification symbols)

C08G69/10; A61K47/34

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | WO 2018/110366 A1 (TOKYO INSTITUTE OF TECHNOLOGY) 21 June 2018 (2018-06-21) entire text | 1-14 |
| A | RANNEH, Abdul-Hackam et al. An Ethylenediamine-based Switch to Render the Polyzwitterion Cationic at Tumorous pH for Effective Tumor Accumulation of Coated Nanomaterials. Angewandte Chemie International Edition. 2018, 57, 5057-5061 whole document | 1-14 |
| A | WO 2009/133968 A1 (THE UNIVERSITY OF TOKYO) 05 November 2009 (2009-11-05) entire text | 1-14 |
| A | CN 109498548 A (JILIN INSTITUTE OF CHEMICAL TECHNOLOGY) 22 March 2019 (2019-03-22) whole document | 1-14 |
| A | US 2016/0022578 A1 (RESEARCH & BUSINESS FOUNDATION SUNGYUNKWAN UNIVERSITY) 28 January 2016 (2016-01-28) whole document | 1-14 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 July 2022** | **09 August 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/026864**

| Patent document cited in search report | Publication date (day/month/year) | Patent family member(s) | Publication date (day/month/year) |
|---|---|---|---|
| WO 2018/110366 A1 | 21 June 2018 | US 2020/0069807 A1<br>whole document<br>EP 3556792 A1 | |
| WO 2009/133968 A1 | 05 November 2009 | US 2011/0060123 A1<br>whole document<br>EP 2284210 A1 | |
| CN 109498548 A | 22 March 2019 | (Family: none) | |
| US 2016/0022578 A1 | 28 January 2016 | KR 10-2014-0037298 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2018110366 A
- JP 2021113190 A
- JP 2021178228 A

### Non-patent literature cited in the description

- *Organic Synthesis, Coll.,* 1955, vol. 3, 258
- *Peptide-Basede Materials,* 2011, 1-26
- *Angew. Chem.,* 2018, 5151-5155
- *Proceedings of the National Academy of Sciences of the United States of America,* 2019, 10658-10663